(19) Europäisches Patentamt
European Patent Office
Office européen des brevets

(11) EP 3 264 169 A1

(12) EUROPEAN PATENT APPLICATION
published in accordance with Art. 153(4) EPC

(43) Date of publication:
03.01.2018 Bulletin 2018/01

(21) Application number: 15883390.5

(22) Date of filing: 15.12.2015

(51) Int Cl.:
G02F 1/1347 (2006.01) G02F 1/1335 (2006.01)
G09F 9/00 (2006.01)

(86) International application number:
PCT/JP2015/085031

(87) International publication number:
WO 2016/136100 (01.09.2016 Gazette 2016/35)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 27.02.2015 JP 2015037733
20.03.2015 JP 2015057106

(71) Applicant: Sony Corporation
Tokyo 108-0075 (JP)

(72) Inventors:
- SHIBAHARA, Seiji
Tokyo 108-0075 (JP)
- HAYASHIMOTO, Seiji
Tokyo 108-0075 (JP)
- SHIMA, Kotaro
Tokyo 108-0075 (JP)
- KAMESHIMA, Kazuaki
Tokyo 108-0075 (JP)

(74) Representative: Witte, Weller & Partner
Patentanwälte mbB
Postfach 10 54 62
70047 Stuttgart (DE)

# (54) OPTICAL DEVICE, DISPLAY DEVICE, AND ELECTRONIC DEVICE

(57) A display unit of the present invention includes a display section (10) that outputs a first linearly-polarized light as image light, and a display switching section (20) that performs switching between an image display mode and an external light reflection mode. The display section (10) includes a first absorption-type polarization member (11) that allows the first linearly-polarized light to pass through and absorbs second linearly-polarized light. The display switching section (20) includes a reflection-type polarization member (21), a switchable transmission polarization axis member (22), and a second absorption-type polarization member (23). The reflection-type polarization member (21) allows the first linearly-polarized light to pass through and reflects the second linearly-polarized light. The switchable transmission polarization axis member (22) performs switching between a first mode in which the first linearly-polarized light is converted into the second linearly-polarized light and a second mode in which the first linearly-polarized light is not converted into the second linearly-polarized light. The second absorption-type polarization member (23) allows the first linearly-polarized light to pass through and absorbs the second linearly-polarized light. The second absorption-type polarization member (23) has a hue b* value that is equal to or smaller than a hue b* value of the first absorption-type polarization member (11).

[ FIG. 1A ]

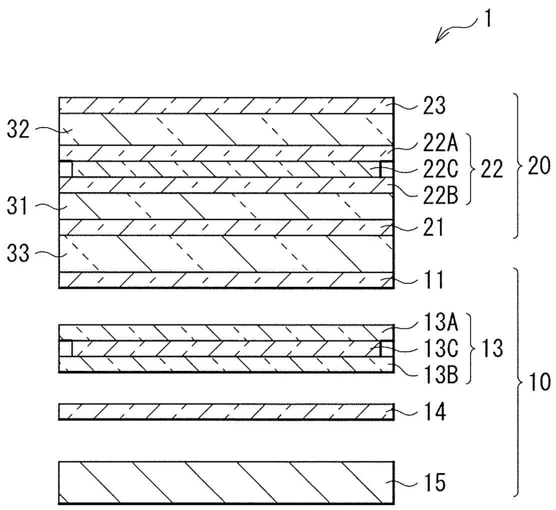

## Description

## Technical Field

The present disclosure relates to an optical device, a display unit, and an electronic apparatus that perform switching of display.

## Background Art

An existing display unit is known that is configured to be able to perform switching between a regular screen state (a screen display mode) and a mirror surface state (an external light reflection mode) by causing two liquid crystal panels to overlap each other (for example, reference may be made to PTL 1 and PTL 2). Specifically, such a display unit includes a display switching section, for example, on viewer side of a liquid crystal display section. The display switching section includes a reflection-type polarization plate, a liquid crystal panel, and an absorption-type polarization plate that are disposed and stacked in order in a direction from the liquid crystal display section toward the viewer.

## Citation List

## Patent Literature

PTL 1: Japanese Unexamined Patent Application Publication No. 2001-318374
PTL 2: Japanese Unexamined Patent Application Publication No. 2004-37943

## Summary of the Invention

However, the display unit described above allows light that has been sequentially passed through the liquid crystal panel and the absorption-type polarization plate in the display switching section to be visually recognized in both the image display mode and the external light reflection mode. Therefore, image light to be visually recognized by the viewer is to be influenced by transmission characteristics of the liquid crystal panel and the absorption-type polarization plate. This may cause occurrence of coloring due to wavelength dispersion of the absorption-type polarization plate and wavelength dispersion of the liquid crystal panel, leading to degradation of display quality. Further, in a case where it is desired to perform switching only in a certain region or it is desired to perform display in a specific shape upon performing switching of image light, for example, it is necessary to provide an electrode of the liquid crystal panel for switching with a shape in accordance with, for example, its use or its purpose. However, in such a case, it is necessary to change masks, for example, for respective uses or purposes to perform photolithography when the electrode of the liquid crystal panel for switching is formed. This greatly increases the manufacturing cost.

Therefore, it is desirable to provide a display unit and an electronic apparatus that each have a superior display performance in both the image display mode and the external light reflection mode. Further, it is desirable to provide an optical device that is able to suppress a great increase in manufacturing cost and a display unit provided with the optical device.

A display unit according to one embodiment of the present disclosure includes: a display section that outputs a first linearly-polarized light as image light, the first linearly-polarized light having a first polarization axis; and a display switching section that is disposed to face the display section, and performs switching between an image display mode in which the first linearly-polarized light is allowed to pass through and an external light reflection mode in which external light is reflected. The display section includes a first absorption-type polarization member that allows the first linearly-polarized light to pass through and absorbs second linearly-polarized light having a second polarization axis that intersects the first polarization axis. The display switching section includes a reflection-type polarization member, a switchable transmission polarization axis member, and a second absorption-type polarization member that are disposed in order in a direction being away from the display section. The reflection-type polarization member allows the first linearly-polarized light to pass through and reflects the second linearly-polarized light. The switchable transmission polarization axis member performs switching between a first mode in which the first linearly-polarized light is converted into the second linearly-polarized light to pass through and a second mode in which the first linearly-polarized light is allowed to pass through without being converted into the second linearly-polarized light. The second absorption-type polarization member allows the first linearly-polarized light to pass through and absorbs the second linearly-polarized light. The second absorption-type polarization member has a hue b* value that is equal to or smaller than a hue b* value of the first absorption-type polarization member. Further, an electronic apparatus according to one embodiment of the present

disclosure includes the display unit according to the foregoing embodiment of the present disclosure, and a controlling section that controls the display unit.

In each of the display unit and the electronic apparatus according to the embodiments of the present disclosure, the switching between the image display mode and the external light reflection mode is performed by the display switching section. Further, the hue b* value of the second absorption-type polarization member is equal to or smaller than the hue b* value of the first absorption-type polarization member. Therefore, coloring due to disposing of the second absorption-type polarization member is reduced, compared to a case where the hue b* value of the second absorption-type polarization member is greater than the hue b* value of the first absorption-type polarization member.

An optical device of the present disclosure includes: a polarization control layer that controls polarization on the basis of a control from outside; a polarization layer that is disposed on one surface side of the polarization control layer; and a first reflection layer and a second reflection layer that are disposed on the other surface side of the polarization control layer. The first reflection layer is a reflective polarization layer. The second reflection layer has one or a plurality of openings.

Another display unit of the present disclosure includes: a display switching section; a display section that has an output surface that outputs linearly-polarized light as image light; and a controlling section that performs a control on the display switching section. The display switching section includes a polarization control layer that controls polarization on the basis of the control performed by the controlling section, a polarization layer that is disposed at a position on opposite side to the display section in a relationship with the polarization control layer, and a first reflection layer and a second reflection layer that are disposed at respective positions on the side of the display section in a relationship with the polarization control layer. The first reflection layer is a reflective polarization layer. The second reflection layer has one or a plurality of openings.

In the optical device and the another display unit of the present disclosure, switching between a mirror state and a display state is performed by means of polarization control performed by the polarization control layer. In the mirror state, for example, the polarization control layer is so controlled that a polarization axis of polarized light that has entered the polarization control layer from the polarization layer side is orthogonal to a polarization axis of a first reflection layer. Accordingly, in the mirror state, the light that has entered the polarization layer is reflected by the first reflection layer and is returned thereby. Therefore, a surface of the optical device functions like a mirror with respect to a user of the optical device. In the display state, for example, the polarization control layer is so controlled that a polarization axis of polarized light (such as image light) that has entered the polarization control layer from the first reflection layer side via the one or the plurality of openings is parallel to the polarization axis of the polarization layer. Accordingly, in the display state, the polarized light that has entered the polarization control layer from the first reflection layer side via the one or the plurality of openings passes through the polarization layer and reaches the user of the optical device. Therefore, the surface of the optical device functions as an image display surface with respect to the user of the optical device.

Moreover, in the optical device and the another display unit of the present disclosure, for example, the size and the shape of the one or the plurality of openings is formable, for example, by processing a sheet-shaped member or by molding a molten material in a process of forming the second reflection layer. Accordingly, it is not necessary to change the masks, for example, for the respective uses or purposes to perform photolithography upon forming the electrode to be used for the control of the polarization control layer in a case where it is desired to perform switching only of the display state in the certain region or to perform the display in the desired shape, in the optical device and the another display unit according to the present disclosure.

According to the display unit and the electronic apparatus of the embodiments of the present disclosure, it is possible to exhibit a superior display performance both in the image display mode and the external light reflection mode.

Moreover, according to the optical device and the another display unit of the present disclosure, the polarization control by the polarization control layer allows the optical device to function like a mirror or a display, and also makes it unnecessary to provide a plurality of electrodes for polarization control with respect to the polarization control layer. As a result, it is possible to suppress a great increase in manufacturing cost.

It is to be noted that effects of the present technology are not necessarily limited to effects described here and may be any of effects described in the present specification.

## Brief Description of the Drawings

[FIG. 1A] FIG. 1A is a cross-sectional view of a display unit according to a first embodiment of the present disclosure.
[FIG. 1B] FIG. 1B is a conceptual diagram illustrating workings of the display unit illustrated in FIG. 1A.
[FIG. 2] FIG. 2 is a conceptual diagram illustrating a display unit according to a second embodiment of the present disclosure.
[FIG. 3] FIG. 3 is a cross-sectional view of a display unit according to a third embodiment of the present disclosure.

[FIG. 4] FIG. 4 is a cross-sectional view of a display unit according to a fourth embodiment of the present disclosure.
[FIG. 5] FIG. 5 is a cross-sectional view of a display unit according to a fifth embodiment of the present disclosure.
[FIG. 6] FIG. 6 is a cross-sectional view of a display unit according to a sixth embodiment of the present disclosure.
[FIG. 7] FIG. 7 is a cross-sectional view of a display unit according to a seventh embodiment of the present disclosure.
[FIG. 8] FIG. 8 is a cross-sectional view of a display unit according to an eighth embodiment of the present disclosure.
[FIG. 9A] FIG. 9A is a schematic diagram illustrating a pre-tilt direction of liquid crystal molecules in the display unit illustrated in FIG. 8.
[FIG. 9B] FIG. 9B is a schematic diagram illustrating a behavior of the liquid crystal molecule in the display unit illustrated in FIG. 8.
[FIG. 9C] FIG. 9C is a schematic diagram illustrating another behavior of the liquid crystal molecule in the display unit illustrated in FIG. 8.
[FIG. 10] FIG. 10 is a conceptual diagram illustrating a configuration example of an electronic apparatus provided with a display unit of the present disclosure.
[FIG. 11] FIG. 11 is a characteristic diagram illustrating chromaticity in Experimental Examples 1-1 and 1-2.
[FIG. 12] FIG. 12 is a characteristic diagram illustrating a relationship between a thickness of a resin layer and a Wd value of orange peel in Experimental Examples 2-1 to 2-4.
[FIG. 13] FIG. 13 is a characteristic diagram illustrating a relationship between retardation and transmittance of liquid crystal layers in Experimental Examples 3-1 to 3-3.
[FIG. 14] FIG. 14 is a characteristic diagram illustrating a relationship between a retardation difference $\Delta n$ and transmittance of liquid crystal layers in Experimental Examples 4-1 to 4-4.
[FIG. 15] FIG. 15 is a diagram illustrating an example of a schematic configuration of a display unit according to a ninth embodiment of the present disclosure.
[FIG. 16] FIG. 16 is a diagram illustrating an example of a cross-sectional configuration of a display section and a display switching section in FIG. 15.
[FIG. 17] FIG. 17 is a conceptual diagram for describing an example of workings of a display section and a display switching section in FIG. 16.
[FIG. 18] FIG. 18 is a conceptual diagram for describing an example of workings of the display section and the display switching section in FIG. 16.
[FIG. 19] FIG. 19 is a diagram illustrating an example of a planar configuration of a second reflection layer in FIG. 16.
[FIG. 20] FIG. 20 is a diagram illustrating an example of the planar configuration of the second reflection layer in FIG. 16.
[FIG. 21] FIG. 21 is a diagram illustrating an example of wavelength dependence of luminance of light that has passed through a reflective polarization layer used as the first reflection layer and the second reflection layer in FIG. 16.
[FIG. 22] FIG. 22 is a diagram illustrating a modification example of the cross-sectional configuration of the display section and the display switching section in FIG. 15.
[FIG. 23] FIG. 23 is a conceptual diagram for describing an example of workings of a display section and a display switching section in FIG. 22.
[FIG. 24] FIG. 24 is a conceptual diagram for describing an example of the workings of the display section and the display switching section in FIG. 22.
[FIG. 25] FIG. 25 is a diagram illustrating a modification example of the cross-sectional configuration of the display section and the display switching section in FIG. 15.
[FIG. 26] FIG. 26 is a conceptual diagram for describing an example of workings of a display section and a display switching section in FIG. 25.
[FIG. 27] FIG. 27 is a conceptual diagram for describing an example of the workings of the display section and the display switching section in FIG. 25.
[FIG. 28A] FIG. 28A is a diagram illustrating an example of an arrangement of a mirror layer to be additionally provided in the display switching section in FIGs. 16, 22, and 25.
[FIG. 28B] FIG. 28B is a diagram illustrating an example of the arrangement of the mirror layer to be additionally provided in the display switching section in FIGs. 16, 22, and 25.
[FIG. 29] FIG. 29 is a diagram illustrating an example of a cross-sectional configuration of the display section and the display switching section in FIGs. 16 and 25.

## Modes for Carrying out the Invention

Some embodiments of the present disclosure are described below in detail with reference to the drawings. It is to be noted that the description is given in the following order.

1. First Embodiment (An example in which a transmission axis of an absorption-type polarization plate and a transmission axis of a reflection-type polarization plate are parallel to each other in a display switching section)
2. Second Embodiment (An example in which the transmission axis of the absorption-type polarization plate and the transmission axis of the reflection-type polarization plate are orthogonal to each other in the display switching section)
3. Third Embodiment (An example in which the absorption-type polarization plate is provided inside a liquid crystal panel in a display section)
4. Fourth Embodiment (An example in which a glass substrate is disposed between the display section and the display switching section)
5. Fifth Embodiment (An example in which a retardation plate is disposed in the display switching section)
6. Sixth Embodiment (An example in which a ferroelectric liquid crystal panel is disposed in the display switching section)
7. Seventh Embodiment (An example in which an antiferroelectric liquid crystal panel is disposed in the display switching section)
8. Eighth Embodiment (An example in which a VA liquid crystal panel is disposed in the display switching section)
9. Application Examples (Electronic Apparatuses)
10. Experimental Examples
11. Ninth Embodiment
An example in which a first reflection layer is disposed closer to a polarization control layer than a second reflection layer (FIGs. 15 to 21)
12. Modification Examples of Ninth Embodiment

Modification Example A: An example in which the second reflection layer is disposed closer to the polarization control layer than the first reflection layer (FIGs. 22 to 24)
Modification Example B: An example in which a bezel also serves as the second reflection layer (FIGs. 25 to 27)
Modification Example C: An example in which a circular mirror layer is further provided (FIGs. 28A and 28B)
Modification Example D: An example in which the second reflection layer is larger than the first reflection layer
Modification Example E: An example in which the bezel also serves as the circular mirror layer (FIG. 29)
Modification Example F: Variations of an ON-OFF control of the polarization control layer

<1. First Embodiment>

FIG. 1 illustrates a cross-sectional configuration of a display unit 1 as one embodiment of the present disclosure. This display unit 1 includes two liquid crystal panels that are overlapping each other, and is thereby configured to be able to perform switching between a screen state and a mirror surface state. In such a display unit, light that has passed through the liquid crystal panel provided in a display switching section and an absorption-type polarization plate disposed on the viewer side is to be visually recognized in both the screen state and the mirror surface state. Therefore, a visually-recognized state is determined on the basis of transmission characteristics of the absorption-type polarization plate disposed on the viewer side and the liquid crystal panel in the display switching section. Accordingly, in the existing display unit described above, coloring may occur in some cases due to the wavelength dispersion of the absorption-type polarization plate and the wavelength dispersion of the liquid crystal panel in both of the display state and the mirror state, on the basis of optical characteristics of the absorption-type polarization plate and the liquid crystal panel in the display switching section. Further, in the mirror surface state, a reflection-type polarization plate is disposed between the liquid crystal panel in the display switching section and a display section, and is therefore easily influenced by a flatness level of a surface of the display switching section and a flatness level of a surface of the display section, for example. This also raises concerns for a problem that a blur is easily visually recognized upon mirror surface display. In the mirror surface state, it is required to display an object precisely without any blur and to precisely display the color of the object. The display unit 1 satisfies such a requirement. A detailed description is given below.

[Configuration of Display Unit 1]

The display unit 1 has a display section 10 and a display switching section 20 that are so disposed to face each other that their principal surfaces overlap each other. The display section 10 outputs, toward a viewer, image light that forms a predetermined display state. The display switching section is disposed on the viewer side of the display section 10, and performs switching between an image display mode that allows the image light from the display section 10 to pass through and an external light reflection mode that reflects external light. It is to be noted that it is sufficient that the display section 10 and the display switching section 20 overlap each other at least partially.

(Display Section 10)

As the display section 10, various display mechanisms such as an electroluminescent device, a plasma display panel, and an electronic paper are applicable, for example. The present embodiment is described, however, referring to a case in which a liquid crystal display device is used.

A drive mode of the display section 10 may be either of an active drive mode and a passive drive mode. The active drive mode includes, for example, active matrix drive that uses an active device such as a TFT (Thin Film Transistor) and a TFD (Thin Film Diode). The passive drive mode includes, for example, simple drive or multiplex drive that does not use any active device as that described above. Further, a panel structure of the display section 10 may be any of a transmission-type panel, a reflection-type panel, and a reflection-semi-transmission-type panel. The present embodiment is described referring to a case in which the transmission-type panel is used.

For example, as illustrated in FIG. 1A, the display section 10 has an absorption-type polarization plate 11, a liquid crystal panel 13, an absorption-type polarization plate 14, and a backlight 15 in order from a position closer to the display switching section 20. A retardation plate may be further disposed between the absorption-type polarization plate 11 and the liquid crystal panel 13.

The liquid crystal panel 13 has a structure in which a liquid crystal layer 13C is sandwiched between a substrate 13A and a substrate 13B. The substrate 13A and the substrate 13B are made of a transparent material such as glass (including quartz), for example. The substrate 13A and the substrate 13B are so disposed as to face each other with a predetermined spacing (for example, from about 1.5 $\mu$m to about 10 $\mu$m). The substrate 13A and the substrate 13B are attached to each other, for example, with a sealing material (which is not illustrated). Further, an inner surface of each of the substrates 13A and 13B is provided with an unillustrated electrode, which achieves a configuration in which an electric field is applicable to the liquid crystal layer 13C with these electrodes.

As a liquid crystal mode of the liquid crystal panel 13, for example, a TN (Twisted Nematic) mode, a VA (Vertical Alignment) mode, an IPS (In Plane Switching) mode, an FFS (Fringe Field Switching) mode, an STN (Super Twisted Nematic) mode, or an ECB (Electrically Controlled Birefringence) mode may be employed. Liquid crystal display devices having any of these liquid crystal modes have configurations that achieve a display state with a polarization plate. For this reason, the liquid crystal display devices having any of these liquid crystal modes achieve high display quality while having a relatively-low drive voltage, and are therefore preferable. The VA mode is particularly preferable among the foregoing modes. One reason is that the liquid crystal display device of the VA mode is less likely to cause black floating compared to other liquid crystal modes (for example, the IPS mode), in a case where stress is applied to the absorption-type polarization plates 11 and 14 in the display section 10. Here, the black floating refers to occurrence of partial leakage of light upon black display. In the display unit 1, the display section 10 and the display switching section 20 are attached to each other, for example, with a third resin layer 33 (which is hereinafter simply referred to as the resin layer 33). When the display section 10 and the display switching section 20 are attached to each other, for example, resin in a gel state is cured and contracted to form the resin layer 33. In accordance with the curing and contraction of the resin, however, stress is applied to the polarization plate in the display section 10 (in particular, the absorption-type polarization plate 11). In this case, for example, when the liquid crystal display device of the IPS mode is used as the display section 10, the black floating sometimes occurs slightly in a corner of a display region. It is, however, possible to suppress the black floating by using the liquid crystal display device of the VA mode as the display section 10. A hue b* value of the resin layer 33 is preferably equal to or greater than -0.5 and equal to or smaller than 0.5, for example. Further, a haze value of the resin layer 33 is preferably equal to or smaller than 1, for example. Further, because the display section 10 (the absorption-type polarization plate 11) and the display switching section 20 (a reflection-type polarization plate 21 which will be described later) are attached to each other with the resin layer 33 in between, it is possible to suppress occurrence of unevenness in the vicinity of an interface of the absorption-type polarization plate 11 and the reflection-type polarization plate 21 resulting from the attachment. By suppressing the occurrence of such unevenness, it is possible to reduce a blur in the mirror state (the external light reflection mode) resulting from the unevenness. As the resin layer 33, for example, a highly-transparent baseless tape CTL-NC103 from Lintec Corporation or a baseless optical double-sided adhesive tape DAITAC ZB7010W-10 from DIC Corporation may be used.

The absorption-type polarization plates 11 and 14 are set in an arrangement (for example, a crossed Nicols arrangement) that is required on the basis of the configuration of the liquid crystal unit 1. Each of the absorption-type polarization plates 11 and 14 has a polarization transmission axis. Each of the absorption-type polarization plates 11 and 14 allows linearly-polarized light having an oscillation plane that is parallel to the polarization transmission axis to pass through, and absorbs linearly-polarized light having an oscillation plane that is parallel to a direction that intersects (preferably, is orthogonal to) the polarization transmission axis. As the absorption-type polarization plates 11 and 14, for example, a film may be used that is provided with a polarization function on both surfaces by causing iodine to be absorbed by stretched polyvinyl alcohol and have the both surfaces provided with protective layers of triacetylcellulose.

The backlight 15 may be any backlight that is able to illuminate the liquid crystal panel 13 from its back at almost even illuminance. For example, a backlight of an end surface light emission type that includes a light guide plate and a

light source disposed at an end of the light guide plate, and a backlight of a rear surface light emission type that includes a light guide plate and a light source disposed on a rear surface of the light guide plate can be mentioned.

(Display Switching Section 20)

The display switching section 20 includes a reflection-type polarization plate 21, a liquid crystal panel 22, and an absorption-type polarization plate 23 that are disposed in order from the foregoing display section 10 toward the viewer. It is to be noted that a viewing angle improvement film may be disposed at least one of a region between the absorption-type polarization plate 23 and the liquid crystal panel 22 and a region between the reflection-type polarization plate 21 and the liquid crystal panel 22.

The reflection-type polarization plate 21 has a transmission polarization axis 21J (which will be described later). The reflection-type polarization plate 21 allows linearly-polarized light having an oscillation plane that is parallel to the transmission polarization axis 21J to pass through, and reflects linearly-polarized light having an oscillation plate that is parallel to a direction that intersects (preferably, is orthogonal to) the transmission polarization axis. Specifically, as the reflection-type polarization plate 21, a reflection-type polarization plate is used that has a function of allowing first linearly-polarized light Lp (which will be described later) outputted from the display section 10 to pass through and of specularly reflecting second linearly-polarized light Ls (which will be described later) that has a transmission polarization axis orthogonal thereto. As such a member, for example, a birefringent reflection-type polarization film including a plurality of layers in which different birefringent polymer films are alternately stacked that is disclosed in International Application No. WO95/27919, or a cholesteric liquid crystal layer provided with a quarter-wave retardation plate on each of the front and the back may be used. As the birefringent reflection-type polarization film, a film having a function of allowing a predetermined linearly-polarized light to pass through and specularly reflecting linearly-polarized light that has a polarization axis orthogonal to a polarization axis of the predetermined linearly-polarized light is commercially provided as the trade name of DBEF from 3M (United States). This may be used as the reflection-type polarization plate 21.

In contrast, in a case where the reflection-type polarization plate 21 is configured of the cholesteric liquid layer provided with a quarter-wave retardation plate on each of the front and the back, a liquid crystal cell containing low-molecular cholesteric liquid crystal between two transparent substrates that have been subjected to an alignment process, or a flat, optically-isotropic, and transparent substrate such as glass and transparent resin provided with high-molecular cholesteric liquid crystal layer may be used. The cholesteric liquid crystal layer exhibits specific optical characteristics based on a helical molecular arrangement. The cholesteric liquid crystal layer allows selective reflection of light that enters in a direction parallel to a helical axis on the basis of a rotation direction in a cholesteric spiral so that circularly-polarized light in one rotation direction is reflected and that in the other is allowed to pass through. A wavelength range of the selective reflection depends on a pitch of the molecular arrangement. It is therefore necessary to use a stack of a plurality of cholesteric liquid crystal layers having different pitches in order to cause the selective reflection in the entire visible wavelength range to occur. In this case, in order to achieve the selective reflection in the entire visible wavelength range, a cholesteric liquid crystal layer having a continuously-varied pitch as that described in Asia Display95 Digest, p735, The Institute of Television Engineers of Japan (ITE) &The Society for Information Display (SID) may be used instead of stacking the plurality of cholesteric liquid crystal layers having different pitches. Further, allowing the wavelength range of the selective reflection, a reflectance on the low wavelength side (from 400 nm to 600 nm) to be on the high wavelength side (a visible light range of 600 nm or greater) makes it possible to allow the hue b* value to be in one direction, which is preferable.

Further, in a case where the cholesteric liquid crystal layer provided with the quarter-wave retardation plate on each of the front and the back is used as the reflection-type polarization plate 21, it is preferable that the quarter-wave retardation plate disposed on the back side of the cholesteric liquid crystal layer, i.e., the quarter-wave retardation plate disposed on the display section 10 side of the cholesteric liquid crystal layer has a slow axis that is set in the following direction. Specifically, its slow axis is disposed so that the first linearly-polarized light Lp that is outputted from the display section 10 and enters the reflection-type polarization plate 21 is converted into circularly-polarized light that passes through the cholesteric liquid crystal layer. Meanwhile, similarly, a slow axis of the quarter-wave retardation plate disposed on the front side of the cholesteric liquid crystal layer, i.e., the quarter-wave retardation plate disposed on the liquid crystal panel 22 side of the cholesteric liquid crystal layer is so disposed that the circularly-polarized light that passes through the cholesteric liquid crystal layer is converted into the first linearly-polarized light Lp.

In a case where the second linearly-polarized light Ls enters the reflection-type polarization plate 21 that has the foregoing configuration in which the quarter-wave retardation plates are disposed on the front and the back of the cholesteric liquid crystal layer, that second linearly-polarized light Ls is converted into circularly-polarized light that is opposite-handed to the circularly-polarized light that passes through the cholesteric liquid crystal layer, owing to the working of the quarter-wave retardation plate. That second linearly-polarized light Ls is therefore selectively reflected by the cholesteric liquid crystal layer. When the circularly-polarized light reflected by the cholesteric liquid crystal layer passes through the quarter-wave retardation plate again, the circularly-polarized light reflected by the cholesteric liquid

crystal layer is converted into the second linearly-polarized light Ls owing to the working of the quarter-wave retardation plate.

Note that it is desirable that a member that functions as the quarter-wave retardation plate in the entire visible wavelength range be used as the quarter-wave retardation plate used for the reflection-type polarization plate 21 having the foregoing configuration. As the quarter-wave retardation plate, a stretched polymer film having a high transmittance in the visible wavelength range such as polyvinyl alcohol, polycarbonate, polysulfone, polystyrene, and polyarylate may be used. Other than these materials, mica, crystal, a liquid crystal layer having molecular axes aligned in a single direction may be used.

Moreover, it is generally difficult to configure a retardation plate that functions as the quarter-wave retardation plate with respect to the entire visible wavelength range with a single type of retardation plate, due to wavelength dependence (hereinafter, also referred to as wavelength dispersion) of a refractive index of the material configuring the quarter-wave retardation plate. The retardation plate may be, however, configured to function as the quarter-wave retardation plate in a wide wavelength range by so attaching at least two types of retardation plates that are different in wavelength dispersion that their optical axes are orthogonal to each other.

It is preferable that the reflection-type polarization plate 21 and the liquid crystal panel 22 be attached to each other, for example, with a first resin layer 31 (hereinafter, simply referred to as the resin layer 31) having the thickness of 25 μm or smaller in between. One reason for this is that it is thereby possible to suppress occurrence of unevenness in the vicinity of the interface of the liquid crystal panel 22 and the reflection-type polarization plate 21 due to the attachment. By suppressing such occurrence of unevenness, it is possible to reduce the blur in the mirror state (the external light reflection mode) resulting from the unevenness. The hue b* value of the resin layer 31 is preferably equal to or greater than -0.5 and equal to or smaller than 0.5, for example. Further, the haze value of the resin layer 31 is preferably equal to or smaller than 1, for example. As such a resin layer 31, for example, a highly-transparent baseless tape CTL-NC103 from Lintec Corporation or a baseless optical double-sided adhesive tape DAITAC ZB7010W-10 from DIC Corporation may be used.

The liquid crystal panel 22 performs switching between a first mode and a second mode. The first mode converts the first linearly-polarized light Lp into the second linearly-polarized light Ls having a polarization axis orthogonal to that of the first linearly-polarized light Lp and allows the converted light to pass through. The second mode allows the first linearly-polarized light Lp to pass through as it is without converting the first linearly-polarized light Lp into the second linearly-polarized light Ls. The liquid crystal panel 22 has a structure in which a liquid crystal layer 22C is sandwiched between a substrate 22A and a substrate 22B. The substrate 22A and the substrate 22B are made of a transparent material such as glass (including quartz), for example. The substrate 22A and the substrate 22B are so disposed as to face each other with a predetermined spacing (for example, from about 1.5 μm to about 10 μm). The substrate 22A and the substrate 22B are attached to each other, for example, with a sealing material (which is not illustrated). A material configuring the substrates 22A and 22B may be, other than a material using glass, a material using resin such as plastic. The glass may be used for one of the substrate 22A and the substrate 22B, and the resin may be used for the other of the substrate 22A and the substrate 22B. By using the resin as the material configuring the substrate 22A and the substrate 22B, it is possible to reduce thickness and improve resistance to impact. Further, alkali-free glass is preferable as the glass substrate.

Further, an inner surface of each of the substrate 22A and the substrate 22B is provided with an unillustrated transparent electrode, which achieves a configuration in which a predetermined electric field is applicable to the liquid crystal layer 22C with these transparent electrodes. In the case of this liquid crystal panel 22, the single integral transparent electrode described above that is so configured as to cover inside of almost the entire effective display region may be provided on each side of the liquid crystal layer 22C. A plurality of transparent electrodes described above may be, however, formed on each side of the liquid crystal layer 22C, and be so configured to supply electric potentials independently of each other.

The absorption-type polarization plate 23 has a polarization transmission axis 23J (which will be described later), allows linearly-polarized light having an oscillation plane that is parallel to the transmission polarization axis 23J to pass through, and absorbs linearly-polarized light having an oscillation plane that is parallel to a direction that intersects (preferably, is orthogonal to) the transmission polarization axis 23J.

A display mode of the liquid crystal panel 22 is preferably one of the TN mode, the ECB mode, the STN mode, a BTN (Bistable Twisted Nematic) mode, the VA mode, the IPS mode, a ferroelectric liquid crystal mode, and an antiferroelectric liquid crystal mode.

It is preferable that the liquid crystal panel 22 and the absorption-type polarization plate 23 be attached to each other, for example, with a second resin layer 32 (hereinafter, simply referred to as the resin layer 32) having the thickness equal to or smaller than 25 μm in between. One reason for this is that it is thereby possible to suppress occurrence of unevenness in the vicinity of the interface of the liquid crystal panel 22 and the absorption-type polarization plate 23 resulting from the attachment. By suppressing such occurrence of unevenness, it is possible to reduce the blur in the mirror surface state (the external light reflection mode) resulting from the unevenness. The hue b* value of the resin

layer 32 is preferably equal to or greater than -0.5 and equal to or smaller than 0.5, for example. Further, the haze value of the resin layer 32 is preferably equal to or smaller than 1, for example. As such a resin layer 32, for example, a highly-transparent baseless tape CTL-NC103 from Lintec Corporation or a baseless optical double-sided adhesive tape DAITAC ZB7010W-10 or DAITAC ZB7011W from DIC Corporation may be used. It is to be noted that a hue b* value of DAITAC ZB7011W is 0.11, and a haze value (JIS K7136) of DAITAC ZB7010W-10 is 0.4.

In the display switching section 20, a retardation plate (which is not illustrated) may be disposed each of a region between the liquid crystal panel 22 and the absorption-type polarization plate 23 and a region between the liquid crystal panel 22 and the reflection-type polarization plate 21.

The reflection-type polarization plate 21 and the absorption-type polarization plate 11 are preferably so disposed that the transmission polarization axis of the reflection-type polarization plate 21 and the transmission polarization axis of the absorption-type polarization plate 11 be substantially parallel to each other or that the transmission polarization axis of the reflection-type polarization plate 21 and the transmission polarization axis of the absorption-type polarization plate 11 be substantially orthogonal to each other. Further, in the display unit 1, it is desirable that the transmission polarization axis of the absorption-type polarization plate 11 and the transmission polarization axis of the absorption-type polarization plate 14 be substantially orthogonal to each other. Accordingly, in a case where the transmission polarization axis of the reflection-type polarization plate 21 and the transmission absorption axis of the absorption-type polarization plate 11 are substantially parallel to each other, it is preferable that the transmission polarization axis of the reflection-type polarization plate 21 and the transmission polarization axis of the absorption-type polarization plate 14 be substantially orthogonal to each other. In contrast, in a case where the transmission polarization axis of the reflection-type polarization plate 21 and the transmission polarization axis of the absorption-type polarization plate 11 are substantially orthogonal to each other, it is preferable that the transmission polarization axis of the reflection-type polarization plate 21 and the transmission polarization axis of the absorption-type polarization plate 14 be substantially parallel to each other.

A drive mode of the display switching section 20 may be either of the active drive mode and the passive drive mode as with the drive mode of the display section 10. The active drive mode includes, for example, active matrix drive that uses an active device such as a TFT and a TFD. The passive drive mode includes, for example, simple drive or multiplex drive that does not use any active device as that described above.

In this display unit 1, in a case where the transmission polarization axis of the absorption-type polarization plate 23 and the transmission polarization axis of the absorption-type polarization plate 11 are substantially orthogonal to each other, the hue b* value of the absorption-type polarization plate 23 is preferably at least equal to or smaller than the hue b* value of the absorption-type polarization plate 11. In contrast, in a case where the transmission polarization axis of the absorption-type polarization plate 23 and the transmission polarization axis of the absorption-type polarization plate 14 are substantially orthogonal to each other, the hue b* value of the absorption-type polarization plate 23 is preferably at least equal to or smaller than the hue b* value of the absorption-type polarization plate 14. More preferably, the hue b* value of the absorption-type polarization plate 23 is equal to or smaller than the hue b* value of the absorption-type polarization plate 11 and is equal to or smaller than the hue b* value of the absorption-type polarization plate 14.

As the absorption-type polarization plates 11 and 14 in the display section 10, for example, SRCZ4QJ from Sumitomo Chemical Co., Ltd. or SKN-18243T from Polatechno Co.,Ltd. may be used. A hue b* value of SRCZ4QJ mentioned above is 4.0, and a hue b* value of SKN-18243T mentioned above is 3.55.

The hue b* value of the absorption-type polarization plate 23 in the display switching section 20 is preferably equal to or smaller than 3.5 and is further preferably equal to or smaller than 1.5, for example. As the absorption-type polarization plate 23 having the hue b* value that is equal to or smaller than 3.5, for example, SEG1425DU from Nitto Denko Corporation may be used. As the absorption-type polarization plate 23 having the hue b* value that is equal to or smaller than 1.5, for example, EGW1225DU from Nitto Denko Corporation or SKW-18245T from Polatechno Co.,Ltd. may be used. A hue b* value of SKW-18245T mentioned above is 0.43.

Moreover, in the display section 10, the hue b* value in a case where the absorption-type polarization plate 11 and the absorption-type polarization plate 14 are so overlapped that the polarization transmission axis of the absorption-type polarization plate 11 and the polarization transmission axis of the absorption-type polarization plate 14 are aligned in the same direction is preferably equal to or smaller than 7, is further preferably equal to or smaller than 3, and still further preferably equal to or smaller than 1. For example, SEG1425DU from Nitto Denko Corporation may be mentioned as a member that achieves the hue b* value that is equal to or smaller than 7 in the case where the two absorption-type polarization plates 11 and 14 are so overlapped that the absorption axes of the respective absorption-type polarization plates 11 and 14 are aligned in the same direction. Further, for example, EGW1225DU from Nitto Denko Corporation or SKW-18245T from Polatechno Co.,Ltd. may be mentioned as the member that achieves the foregoing hue b* value that is equal to or smaller than 3.

Moreover, the liquid crystal layer 22C preferably has a retardation value ($\Delta n \cdot d$) that is equal to or greater than 0.36 $\mu m$ and is smaller than 0.54 $\mu m$. One reason for this is that, by causing $\Delta n \cdot d$ of the liquid crystal layer 22C to fall within the foregoing range, it is possible to reduce coloring of the display image formed by the display section 10 and to

make the display image brighter. Further, owing to the small retardation value, the blur in the display image is reduced, and a viewing angle that is wide at some extent is allowed to be secured.

Moreover, Δn of the liquid crystal layer 22C at the wavelength of 550 nm is preferably equal to or greater than 0.09 and smaller than 0.14. One reason for this is that transmission characteristics in the mirror state (the external light reflection mode), in particular, the transmission characteristics of light having the wavelength from 400 nm to 500 nm are improved thereby.

[Operation of Display Unit 1]

In this display unit 1, for example, by controlling intensity of an electric field to be applied to the liquid crystal layer 22C of the liquid crystal panel 22 in the display switching section 20 or by performing switching between presence and absence of the application of the electric field, it is possible to cause the display switching section 20 to be in a transmission state (the screen state) or to cause the display switching section 20 to be in the mirror surface state.

Here, a description is given, referring to FIG. 1B together with FIG. 1A, of behavior in a case where the liquid crystal panel 22 in the display switching section 20 is a TN-type liquid crystal panel, and the transmission polarization axis of the reflection-type polarization plate 21 and the transmission polarization axis of the absorption-type polarization plate 23 are substantially parallel to each other.

(Behavior in Case Where No Electric Field is Applied to Liquid Crystal Layer 22C)

In a case where no electric field is applied to the liquid crystal layer 22C (refer to an upper part of FIG. 1B), the nematic liquid crystal included in the liquid crystal layer 22C is in a 90-degree twisted state, and is basically in the first mode having optical rotation characteristics of 90 degrees. Under such a situation, external light L1 that has entered the display switching section 20 passes through the absorption-type polarization plate 23, and thereby becomes the first linearly-polarized light Lp having the oscillation plane that is parallel to the transmission polarization axis 23J of the absorption-type polarization plate 23. This first linearly-polarized light Lp later passes through the liquid crystal panel 22, and is thereby converted into the second linearly-polarized light Ls having the oscillation plane that is orthogonal to the transmission polarization axis 23J of the absorption-type polarization plate 23. This second linearly-polarized light Ls has the oscillation plane in a direction orthogonal to the transmission polarization axis 21J of the reflection-type polarization plate 21, and is therefore reflected by the reflection-type polarization plate 21. The reflected second linearly-polarized light Ls passes through the liquid crystal panel 22 again, and thereby becomes the first linearly-polarized light Lp having the oscillation plane that is parallel to the transmission polarization axis 23J of the absorption-type polarization plate 23. This first linearly-polarized light Lp thereafter passes through the absorption-type polarization plate 23 and is visually recognized by a viewer.

In contrast, image light L2 outputted from the display section 10 is the first linearly-polarized light Lp having the oscillation plane that is parallel to the transmission polarization axis 11J of the absorption-type polarization plate 11 as that described above. This first linearly-polarized light Lp passes through the reflection-type polarization plate 21 as it is and enters the liquid crystal panel 22. That first linearly-polarized light Lp passes through the liquid crystal panel 22, and is thereby converted into the second linearly-polarized light Ls having the oscillation plane that is orthogonal to the transmission polarization axis 23J of the absorption-type polarization plate 23, which is absorbed by the absorption-type polarization plate 23. The image light outputted from the display section 10 is therefore not visually recognized from outside.

As described above, in the case where no electric field is applied to the liquid crystal layer 22C, the image light from the display section 10 is not visually recognized from the outside. Further, the external light L1 is reflected toward the viewer. The display screen is therefore brought into the mirror surface state (the external light reflection mode).

(Behavior in Case Where Electric Field is Applied to Liquid Crystal Layer 22C)

Next, a description is given of behavior in a case where an electric field of a predetermined threshold or greater is applied to the liquid crystal layer 22C (refer to a lower part of FIG. 1B). In this case, the twisted state of the nematic liquid crystal included in the liquid crystal layer 22C is released, and the liquid crystal panel 22 loses optical rotation characteristics with respect to light that passes through in a direction of its optical axis to be brought into the second mode. The light outputted from the display section 10 (i.e., light configuring the display image on the display section 10) has been caused, by the absorption-type polarization plate 11, to become the first linearly-polarized light Lp having the oscillation plane that is parallel to the transmission polarization axis 11J thereof. This first linearly-polarized light Lp passes through the reflection-type polarization plate 21, and enters the liquid crystal panel 22. The oscillation plane of the first linearly-polarized light Lp that has entered the liquid crystal panel 22 is not varied. Therefore, the first linearly-polarized light Lp that has entered the liquid crystal panel 22 passes through the absorption-type polarization plate 23

as it is and is visually recognized (the screen state). Further, in this case, the external light L1 that has entered the display switching section 20 passes through the absorption-type polarization plate 23 and thereby becomes the first linearly-polarized light Lp. Thereafter, this first linearly-polarized light Lp sequentially passes through the liquid crystal panel 22, the reflection-type polarization plate 21, the absorption-type polarization plate 11, and the liquid crystal panel 13 as it is, and enters the absorption-type polarization plate 14. The first linearly-polarized light Lp has the oscillation plane that is orthogonal to the transmission polarization axis 14J of the absorption-type polarization plate 14, and is therefore absorbed by the absorption-type polarization plate 14.

In the liquid crystal panel 22, however, an electric field may be applied that does not cause the twisted state of the liquid crystal included in the liquid crystal layer 22C to be completely released and to be released only partially, with an electric field that is equal to or greater than the predetermined threshold. In this case, the liquid crystal panel 22 loses part of the optical rotation characteristics with respect to light that passes through in the direction of the optical axis thereof, and is brought into a third mode. Accordingly, the external light L1 that has entered the display switching section 20, the linearly-polarized light Lp generated by passing through the absorption-type polarization plate 23 causes its own oscillation plane to be varied at an angle that is greater than 0 degree and smaller than 90 degrees upon passing through the liquid crystal panel 22. Accordingly, part of this linearly-polarized light Lp is reflected by the reflection-type polarization plate 21, and the rest passes through the reflection-type polarization plate 21. The light reflected by the reflection-type polarization plate 21 passes through the liquid crystal panel 22 again and causes the oscillation plane to be varied in a range that is greater than 0 degree and is smaller than 90 degrees. Part of the light reflected by the reflection-type polarization plate 21 therefore passes through the polarization plate 23 to be visually recognized. The intensity of the reflected light is, however, weaker than that in the mirror surface state described above.

The light L2 outputted from the display section 10 (i.e., display image light configuring the display image on the display section 10) has been caused, by the absorption-type polarization plate 11, to become the first linearly-polarized light Lp having the oscillation plane that is parallel to the transmission polarization axis 11J thereof. This first linearly-polarized light Lp passes through the reflection-type polarization plate 21 as it is, and enters the liquid crystal panel 22. The first linearly-polarized light Lp causes its oscillation plane to be varied in a range that is greater than 0 (zero) degree and is smaller than 90 degrees upon passing through the liquid crystal panel 22. Part of the first linearly-polarized light Lp is therefore absorbed by the absorption-type polarization plate 23, and the rest is allowed to pass through. Accordingly, part of the display image light from the display section 10 is visually recognizable from the outside. As described above, in a state where the electric field that releases only part of the twisted state of the liquid crystal in the liquid crystal panel 22 is applied, part of the external light L1 is reflected while part of the display image light from the display section 10 is allowed to pass through. Accordingly, the display screen is brought into a so-called half mirror state.

Here, the hue b* value of the absorption-type polarization plate 23 in the display switching section 20 is equal to or smaller than the hue b* values of the absorption-type polarization plates 11 and 14 in the display section 10. As a result, coloring (in particular, coloring in yellow) in the display image and the reflected image to be visually recognized by the viewer is suppressed.

[Workings and Effects of Display Unit 1]

As the display unit 1, in the case where the two liquid crystal panels (the liquid crystal panel 13 and the liquid crystal panel 23) are overlapped to achieve the configuration in which the switching between the screen state and the mirror surface state is possible, and the transmission-type liquid crystal panel 13 is employed in the display section 10, the light from the backlight 15 passes through each of the absorption-type polarization plate 11 and the absorption-type polarization plate 14 once (twice in total). In other words, each of the absorption-type polarization plate 11 and the absorption-type polarization plate 14 contributes to the coloring with respect to the light from the backlight 15. In contrast, in the display switching section 20, the display image light only passes through the absorption-type polarization plate 23 once in the image display state. Therefore, contribution, of the coloring due to the display switching section 20 (the coloring due to the absorption-type polarization plate 23), to the final display image and the final reflected image is about half of the contribution of the display section 10 to the coloring. It therefore seems that an influence, on the coloring, of the provision of the display switching section 20 is small.

In fact, however, the absorption-type polarization plate 11 and the absorption-type polarization plate 14 are often so disposed that the light absorption axis of the absorption-type polarization plate 11 and the light absorption axis of the absorption-type polarization plate 14 are orthogonal to each other in the display section 10. In such a case, the hue b* value representing the coloring in a yellow direction due to the absorption-type polarization plates 11 and 14 is much smaller than the hue b* value in the case where the light absorption axis of the absorption-type polarization plate 11 and the light absorption axis of the absorption-type polarization plate 14 are parallel to each other. In other words, in the case where the light absorption axis of the absorption-type polarization plate 11 and the light absorption axis of the absorption-type polarization plate 14 are orthogonal to each other in the display section 10, additional provision of the existing display switching section causes the increase in hue b* value to be greater than that in a case where that

display switching section is not provided.

Moreover, in a case where the mirror surface state is provided in this display unit 1, the external light sequentially passes through, from the viewer side, the absorption-type polarization plate 23 and the liquid crystal panel 22, and further passes through the liquid crystal panel 22 and the absorption-type polarization plate 23 again after being reflected by the reflection-type polarization plate 21. For a reason that the light absorption axis of the absorption-type polarization plate 23 and the light absorption axis of the reflection-type polarization plate 21 are parallel to each other, it can be said that it is a disadvantageous configuration in terms of the coloring in the yellow direction (the increase in hue b* value) due to the absorption-type polarization selecting means.

To address this, in the display unit 1 according to the present embodiment, the hue b* value of the absorption-type polarization plate 23 is set to be equal to or smaller than the hue b* value of the absorption-type polarization plate 11 (or the absorption-type polarization plate 14) having the transmission polarization axis that is substantially orthogonal to the transmission polarization axis of the absorption-type polarization plate 23. Such a configuration reduces the coloring (in particular, the coloring in yellow) in the display image and the reflected image that is visually recognized by the viewer. The hue b* value of the absorption-type polarization plate 23 may be a negative value. Hence, according to this display unit 1, it is possible to exhibit superior display performance in any of the screen mode (the image display mode) and the mirror surface state (the external light reflection mode).

Moreover, in the display unit 1, by employing, as the display mode of the liquid crystal panel 22, any of the TN mode, the ECB mode, the STN mode, the BTN mode, the VA mode, the IPS mode, the ferroelectric liquid crystal mode, and the antiferroelectric liquid crystal mode, a high contrast ratio is achieved with a relatively-low drive voltage. One reason for this is that the liquid crystal panel 22 employing the foregoing display mode performs display by modulating, with the polarization plate, the polarization state of the light that enters the liquid crystal layer 22C. Further, in a case where the liquid crystal panel 22 varies the polarization axis by an odd multiple of 90 degrees, it is possible to easily perform the switching between the screen state and the mirror surface state.

Moreover, in this display unit 1, for example, the resin layers 31 to 33 each having the thickness that is equal to or smaller than 25 $\mu$m are disposed at the respective predetermined positions. This makes it possible to suppress occurrence of a blur in the mirror surface state resulting from the unevenness on the attachment surface, and to exhibit superior display performance. Further, in a case where the hue b* values of the respective resin layers 31 to 33 are set to have smaller absolute value, for example, are set to be equal to or greater than -0.5 and equal to or smaller than 0.5, it is possible to reduce the coloring in yellow in the display image and the reflected image. In a case where the haze values of the respective resin layers 31 to 33 are equal to or smaller than 1, the display image and the reflected image in the screen of the display unit 1 in the screen state and the mirror surface state becomes more vivid.

Moreover, in a case where the liquid crystal layer 22C of the liquid crystal panel 22 has $\Delta n \cdot d$ that is equal to or greater than 0.36 $\mu$m and smaller than 0.54 $\mu$m, it is possible to reduce the coloring in the display image formed by the display section 10, and to make the display image brighter. Further, a blur in the display image is reduced, and a viewing angle that is wide at some extent is allowed to be secured.

Moreover, in a case where $\Delta n$ of the liquid crystal layer 22C at the wavelength of 550 nm is set to be equal to or greater than 0.09 and smaller than 0.14, it is possible to improve the transmission characteristics in the mirror surface state, in particular, the transmission characteristics of the light having the wavelength from 400 nm to 500 nm.

Moreover, in a case where the hue b* value of the reflection-type polarization plate 21 in the display switching section 20 is equal to or greater than -0.5 and equal to or smaller than 0.5, it is possible to further suppress the coloring in yellow. In particular, in a case where the hue b* value thereof is equal to or greater than -0.5 and smaller than 0, it is possible to further improve the coloring in yellow.

Moreover, in the display switching section 20, the reflection-type polarization plate 21 and the absorption-type polarization plate 23 are so disposed that the transmission polarization axis 21J and the transmission polarization axis 23J are substantially parallel to each other. It is therefore possible to achieve the mirror surface state without applying any voltage to the liquid crystal panel 22 in the display switching section 20. It is therefore possible to reduce power consumption in the mirror surface state.

## <2. Second Embodiment>

### [Configuration of Display Unit 2]

FIG. 2 illustrates a schematic configuration of a display unit 2 according to a second embodiment of the present disclosure. The display unit 2 has a configuration similar to the configuration of the display unit 1 according to the foregoing first embodiment except that the transmission polarization axis 21J of the reflection-type polarization plate 21 and the transmission polarization axis 23J of the absorption-type polarization plate 23 are orthogonal to each other in the display switching section 20.

[Operation of Display Unit 2]

Also in this display unit 2, for example, by controlling intensity of an electric field to be applied to the liquid crystal layer 22C of the liquid crystal panel 22 in the display switching section 20 or by performing switching between presence and absence of the application of the electric field, it is possible to cause the display switching section 20 to be in a transmission state (the screen state) or to cause the display switching section 20 to be in the mirror surface state.
Here, a description is given, referring to FIG. 2, of behavior in a case where the liquid crystal panel 22 in the display switching section 20 is the TN-type liquid crystal panel.

(Behavior in Case Where No Electric Field is Applied to Liquid Crystal Layer 22C)

In a case where no electric field is applied to the liquid crystal layer 22C (refer to an upper part of FIG. 2), the nematic liquid crystal included in the liquid crystal layer 22C is in a 90-degree twisted state, and is basically in the first mode having optical rotation characteristics of 90 degrees. The light outputted from the display section 10 (i.e., the light configuring the display image on the display section 10) has been caused, by the absorption-type polarization plate 11, to become the first linearly-polarized light Lp having the oscillation plane that is parallel to the transmission polarization axis 11J thereof. This first linearly-polarized light Lp passes through the reflection-type polarization plate 21, and enters the liquid crystal panel 22. The first linearly-polarized light Lp passes through the liquid crystal panel 22, and the oscillation plane of the first linearly-polarized light Lp that has entered the liquid crystal panel 22 is thereby rotated by 90 degrees. This first linearly-polarized light Lp thereby becomes the second linearly-polarized light Ls having the oscillation plane that is parallel to the transmission polarization axis 23J of the absorption-type polarization plate 23. That second linearly-polarized light Ls passes through the absorption-type polarization plate 23 as it is and is visually recognized by the viewer (the screen state). Further, in this case, the external light L1 that has entered the display switching section 20 passes through the absorption-type polarization plate 23 and thereby becomes the second linearly-polarized light Ls. Thereafter, this second linearly-polarized light Ls passes through the liquid crystal panel 22, and is thereby rotated by 90 degrees, which becomes the first linearly-polarized light Lp having the oscillation plane that is parallel to the transmission polarization axis 21J of the reflection-type polarization plate 21. That first linearly-polarized light Lp sequentially passes through the reflection-type polarization plate 21, the absorption-type polarization plate 11, and the liquid crystal panel 13 as it is, and enters the absorption-type polarization plate 14. That first linearly-polarized light Lp has the oscillation plane that is orthogonal to the transmission polarization axis 14J of the absorption-type polarization plate 14, and is therefore absorbed by the absorption-type polarization plate 14.

(Behavior in Case Where Electric Field is Applied to Liquid Crystal Layer 22C)

Next, a description is given of behavior in a case where an electric field of a predetermined threshold or grater is applied to the liquid crystal layer 22C (refer to a lower part of FIG. 2). In this case, the twisted state of the nematic liquid crystal included in the liquid crystal layer 22C is released, and the liquid crystal panel 22 loses optical rotation characteristics with respect to light that passes through in a direction of its optical axis to be brought into the second mode. Under such a situation, the external light L1 that has entered the display switching section 20 passes through the absorption-type polarization plate 23, and thereby becomes the second linearly-polarized light Ls having the oscillation plane that is parallel to the transmission polarization axis 23J of the absorption-type polarization plate 23. This second linearly-polarized light Ls thereafter passes through the liquid crystal panel 22 as it is without being converted into the first linearly-polarized light Lp, and enters the reflection-type polarization plate 21. This second linearly-polarized light Ls has the oscillation plane in a direction orthogonal to the transmission polarization axis 21J of the reflection-type polarization plate 21, and is therefore reflected by the reflection-type polarization plate 21. The reflected second linearly-polarized light Ls passes through the liquid crystal panel 22 and the absorption-type polarization plate 23 again, and is visually recognized by the viewer.
In contrast, the image light L2 outputted from the display section 10 is the first linearly-polarized light Lp having the oscillation plane that is parallel to the transmission polarization axis 11J of the absorption-type polarization plate 11. This image light L2 therefore passes through the reflection-type polarization plate 21 as it is, and enters the liquid crystal panel 22. That first linearly-polarized light Lp passes through the liquid crystal panel 22 as it is, and enters the absorption-type polarization plate 23. The first linearly-polarized light Lp has the oscillation plane that is orthogonal to the transmission polarization axis 23J, and is therefore absorbed by the absorption-type polarization plate 23. The image light outputted from the display section 10 is therefore not visually recognized from outside.
As described above, in the case where the electric field is applied to the liquid crystal layer 22C, the image light from the display section 10 is not visually recognized from the outside. Further, the external light L1 is reflected toward the viewer. The display screen is therefore brought into the mirror surface state (the external light reflection mode).
It is to be noted that the so-called half mirror state is also achievable in the display unit 2 as with the display unit 1.

[Workings and Effects of Display Unit 2]

As described above, also in the display unit 2, it is possible to perform the switching between the screen state (the image display mode) and the mirror surface state (the external light reflection mode) by the display switching section 20 as in the foregoing first embodiment. Further, the hue b* value of the absorption-type polarization plate 23 in the display switching section 20 is set to be equal to or smaller than the hue b* values of the respective absorption-type polarization plates 11 and 14 in the display section 10. Accordingly, it is possible to suppress the coloring (in particular, the coloring in yellow) in the display image and the reflected image that are visually recognized by the viewer.

Moreover, the reflection-type polarization plate 21 and the absorption-type polarization plate 23 are so disposed that the transmission polarization axis 21J and the transmission polarization axis 23J are substantially orthogonal to each other in the display switching section 20. It is therefore expectable to improve the viewing angle characteristics in the mirror surface state. It is to be noted that a viewing angle improvement film may be disposed at least in one of a region between the absorption-type polarization plate 23 and the liquid crystal panel 22 and a region between the reflection-type polarization plate 21 and the liquid crystal panel 22.

<3. Third Embodiment>

[Configuration of Display Unit 3]

FIG. 3 illustrates a cross-sectional configuration of a display unit 3 according to a third embodiment of the present disclosure. The display unit 3 has a configuration similar to the configuration of the display unit 1 according to the foregoing first embodiment except that a position at which the absorption-type polarization plate 11 is disposed is changed in the display section 10.

Specifically, in the display unit 3, the absorption-type polarization plate 11 is disposed between the substrate 13A and the liquid crystal layer 13C instead of being disposed between the reflection-type polarization plate 21 and the substrate 13A.

[Workings and Effects of Display Unit 3]

Also in the display unit 3, it is possible to perform the switching between the screen state (the image display mode) and the mirror surface state (the external light reflection mode) by the display switching section 20 as in the foregoing first embodiment. Further, the hue b* value of the absorption-type polarization plate 23 in the display switching section 20 is set to be equal to or smaller than the hue b* values of the respective absorption-type polarization plates 11 and 14 in the display section 10. Accordingly, it is possible to suppress the coloring (in particular, the coloring in yellow) in the display image and the reflected image that are visually recognized by the viewer.

In addition, in the display unit 3, the absorption-type polarization plate 11 is provided inside the liquid crystal panel 13. This makes it possible to achieve the attachment of the display section 10 and the display switching section 20 to each other by adhering the reflection-type polarization plate 21 and the substrate 13A to each other, for example, with a resin layer. It is therefore possible to avoid occurrence of unevenness on the reflection-type polarization plate 21 resulting from the unevenness of the surface of the absorption-type polarization plate 11, and to suppress occurrence of a blur in the mirror surface state. It is to be noted that, for example, a method disclosed in Japanese Unexamined Patent Application Publication No. 2011-48310 can be referred to as one example of a method of forming the absorption-type polarization plate 11 inside the liquid crystal panel 13.

<4. Fourth Embodiment>

[Configuration of Display Unit 4]

FIG. 4 illustrates a cross-sectional configuration of a display unit 4 according to a fourth embodiment of the present disclosure. In the display unit 4, a glass substrate 16 is disposed between the display section 10 and the display switching section 20, more specifically, between the absorption-type polarization plate 11 and the reflection-type polarization plate 21. Except for this point, the display unit 4 has a configuration similar to the configuration of the display unit 1 according to the foregoing first embodiment.

[Workings and Effects of Display Unit 4]

Also in the display unit 4, it is possible to perform the switching between the screen state (the image display mode) and the mirror surface state (the external light reflection mode) by the display switching section 20 as in the

foregoing first embodiment. Further, the hue b* value of the absorption-type polarization plate 23 in the display switching section 20 is set to be equal to or smaller than the hue b* values of the respective absorption-type polarization plates 11 and 14 in the display section 10. Accordingly, it is possible to suppress the coloring (in particular, the coloring in yellow) in the display image and the reflected image that are visually recognized by the viewer.

In the display unit 4, the glass substrate 16 is interposed between the absorption-type polarization plate 11 and the reflection-type polarization plate 21. It is therefore possible to avoid an influence of the absorption-type polarization plate 11 on the reflection-type polarization plate 21. In other words, it is possible to prevent occurrence of unevenness on the reflection-type polarization plate 21 by attaching the reflection-type polarization plate 21 to the glass substrate 16. As a result, it is possible to suppress occurrence of a blur in the mirror surface state. Further, it is possible to reduce, for example, loss in optical transmittance, by using the glass substrate 16, compared to the case of using the resin layer.

<5. Fifth Embodiment>

[Configuration of Display Unit 5]

FIG. 5 illustrates a cross-sectional configuration of a display unit 5 according to a fifth embodiment of the present disclosure. In the display unit 5, the STN mode is employed as the liquid crystal mode of the liquid crystal panel 22, and a retardation plate 24 is disposed between the liquid crystal panel 22 and the absorption-type polarization plate 23. A twist angle of the liquid crystal in the liquid crystal layer 22C in the liquid crystal panel 22 is set to 270 degrees. Further, as a pixel arrangement in the display section 10, a matrix type in which the pixels are disposed at the respective intersections of a plurality of stripe electrodes is employed. Except for these points, a configuration similar to the configuration of the display unit 1 according to the foregoing first embodiment is provided.

[Workings and Effects of Display Unit 5]

Also in the display unit 5, it is possible to perform the switching between the screen state (the image display mode) and the mirror surface state (the external light reflection mode) by the display switching section 20 as in the foregoing first embodiment. Further, the hue b* value of the absorption-type polarization plate 23 in the display switching section 20 is set to be equal to or smaller than the hue b* values of the respective absorption-type polarization plates 11 and 14 in the display section 10. Accordingly, it is possible to suppress the coloring (in particular, the coloring in yellow) in the display image and the reflected image that are visually recognized by the viewer.

In the display unit 5, the liquid crystal display device of the STN mode is used for the liquid crystal panel 22. In other words, the liquid crystal panel 22 including a bistable liquid crystal display device is used. This eliminates the necessity of constant driving and therefore achieves reduction in power consumption. In this STN mode, threshold characteristics of the drive voltage are steep. The steep threshold characteristics refer to the fact that the transmission polarization axis is varied drastically with respect to an application voltage. When the threshold characteristics are steep, it is easy to increase the number of scanning lines in the passive drive mode including simple drive and multiplex drive that does not use any active device, which is preferable.

<6. Sixth Embodiment>

[Configuration of Display Unit 6]

FIG. 6 illustrates a cross-sectional configuration of a display unit 6 according to a sixth embodiment of the present disclosure. The display unit 6 has a configuration similar to the configuration of the display unit 1 according to the foregoing first embodiment except that a liquid crystal panel 25 is provided instead of the liquid crystal panel 22.

The liquid crystal panel 25 is a ferroelectric liquid crystal panel, and has a structure in which a liquid crystal layer 25C is sandwiched between a substrate 25A and a substrate 25B. The substrate 25A and the substrate 25B are made of a transparent material such as glass (including quartz), for example. The liquid crystal layer 25C includes a ferroelectric liquid crystal substance (for example, ZLI3489 from Merck & Co., Inc.). Further, as a spacer for thickness adjustment of the liquid crystal layer 25C, for example, a spherical spacer made of silica having an average particle diameter of about 1.7 μm is used, for example. The liquid crystal panel 25 is manufactured as follows, for example. Specifically, spin coating with polyimide is so performed that a surface of a transparent electrode (for example, ITO) formed on an inner surface of each of the substrate 25A and the substrate 25B is covered, which is thereafter subjected to a heating process at about 180 degrees Celsius for about an hour. Next, rubbing is performed on the surface of that polyimide film, for example, with a nylon cloth (with an indentation amount of about 0.5 mm). Further, the substrate 25A and the substrate 25B are so attached to each other that their rubbing directions are parallel to each other. The liquid crystal panel 25 is thus completed. It is to be noted that the polarization plane of light that has passed through the liquid

crystal panel 25 is rotated by about 90 degrees between a state in which a voltage is applied to the liquid crystal panel 25 and a state in which no voltage is applied to the liquid crystal panel 25. Further, the liquid crystal layer 25C in the liquid crystal panel 25 is a bistable liquid crystal display device that only has two states in which inclination is provided by a tilt angle $\pm\theta$ with respect to an axis perpendicular to a film surface. It is to be noted that a liquid crystal display device of the BTN mode may be used as the bistable liquid crystal display device.

[Workings and Effects of Display Unit 6]

Also in the display unit 6, it is possible to perform the switching between the screen state (the image display mode) and the mirror surface state (the external light reflection mode) by the display switching section 20 as in the foregoing first embodiment. Further, the hue b* value of the absorption-type polarization plate 23 in the display switching section 20 is set to be equal to or smaller than the hue b* values of the respective absorption-type polarization plates 11 and 14 in the display section 10. Accordingly, it is possible to suppress the coloring (in particular, the coloring in yellow) in the display image and the reflected image that is visually recognized by the viewer.

In the display unit 6, the liquid crystal panel 25 that is the bistable liquid crystal display device is used as a switchable transmission polarization axis member. This eliminates the necessity of constant driving and therefore achieves reduction in power consumption. Further, chiral smectic liquid crystal may be used as the ferroelectric liquid crystal substance in the liquid crystal layer 25C in the liquid crystal panel 25. A response speed of the liquid crystal panel 25 is higher than a response speed of a liquid crystal panel using nematic liquid crystal (for example, time of switching between the screen state and the mirror surface state is within 1 msec at 25 degrees Celsius), which is preferable.

<7. Seventh Embodiment>

[Configuration of Display Unit 7]

FIG. 7 illustrates a cross-sectional configuration of a display unit 7 according to a seventh embodiment of the present disclosure. The display unit 7 has a configuration similar to the configuration of the display unit 1 according to the foregoing first embodiment except that a liquid crystal panel 26 is provided instead of the liquid crystal panel 22.

The liquid crystal panel 26 is an antiferroelectric liquid crystal panel, and has a structure in which a liquid crystal layer 26C is sandwiched between a substrate 26A and a substrate 26B. The substrate 26A and the substrate 26B are made of a transparent material such as glass (including quartz), for example. For example, an antiferroelectric liquid crystal molecule represented by Formula 1 may be used for the liquid crystal layer 26C.

[Formula 1]

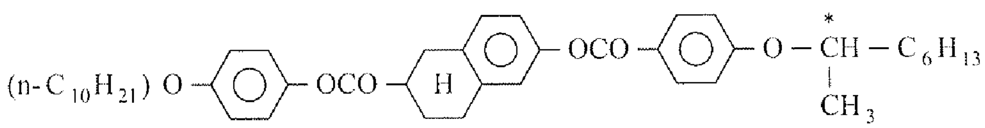

Further, as a spacer for thickness adjustment of the liquid crystal layer 26C, for example, a spherical spacer made of silica having an average particle diameter of about 5.5 μm is used. The liquid crystal panel 26 is manufactured as follows, for example. Specifically, spin coating with polyimide is so performed that a surface of a transparent electrode (for example, ITO) formed on an inner surface of each of the substrate 26A and the substrate 26B is covered, which is thereafter subjected to a heating process at about 180 degrees Celsius for about an hour. Next, rubbing is performed on the surface of that polyimide film, for example, with a nylon cloth (with an indentation amount of about 0.7 mm). Further, the substrate 26A and the substrate 26B are so attached to each other that their rubbing directions are parallel to each other. The liquid crystal panel 26 is thus completed. It is to be noted that the polarization plane of light that has passed through the liquid crystal panel 26 is rotated by about 90 degrees between a state in which a voltage is applied to the liquid crystal panel 26 and a state in which no voltage is applied to the liquid crystal panel 26. Further, a tilt angle $\theta$ of the antiferroelectric liquid crystal molecule in the liquid crystal layer 26C in the liquid crystal panel 26 is about 45 degrees.

[Workings and Effects of Display Unit 7]

Also in the display unit 7, it is possible to perform the switching between the screen state (the image display mode) and the mirror surface state (the external light reflection mode) by the display switching section 20 as in the foregoing first embodiment. Further, the hue b* value of the absorption-type polarization plate 23 in the display switching

section 20 is set to be equal to or smaller than the hue b* values of the respective absorption-type polarization plates 11 and 14 in the display section 10. Accordingly, it is possible to suppress the coloring (in particular, the coloring in yellow) in the display image and the reflected image that is visually recognized by the viewer.

The liquid crystal panel 26 in the display unit 7 is a tristable liquid crystal display device that only has two states in which inclination is provided by a tilt angle $\pm\theta$ with respect to an axis perpendicular to a film surface and a tilt angle of 0 (zero) degree. In the display unit 7, the liquid crystal panel 26 that is the tristable liquid crystal display device is used as the switchable transmission polarization axis member. This eliminates the necessity of constant driving and therefore achieves reduction in power consumption. It is to be noted that, in the display unit 7, when the tilt angle is $\pm\theta$, the polarization plane of the light that has passed through the liquid crystal panel 26 may be so set as to be rotated by about 90 degrees, compared to that at the tilt angle of 0 (zero) degree. Alternatively, when the tilt angle is $\pm\theta$, the polarization plane of the light that has passed through the liquid crystal panel 26 may be so set as to be rotated by about 45 degrees, compared to that at the tilt angle of 0 (zero) degree. When the polarization plane of the light that has passed through the liquid crystal panel 26 for the tilt angle of $\pm\theta$ is so set as to be rotated by about 45 degrees compared to that at the tilt angle of 0 (zero) degree, a difference between the tilt angle of $+\theta$ and the tilt angle of $-\theta$ corresponds rotation of about 90 degrees. In other words, it is possible to achieve, without performing constant driving, the three states, i.e., the tilt angle of $+\theta$ (the screen state (the image display mode)), the mirror surface state having the tilt angle of $-\theta$ (the external light reflection mode), and the tilt angle of 0 (zero) degree (the half mirror mode). Further, in the display unit 7, the liquid crystal panel 26 is an antiferroelectric liquid crystal panel, and chiral smectic liquid crystal of the antiferroelectric liquid crystal substance may be used for the liquid crystal layer 26C thereof. A response speed of the antiferroelectric liquid crystal panel is higher than a response speed of a liquid crystal panel using nematic liquid crystal (for example, time for switching between the screen state and the mirror surface state is within 1 msec at 25 degrees Celsius), which is preferable. Further, the antiferroelectric liquid crystal panel has a wide viewing angle. The antiferroelectric liquid crystal panel achieves even alignment more easily, has alignment that is more difficult to be disturbed by an external impact, and achieves high contrast more easily, compared to the ferroelectric liquid crystal panel. Therefore, the antiferroelectric liquid crystal panel is preferable.

## <8. Eighth Embodiment>

### [Configuration of Display Unit 8]

FIG. 8 illustrates a cross-sectional configuration of a display unit 8 according to an eighth embodiment of the present disclosure. The display unit 8 has a configuration similar to the configuration of the display unit 1 according to the foregoing first embodiment except that a liquid crystal panel 27 is provided instead of the liquid crystal panel 22.

The liquid crystal panel 27 is a VA liquid crystal panel, and has a structure in which a liquid crystal layer 27C is sandwiched between a substrate 27A and a substrate 27B. The substrate 27A and the substrate 27B are made of a transparent material such as glass (including quartz), for example. Liquid crystal molecules having negative dielectric constant anisotropy may be used for the liquid crystal layer 27C.

Further, as a spacer for thickness adjustment of the liquid crystal layer 27C, for example, a spherical spacer made of silica having an average particle diameter of about 3.5 μm may be used, for example. The liquid crystal panel 27 is manufactured as follows, for example. Specifically, a solution of an optical alignment film material (a photosensitive material) having vertical alignment is so applied by spin casting that a surface of a transparent electrode (for example, ITO) formed on an inner surface of each of the substrate 27A and the substrate 27B is covered, which is thereafter burned at 180 degrees Celsius for 60 minutes. An alignment film is thus formed. Thereafter, a process such as rubbing may be performed on an as-needed basis. The optical alignment film refers to a film that is formed of a material having alignment regulating force that is varied by light application. It is to be noted that, in the present Example, a material having a photosensitive group (the photosensitive material) (a material having a 4-chalcone group (Formula 2)) was used as the alignment film material.

[Formula 2]

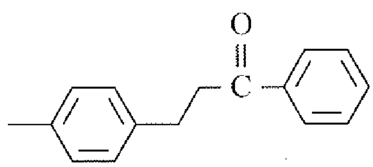

In a case where such a material having the photosensitive group is used and the alignment process by means of light application is performed while, for example, a wavelength, a light amount, an application angle, and a polarization direction are controlled, it is possible to obtain an alignment film that has, for example, a stable pre-tilt angle and a stable alignment direction by controlling, for example, a pre-tilt angle and an alignment direction of the liquid crystal molecule with high accuracy, which is preferable. The pre-tilt angle is an angle formed by a surface of the alignment film and a major axis direction of the liquid crystal molecule in the vicinity of the alignment film, in a state where no voltage is applied to the liquid crystal layer (in an OFF state, upon no voltage application). Subsequently, the alignment process by means of the light application is performed by applying polarized ultraviolet rays to the alignment film. All of the pre-tilt angles of the liquid crystal molecules in the vicinity of the alignment film are thereby set to fall between 87 degrees to 89.7 degrees. A molecule configuring the alignment film has an optical functional group (a photosensitive group) in a side chain of a polymer chain. By this alignment process, however, the optical functional groups form a dimer as a result of dimerization, thereby forms a cross-linked structure (a cross-bridging bonding structure). Further, part of the molecules configuring the alignment film is brought into cis-trans isomerization as a result of an isomerization reaction caused by the alignment process. Further, the rest of the molecules configuring the alignment film are re-aligned. Further, in the present embodiment, for example, an alignment film material may be used that is formed of a material that has at least one photosensitive group selected from groups that include a structure of one type out of other types of chalcone, cinnamate, cinnamoyl, coumarin, maleimide, benzophenone, norbornene, oryzanol, and chitosan besides the 4-chalcone group represented by Formula, as the photoreactive cross-linking functional group (which is a photosensitive group having photosensitivity, for example, photodimerized photosensitive group). Further, an optical alignment film that includes, as the photosensitive functional group, an azobenzene-based compound having an azo group, a compound having imine and aldimine in its skeleton, and/or a compound having a styrene skeleton may be used.

For example, after forming a seal and providing the spacer after forming the alignment film, the substrate 27A and the substrate 27B are attached to each other. The liquid crystal panel 27 is thus able to be fabricated. It is to be noted that the polarization plane of the light that has passed through the liquid crystal panel 27 is rotated by about 90 degrees between a state in which a voltage is applied to the liquid crystal panel 27 and a state in which no voltage is applied to the liquid crystal panel 27.

[Modification Example 1 of Display Unit 8]

The liquid crystal panel 27 may be manufactured as follows, for example. Specifically, a solution of an alignment film material having vertical alignment characteristics is so applied by spin casting that a surface of a transparent electrode (for example, ITO) formed on an inner surface of each of the substrate 27A and the substrate 27B is covered, which is thereafter burned. An alignment film is thus formed. Any alignment film having the vertical alignment characteristics may be used as the alignment film material. An alignment film configured of an organic material such as polyimide, polyamic acid, and polyorganosiloxane may be used. Thereafter, a process such as rubbing may be performed on an as-needed basis. Further, for example, after forming a seal and providing the spacer, the substrate 27A and the substrate 27B are attached to each other. Further, as the liquid crystal layer 27C, a liquid crystal composition exhibiting negative dielectric constant isotropy in which polymerizable components such as monomers and oligomers having polymerization characteristics is sealed between the substrate 27A and the substrate 27B. The monomers are polymerized in a state where the liquid crystal molecules are tilted (inclined) by means of voltage application between the substrate 27A and the substrate 27B, by which a polymer is formed. A liquid crystal molecule that is tilted at a predetermined pre-tilt angle and in a direction of the alignment is obtainable even after the voltage application is stopped. It is to be noted that all of the pre-tilt angles of the liquid crystal molecules preferably fall between 87 degrees to 89.7 degrees. A material that is polymerizable, for example, by heat or light (ultraviolet rays) is selected as the monomer. For example, a material represented by General formula (I) below may be used as the polymerizable monomer.

$$\text{P1-S1-A1-(Z1-A2)n-S2-P2} \qquad \text{(I)}$$

(In the formula, P1 and P2 are the same as each other or are different from each other and represent an acrylate group, a methacrylate group, an acrylamide group, a methacrylamide group, a vinyl group, a vinyloxy group, or an epoxy group. A1 and A2 each represent a 1,4-phenylene group, a naphthalene-2,6-diyl group, an anthracene-2,6-diyl group, or a phenanthrene-2,6-diyl group. Z1 represents COO, OCO, O, direct bonding of A1 and A2, or direct bonding of A2 and A2. "n" is 0, 1, or 2. S1 and S2 are the same as each other or are different from each other, and represent $-(CH_2)m-$ $(0 \leq m \leq 6)$, $-(CH_2-CH_2-O)m-$ $(0 \leq m \leq 6)$, direct bonding of P1 and A1, direct bonding of A1 and P2, or direct bonding of A2 and P2. A hydrogen atom included in A1 and A2 may be substituted with a halogen group or a methyl group.)

Further, a polymerization initiator such as a radical polymerization initiator for initiating the polymerization

reaction of the monomers is sometimes mixed. In a case where no radical polymerization initiator is added, the reaction speed of the polymerization reaction does not increase. This leads to a high possibility that unreacted monomers are left in the liquid crystal layer. Consequently, the unreacted monomers are slowly brought into the polymerization reaction under the influence of the light of the backlight in the general use after completion or an aging process for inspection after the assembling process. As a result, the amount of the pre-tilt angle formed through the polymerization process is varied, which may possibly influence display characteristics. For example, the following Formula 3 may be used as the radical polymerization initiator.

[Formula 3]

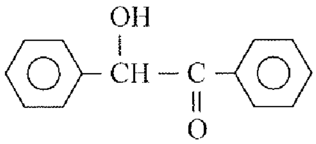

[Modification Example 2 of Display Unit 8]

Further, the liquid crystal panel 27 in the display unit 8 may be manufactured as follows, for example. Specifically, a solution of an alignment film material that has vertical alignment characteristics and includes a polymer compound having, for example, a cross-linking functional group or a photosensitive functional group as a side chain is so applied by spin casting that a surface of a transparent electrode (for example, ITO) formed on an inner surface of each of the substrate 27A and the substrate 27B is covered, which is thereafter subjected to a heating process. The temperature of the heating process is preferably equal to or higher than 80 degrees Celsius, and is more preferably equal to or higher than 150 degrees Celsius and equal to or lower than 230 degrees Celsius. Thereafter, a process such as rubbing may be performed on an as-needed basis. Further, for example, after forming a seal and providing the spacer, the substrate 27A and the substrate 27B are attached to each other. Further, a liquid crystal material is injected between the substrate 27A and the substrate 27B and the cell is sealed. Next, a voltage is applied between the substrate 27A and the substrate 27B, which causes the liquid crystal molecules to be tilted (inclined) at a predetermined angle. In that state, by applying ultraviolet rays to the alignment film, an alignment film that causes reactive cross-linking of the cross-linking functional groups of the alignment film is formed. Thus, a liquid crystal molecule that is tilted at a predetermined pre-tilt angle and in a direction of the alignment is obtainable even after the voltage application and ultraviolet ray application are stopped. It is to be noted that all of the pre-tilt angles of the liquid crystal molecules preferably fall between 87 degrees to 89.7 degrees. As the ultraviolet rays, ultraviolet rays including a lot of light components having a wavelength about 365 nm are preferable. In a case where ultraviolet rays including a lot of light components in a short wavelength range are used, the liquid crystal material is subjected to photodecomposition. This may lead to degradation. As the photoreactive cross-linking functional group (a photosensitive group having photosensitivity, for example, a photodimerized photosensitive group), for example, a group including a structure of one type of chalcone, cinnamate, cinnamoyl, coumarin, maleimide, benzophenone, norbornene, oryzanol, and chitosan can be mentioned. Further, an optical alignment film that includes an azobenzene-based compound having an azo group as the photosensitive functional group, a compound having imine and aldimine in its skeleton, or a compound having a styrene skeleton may be used.

Moreover, as illustrated in FIG. 9A, a liquid crystal molecule 27M in the liquid crystal panel 27 is preferably so inclined as to include a portion that is aligned upward from the substrate 27B toward the substrate 27A. Further, inclination in a direction perpendicular to the paper plane of FIG. 9A may be provided. In a case where the display unit that performs switching between the screen state and the mirror surface state as in the present disclosure is used in the mirror surface state, it is likely that the liquid crystal panel 27 is more often viewed from the lower position than from the upper position. It is therefore preferable that the viewing angle characteristics in a case where the mirror is viewed from the lower position are superior. As illustrated in FIG. 9B, in a case where the liquid crystal molecule 27M is pre-tilted in a direction indicated by an arrow 271 and has a portion that is aligned upward from the substrate 27B toward the substrate 27A upon application of no electric field, the liquid crystal molecule 27M is rotated in a direction indicated by an arrow 272, i.e., upward, upon application of an electric field (the liquid crystal molecule 27M falls in a direction of causing retardation), which is preferable.

In contrast, as illustrated in FIG. 9C, in a case where the liquid crystal molecule 27M is pre-tilted in the direction indicated by the arrow 271 and has a portion that is aligned downward from the substrate 27B toward the substrate 27A upon application of no electric field, the liquid crystal molecule 27M is rotated in the direction indicated by the arrow 272, i.e., downward, upon application of an electric field (the liquid crystal molecule 27M falls in a direction of canceling retardation). Accordingly, it is not so preferable in terms of the viewing angle characteristics. It is to be noted that not all of the liquid crystal molecules 27M included in the liquid crystal layer 27C are aligned upward from the substrate 27B toward the substrate 27A, and part of the liquid crystal molecules 27M may be aligned upward in such a manner.

[Workings and Effects of Display Unit 8]

Also in the display unit 8, it is possible to perform the switching between the screen state (the image display mode) and the mirror surface state (the external light reflection mode) by the display switching section 20 as in the foregoing first embodiment. Further, the hue b* value of the absorption-type polarization plate 23 in the display switching section 20 is set to be equal to or smaller than the hue b* values of the respective absorption-type polarization plates 11 and 14 in the display section 10. Accordingly, it is possible to suppress the coloring (in particular, the coloring in yellow) in the display image and the reflected image that is visually recognized by the viewer.

In the display unit 8, the liquid crystal panel 27 of the VA liquid crystal mode is used as the switchable transmission polarization axis member. The VA liquid crystal panel easily achieves a high contrast ratio, which is preferable. Further, in a case where stress is applied to the absorption-type polarization plate 23 in the display section switching section 20, black floating is less likely to be caused, compared to other liquid crystal modes (for example, the IPS mode), which is preferable. Further, a pre-tilt at predetermined alignment is provided for the liquid crystal molecule in the liquid crystal layer 27C. When an electric filed is applied to perform switching of the liquid crystal molecule, a direction in which the liquid crystal responds is determined by the pre-tilt. This suppresses, for example, a leakage of light resulting from falling of the liquid crystal in different directions (occurrence of a defect), or a delay in response. As a result, the reaction speed is improved, which is preferable.

<9. Application Examples (Electronic Apparatus)>

Next, referring to FIG. 10, an electronic apparatus 100 provided with the display unit 1 is described. FIG. 8 is a schematic view of an overall configuration of the electronic apparatus 100.

The electronic apparatus 100 includes the display unit 1 according to the foregoing first embodiment. FIG. 10 is a block diagram schematically illustrating a display control system of the display unit 100 disposed inside the electronic apparatus 100. The electronic apparatus 100 includes, besides the display unit 1, a display driving section 13X, an illumination driving section 15X, and a switching driving section 22X. The electronic apparatus 100 further includes a controlling section 100X that controls the display driving section 13X, the illumination driving section 15X, and the switching driving section 22X. All of the components described above may be disposed inside the display unit 1, or may be disposed outside the display unit 1, i.e., in a region other than the display unit 1 inside the electronic apparatus 100. Alternatively, part of the components may be disposed inside the display unit 1, and the rest of the components may be disposed inside the electronic apparatus 100 other than the display unit 1.

The display driving section 13X drives the liquid crystal panel 13 provided in the display section 10 in the display unit 1. The display driving section 13X supplies a driving voltage for driving each of a plurality of pixel regions configured in a liquid crystal driving region of the liquid crystal panel 13. For example, in the multiplex drive scheme or the active drive scheme, respective scanning signals and respective data signals corresponding to these scanning signals are supplied to a common terminal (a scanning line terminal) and a segment terminal (a data line terminal) in the liquid crystal panel 13 in synchronization. Display data such as image data is transmitted from a main circuit in the electronic apparatus 100 to this display driving section 13X via the controlling section 100X.

The illumination driving section 15X drives the backlight 15 in the display section 10. More specifically, the illumination driving section 15X controls power supply to the backlight 15. For example, the illumination driving section 15X so functions as to perform switching between an ON state and an OFF state of the backlight 15.

The switching driving section 22X drives the liquid crystal panel 22 provided in the display switching section 20. The switching driving section 22X controls an application voltage to be supplied to the liquid crystal panel 22, and determines whether a voltage of a threshold or greater is applied to a pair of transparent electrodes that face the liquid crystal panel 22.

The controlling section 100X controls each of the display driving section 13X, the illumination driving section 15X, and the switching driving section 22X, and performs control instruction and data transmission with respect to each of the sections, for example. For example, in a case where the display switching section 20 is brought into the image display mode to cause the display unit 1 to be in the screen state, the liquid crystal panel 13 is driven by the display driving section 13X to perform image display while the liquid crystal panel 22 is controlled by the switching driving section 22X to cause the display switching section 20 to be in the transmission state. In contrast, in a case where the display switching section 20 is brought into the external light reflection mode to cause the display unit 1 to be in the mirror surface state, the liquid crystal panel 22 is controlled by the switching driving section 22X to bring the display switching section 20 in the external light reflection mode while the liquid crystal panel 13 is caused to be in a completely-shut-down state (a shutter closed state) by the display driving section 13X or the backlight 15 is turned off by the illumination driving section 15X.

As described above, according to the electronic apparatus 100 of the present disclosure, the display unit 1 described above is provided. It is therefore possible to reduce the coloring (in particular, the coloring in yellow) in the

display image and the reflected image that are visually recognized by the viewer. Hence, according to the electronic apparatus 100, it is possible to exhibit superior display performance in any of the screen state (the image display mode) and the mirror surface state (the external light reflection mode).

As the electronic apparatus 100, for example, a television apparatus, a digital camera, a laptop personal computer, a mobile phone, a smartphone, a portable terminal device such as a tablet terminal device, or a video camera can be mentioned. In other words, it is possible to apply the foregoing display unit to an electronic apparatus in various fields that displays, as an image or a picture, an image signal inputted from outside or an image signal generated internally.

<10. Experimental Examples>

[Experimental Example 1]

(Experimental Example 1-1)

A sample of the display unit 1 according to the first embodiment described above was fabricated, and chromaticity of the sample in the screen state was measured. It is to be noted that a display color analyzer CA-210 from Konica Minolta Japan, Inc. was used for the measurement of the chromaticity. A result thereof is illustrated in FIG. 11. In FIG. 11, a horizontal axis represents chromaticity x and a vertical axis represents chromaticity y. It is to be noted that FIG. 11 also illustrates a result of the measurement of chromaticity for only the display section 10 together. It is to be noted that SKW-18245T having a hue b* value of 0.43 from Polatechno Co., Ltd. was used as the absorption-type polarization plate 23 in the display switching section 20, and SKN-18243T having a hue b* value of 3.55 from Polatechno Co., Ltd. was used as the absorption-type polarization plates 11 and 14 in the display section 10.

(Experimental Example 1-2)

A sample of the display unit 1 was fabricated in a manner similar to that in Experimental example 1-1 except that SRCZ4QJ having a hue b* value of 4.0 from Sumitomo Chemical Co., Ltd. was used as the absorption-type polarization plate 23 in the display switching section 20, and SKN-18243T having a hue b* value of 3.55 from Polatechno Co.,Ltd. was used as each of the absorption-type polarization plates 11 and 14 in the display section 10. The sample was also subjected to measurement of chromaticity. FIG. 9 also illustrates the result together.

As illustrated in FIG. 9, the chromaticity y was 0.3042 in Experimental example 1-2 while the chromaticity y was 0.2932 in Experimental example 1-1. Further, the chromaticity y only of the display section 10 was 0.288. That is, it was possible to greatly suppress an increase in chromaticity y due to the addition of the display switching section 20, compared to that in Experimental example 1-2. Accordingly, it was confirmed that the coloring in yellow in particular was suppressed by setting the hue b* value of the absorption-type polarization plate 23 in the display switching section 20 to be equal to or smaller than the hue b* values of the absorption-type polarization plates 11 and 13 in the display section 10.

[Experimental Example 2]

(Experimental Example 2-1)

A sample of the display unit 1 according to the first embodiment described above was fabricated. Here, the polarization reflection film DBEF (from 3M United States) was used as the reflection-type polarization plate 21. Further, SKW-18245T having a hue b* value of 0.43 from Polatechno Co.,Ltd. was used as the absorption-type polarization plate 23, and SRCZ4QH having a hue b* value of 3.2 from Sumitomo Chemical Co., Ltd. was used as the absorption-type polarization plates 11 and 14. Further, an optical transparent adhesive sheet LUCIAS CS9864US having a thickness of 100 $\mu$m from Nitto Denko Corporation was used as each of the resin layers 31 to 33.

(Experimental Example 2-2)

A sample of the display unit 1 was fabricated in a manner similar to that in Experimental example 2-1 except that a highly-transparent baseless tape CTL-NC105 having a thickness of 25 $\mu$m from Lintec Corporation was used as each of the resin layers 31 to 33.

(Experimental Example 2-3)

A sample of the display unit 1 was fabricated in a manner similar to that in Experimental example 2-1 except that the highly-transparent baseless tape CTL-NC103 having a thickness of 15 $\mu$m from Lintec Corporation was used

as each of the resin layers 31 to 33.

(Experimental Example 2-4)

A sample of the display unit 1 was fabricated in a manner similar to that in Experimental example 2-1 except that a highly-transparent baseless tape CTL-NC100 series having a thickness of 5 μm from Lintec Corporation was used as each of the resin layers 31 to 33.

A Wd value of orange peel (a measurement wavelength from 3 mm to 10 mm) was measured for each of these samples in Experimental examples 2-1 to 2-4. It is to be noted that a portable orange peel meter from BYK-Gardner was used for the measurement of the Wd value of orange peel. The result is illustrated in FIG. 12. In FIG. 12, a horizontal axis represents the thicknesses (μm) of the resin layers 31 to 33, and a vertical axis represents the Wd value of orange peel.

As illustrated in FIG. 12, the Wd value of orange peel was 7.5 in the case where the thickness of each of the resin layers 31 to 33 was 25 μm (Experimental example 2-2), was 7.8 in the case where the thickness of each of the resin layers 31 to 33 was 15 μm (Experimental example 2-3), and was 3 in the case where the thickness of each of the resin layers 31 to 33 was 5 μm (Experimental example 2-4), while the Wd value of orange peel was 21 in the case where the thickness of each of the resin layers 31 to 33 was 100 μm (Experimental example 2-1). Accordingly, it was found that a blur and the Wd value of orange peel were greatly suppressed by setting the thickness of each of the resin layers 31 to 33 to 25 μm or smaller. It was also found that it was more preferable that the thickness of each of the resin layers 31 to 33 is set to 5 μm or smaller.

[Experimental Example 3]

(Experimental Example 3-1)

Next, a sample of the liquid crystal panel 22 in the display unit 1 according to the first embodiment described above was fabricated using the liquid crystal of TN mode as the liquid crystal layer 22C. Here, a retardation value Δn·d was set to 0.36 μm.

(Experimental Example 3-2)

A sample of the liquid crystal panel 22 in the display unit 1 was fabricated that has a configuration similar to that in Experimental example 3-1 except that the retardation value Δn·d was set to 0.45 μm.

(Experimental Example 3-3)

A sample of the liquid crystal panel 22 was fabricated that has a configuration similar to that in Experimental example 3-1 except that the retardation value Δn·d was set to 0.54 μm.

Simulation of wavelength dependence of transmittance (wavelength was from 380 nm to 500 nm) was performed for each of these samples in Experimental examples 3-1 to 3-3. The result is illustrated in FIG. 13. In FIG. 13, a horizontal axis represents the wavelength (μm), and a vertical axis represents the transmittance.

It is likely that the coloring in the yellow direction occurs when the transmittance on the short wavelength side in the visible light range is decreased. As illustrated in FIG. 11, the transmittance is not greatly varied in the case where the Δn·d of the liquid crystal layer 22C is 0.36 μm (Experimental example 3-1) and 0.45 μm (Experimental example 3-2); however, the transmittance in 420 μm to 480 μm is slightly decreased in the case where the Δn·d is 0.54 μm (Experimental example 3-3). Accordingly, it was found that a decrease in transmittance for wavelength light in 380 nm from 500 nm was further suppressed in the case where the Δn·d was set within a range that was equal to or greater than 0.36 μm and smaller than 0.54 μm. In other words, in the case where the retardation value Δn·d of the liquid crystal layer 22C was equal to or greater than 0.36 μm and smaller than 0.54 μm, it was possible to cause, for example, the display image and the reflected image to be brighter in addition to that it is possible to reduce the coloring, for example, in the screen state and the mirror surface state formed by the display section 10.

[Experimental Example 4]

(Experimental Example 4-1)

Next, a sample of the liquid crystal panel 22 in the display unit 1 according to the first embodiment described above was fabricated using the liquid crystal of TN mode as the liquid crystal layer 22C. Here, retardation Δn of the liquid crystal layer 22C with respect to the wavelength light of 550 nm was set to 0.09.

(Experimental Example 4-2)

A sample of the liquid crystal panel 22 was fabricated that has a configuration similar to that in Experimental example 4-1 except that the retardation Δn of the liquid crystal layer 22C with respect to the wavelength light of 550 nm was set to 0.10.

(Experimental Example 4-3)

A sample of the liquid crystal panel 22 was fabricated that has a configuration similar to that in Experimental example 4-1 except that the retardation Δn of the liquid crystal layer 22C with respect to the wavelength light of 550 nm was set to 0.12.

(Experimental Example 4-4)

A sample of the liquid crystal panel 22 was fabricated that has a configuration similar to that in Experimental example 4-1 except that the retardation Δn of the liquid crystal layer 22C with respect to the wavelength light of 550 nm was set to 0.14.

Simulation of wavelength dependence of transmittance (wavelength was from 380 nm to 500 nm) was performed for each of these samples in Experimental examples 4-1 to 4-4. The result is illustrated in FIG. 14. In FIG. 14, a horizontal axis represents the wavelength (μm), and a vertical axis represents the transmittance.

It is likely that the coloring in the yellow direction occurs when the transmittance on the short wavelength side in the visible light range is decreased. As illustrated in FIG. 12, the transmittance is not greatly varied in the case where the retardation Δn of the liquid crystal layer 22C with respect to the wavelength light of 550 nm is from 0.09 to 0.12 (Experimental examples 4-1 to 4-3); however, the transmittance in 420 μm to 500 μm is slightly decreased in the case where the retardation Δn is 0.14 (Experimental example 4-4). Accordingly, it was found that a decrease in transmittance for wavelength light in 420 nm to 500 nm was further suppressed in the case where the retardation Δn was set within a range that was equal to or greater than 0.09 and smaller than 0.14. In other words, in the case where the retardation Δn of the liquid crystal layer 22C with respect to the wavelength light of 550 nm was equal to or greater than 0.09 and smaller than 0.14, it was possible to cause the reflected image to be brighter in addition to that it was possible to reduce the coloring in the mirror surface state.

The present disclosure has been described above referring to some embodiments; however, the present disclosure is not limited to the embodiments described above, and is variously modifiable. For example, the materials, the thicknesses, etc. of the respective layers described in the foregoing embodiments are mere examples and non-limiting. Other materials and other thicknesses may be employed. For example, the Δn·d of the liquid crystal layer 22C may be set to be equal to or greater than 0.54 μm and equal to or smaller than 1.7 μm. Further, the retardation Δn of the liquid crystal layer 22C with respect to the wavelength light of 550 nm may be set to fall within a range that is equal to or greater than 0.07 and smaller than 0.09 or within a range that is equal to or greater than 0.14 and equal to or smaller than 0.16.

Further, a polarization conversion member may be disposed between the display section 10 and the display switching section 20. For example, a retardation plate may be used as the polarization conversion member. The retardation plate may be a half-wave retardation plate. In that case, when the polarized light outputted from the display section 10 passes through the polarization conversion member (for example, the half-wave retardation plate), that polarized light is converted into the second linearly-polarized light having the oscillation plane that is orthogonal to the first linearly-polarized light. In a case where the polarization absorption axis of the polarization member (the absorption-type polarization plate 11) that is close to the display switching section in the display section 10 and the polarization absorption axis of the reflection-type polarization member (the reflection-type polarization plate 21) in the display switching section 20 are different from each other by 90 degrees, it is possible to cause the polarization absorption axis of the absorption-type polarization plate 11 in the display section 10 and the polarization absorption axis of the reflection-type polarization plate 21 in the display switching section 20 to coincide with each other by disposing the polarization conversion member between the display section 10 and the display switching section 20.

Moreover, for example, the description has been given specifically referring to the configurations of the display units 1 to 7 and the electronic apparatus 100 in the foregoing embodiments; however, it is not necessary to provide all of the components, and other components may be also provided.

<11. Ninth Embodiment>

[Configuration]

FIG. 15 illustrates an example of a schematic configuration of a display unit 101 according to a ninth embodiment

of the present disclosure. The display unit 101 is a so-called mirror display, and has a function of performing alternate switching between a mirror state and a display state. The display unit 101 includes a display section 110, a display switching section 120, and a driving circuit 130, for example. The display section 110 corresponds to one specific example of a "display section" in the present disclosure. The display switching section 120 corresponds to one specific example of an "optical device" in the present disclosure.

FIG. 16 illustrates an example of a cross-sectional configuration of the display section 110 and the display switching section 120. (A) of FIG. 17 and (A) of FIG. 18 each conceptually illustrate an example of workings of the display section 10 and the display switching section 120 in a case where a voltage is applied to the display switching section 120 (when the voltage in ON). (B) of FIG. 17 and (B) of FIG. 18 each conceptually illustrate an example of workings of the display section 110 and the display switching section 120 in a case where no voltage is applied to the display switching section 120 (when the voltage is OFF).

(Display Section 110)

The display section 110 has an output surface 110A that outputs linearly-polarized light as image light. The display section 110 has a polarization plate on the output surface 110A, for example. This polarization plate is an absorption-type polarization plate that has a polarization axis AX3, and absorbs light having a polarization component that is orthogonal to the polarization axis AX3. The display section 110 outputs, from the output surface 110A, image light L102 having a polarization axis ax2 that is parallel to the polarization axis AX3 on the basis of an image signal Vsig and a timing signal TP that are supplied from the driving circuit 130, for example. The display section 110 is configured to include a liquid crystal panel in which the foregoing polarization plate is provided on the output surface 110A, for example. A display state of the liquid crystal panel used for the display section 110 is in the TN (Twisted Nematic) mode, the VA (Vertical Alignment) mode, the IPS (In Plane Switching) mode, the FFS (Fringe Field Switching) mode, the STN (Super Twisted Nematic) mode, or the ECB (Electrically Controlled Birefringence) mode, for example. The liquid crystal panel used for the display section 110 may be a light-emission-type panel that has a backlight or may be a reflection-type panel without a backlight. The display section 110 may also be an organic EL panel in which the foregoing polarization plate is provided on the output surface 110A.

(Display Switching Section 120)

The display switching section 120 is attached to the display section 110 with the output surface 110A in between, for example. The display switching section 120 has a polarization control layer 122, a polarization layer 121 disposed on one surface side of the polarization control layer 122, as well as a first reflection layer 123 and a second reflection layer 124 that are disposed on the other surface side of the polarization control layer 122. The first reflection layer 123 and the second reflection layer 124 are disposed on the display section 110 side in a positional relationship with the polarization control layer 122. The polarization control layer 122 corresponds to one specific example of a "polarization control layer" in the present disclosure. The polarization layer 121 corresponds to one specific example of a "polarization layer" in the present disclosure. The first reflection layer 123 corresponds to one specific example of a "first reflection layer" in the present disclosure. The second reflection layer 124 corresponds to one specific example of a "second reflection layer" in the present disclosure.

The polarization control layer 122 electrically switches a polarization state of light that enters the polarization control layer 122, on the basis of a switching voltage Vsw supplied from the driving circuit 130, for example. The switching voltage Vsw may be a constant direct current voltage, or may be a voltage that is varied cyclically. The polarization control layer 122 so performs a polarization control that the display switching section 120 is brought into the mirror state in a case where the switching voltage Vsw is applied, for example. The polarization control layer 122 so performs a polarization control that the display switching section 120 is brought into the display state in a case where the switching voltage Vsw is not applied, for example. In other words, the polarization control layer 122 so performs a polarization control that the display switching section 120 is brought into the mirror state or the display state on the basis of the switching voltage Vsw supplied from the driving circuit 130. Here, the mirror state refers to a state in which entering light (polarized light L101') from the polarization layer 121 side is reflected by the first reflection layer 123. Further, the display state refers to a state in which entering light (the image light L102) from the display section 110 side is allowed to pass through by the display switching section 120.

The polarization control layer 122 controls polarization of light entering from the polarization layer 121 side or the first reflection layer 123 side on the basis of the control performed by the driving circuit 130. The polarization control layer 122 so controls polarization of light that has entered the polarization control layer 122 that the polarization axis of the light that has entered the polarization control layer 122 is varied by an angle of an odd multiple of 90 degrees or is not varied substantially, on the basis of the control performed by the driving circuit 130. The polarization control layer 122 controls the polarization of the light that has entered from the polarization layer 121 side that a polarization axis (a

polarization axis ax1 of the polarized light L101') of the light that has entered from the polarization layer 121 side is parallel or orthogonal to a polarization axis AX2 of the first reflection layer 123, on the basis of the control performed by the driving circuit 130. The polarization control layer 122 controls the polarization of the light that has entered from the first reflection layer 123 side that a polarization axis (the polarization axis ax2 of the image light L102) of the light that has entered from the first reflection layer 123 side is parallel or orthogonal to a polarization axis AX1 of the polarization layer 121, on the basis of the control performed by the driving circuit 130.

The polarization control layer 122 is configured to include a liquid crystal layer 122A and a pair or a plurality of pairs of light transmissive electrodes 122B and 122C that sandwich the liquid crystal layer 122A in between, for example. A display state of the liquid crystal layer 122A is in the TN (Twisted Nematic) mode, the ECB (Electrically Controlled Birefringence) mode, the STN (Super Twisted Nematic) mode, the BTN (Bistable Twisted Nematic) mode, the ferroelectric liquid crystal mode, or the antiferroelectric liquid crystal mode, for example.

As illustrated in (A) of FIG. 17 and (A) of FIG. 18, for example, the liquid crystal layer 122A allows the light that has entered the liquid crystal layer 122A to pass through as it is without rotating its polarization axis when a voltage is applied to the pair or the plurality of pairs of the light transmissive electrodes 122B and 122C. As illustrated in (B) of FIG. 17 and (B) of FIG. 18, for example, the liquid crystal layer 122A varies the polarization axis of the light that has entered the liquid crystal layer 122A by an angle of an odd multiple of 90 degrees when no voltage is applied to the pair or the plurality of pairs of the light transmissive electrodes 122B and 122C.

The light transmissive electrodes 122B and 122C are each a sheet-like electrode for applying an electric field to the entire liquid crystal layer 122, for example. The light transmissive electrodes 122B and 122C are each configured of a material that allows the polarized light L101' and the image light L102 to pass through, and is configured of ITO (Indium Tin Oxide), for example. Edges of the light transmissive electrodes 122B and 122C are preferably provided outside of a region that faces the first reflection layer 123.

The polarization layer 121 has the polarization axis AX1 (a transmission axis). The polarization layer 121 allows a polarization component that is parallel to the polarization axis AX1 to pass through and absorbs a polarization component that is orthogonal to the polarization axis AX1 in light entering the polarization layer 121. The polarization axis AX1 of the polarization layer 121 is orthogonal to the polarization axis AX2 of the first reflection layer 123 as illustrated in (A) of FIG. 17 and (B) of FIG. 17, for example. It is to be noted that the polarization axis AX1 of the polarization layer 121 may be parallel to the polarization axis AX2 of the first reflection layer 123 as illustrated in (A) of FIG. 18 and (B) of FIG. 18, for example.

The first reflection layer 123 is disposed between the polarization control layer 122 and the second reflection layer 124. The first reflection layer 123 is configured of a reflective polarization layer. The reflective polarization layer that is used for the first reflection layer 123 has the polarization axis AX2 (the transmission axis) that is parallel or orthogonal to the polarization axis AX1 of the polarization layer 121. The reflective polarization layer that is used for the first reflection layer 123 allows a polarization component that is parallel to the polarization axis AX2 to pass through and reflects a polarization component that is orthogonal to the polarization axis AX2 in light entering the first reflection layer 123. The polarization axis AX2 is parallel to the polarization axis ax2 of the image light L102. Accordingly, the first reflection layer 123 allows the image light L102 or linearly-polarized light having a polarization axis that is parallel to the polarization axis ax2 of the image light L102 to pass through, and reflects linearly-polarized light having a polarization axis that is orthogonal to the polarization axis ax2 of the image light L102.

The first reflection layer 123 is configured of a multi-layer reflective birefringent polarization film disclosed in the specification of International Publication WO95/27919 or a cholesteric liquid crystal layer sandwiched by a pair of quarter-wave retardation plates, for example. DBEF (registered trademark of 3M Company) can be mentioned as the multi-layer reflective birefringent polarization film described above, for example.

The second reflection layer 124 is disposed on the display section 120 side in a positional relationship with the first reflection layer 123. The second reflection layer 124 has a single or a plurality of openings 124A. The single or the plurality of openings 124A have a shape that is not particularly limited. For example, the shape of the single or the plurality of openings 124A is a rectangular shape, any polygonal shape, a circular shape, an elliptical shape, or a shape of a combination thereof. The single or the plurality of openings 124A are filled with airspace (atmosphere), for example. It is to be noted that the single or the plurality of openings 124A may be filled with an adhesive layer 127 or an adhesive layer 140 which is described later. The second reflection layer 124 has a reflection surface 124B at a position surrounding the single or the plurality of openings 124A. The reflection surface 124B is formed at least on a surface on the polarization control layer 122 side out of the surface on the polarization control layer 122 side and the surface on the display section 120 side of the second reflection layer 124. For example, as illustrated in FIGs. 16 to 18, in a case where the second reflection layer 124 has the single opening 124, the reflection surface 124B is a circular reflection surface that is provided on the periphery of the single opening 124A and along an outer edge of the first reflection layer 123. In this case, the single opening 124A is smaller than the polarization plate 121, the polarization control layer 122, and the first reflection layer 123. In other words, the reflection surface 124B is disposed at least at a position that faces the first reflection layer 123. Further, the single opening 124A may be as large as the output surface 110A of the display section 110, or may

be smaller than the output surface 110A of the display section 110.

FIG. 19 illustrates an example of a planar configuration of the second reflection layer 124. In a case where the second reflection layer 124 has the plurality of openings 124A, the shapes of the respective openings 124A may be different from each other. For example, as illustrated in FIG. 19, one of the openings 124A may have a circular shape, and the other of the openings 124A may have a rectangular shape.

The second reflection layer 124 is configured of a metallic reflection layer, a multi-layered reflection layer, or a reflective polarization layer, for example. FIG. 20 illustrates an example of the planar configuration of the second reflection layer 124 in a case where the reflective polarization layer is used as the second reflection layer 124. The reflective polarization layer used for the second reflection layer 124 has the polarization axis AX3 (the transmission axis) that is orthogonal to the polarization axis AX2 (the transmission axis) of the first reflection layer 123. The reflective polarization layer used for the second reflection layer 124 allows a polarization component that is parallel to the polarization axis AX3 to pass through and reflects a polarization component that is orthogonal to the polarization axis AX3 in the light that enters the second reflection layer 124. The polarization axis AX3 is orthogonal to the polarization axis AX2 (the transmission axis) of the first reflection layer 123 as described above. Accordingly, the reflective polarization layer used for the second reflection layer 124 reflects light that has passed through the first reflection layer 123 (the linearly-polarized light).

The reflective polarization layer used for the second reflection layer 124 is configured of the reflective birefringent polarization film disclosed in the specification of International Publication WO95/27919 or a cholesteric liquid crystal layer sandwiched by a pair of quarter-wave retardation plates, for example. DBEF (registered trademark of 3M Company) can be mentioned as the reflective birefringent polarization film described above, for example.

FIG. 21 illustrates an example of wavelength dependence of luminance of the light that has passed through the respective reflective polarization layers when non-polarized light having predetermined light intensity is applied to three reflective polarization layers that are suitable to be used as the first reflection layer 123 and the second reflection layer 124. The luminance on a vertical axis of FIG. 21 is represented by a rate (%) in a case where the luminance of the applied light is 100%. FIG. 21 illustrates a result of measurement that is performed under a condition that the three reflective polarization layers that are formed of the same material are set as targets of the measurement.

The reflective polarization layers used as the first reflection layer 123 and the second reflection layer 124 are configured of the same material as each other, for example. In this case, a reflective polarization layer having a difference in luminance (%) illustrated in FIG. 21 that is equal to or less than 10% in the wavelength range (for example, a wavelength range including 450 nm, 550 nm, and 650 nm) of the polarized light 101' and the image light L102 is preferably used as the first reflection layer 123 and the second reflection layer 124, for example. It is to be noted that the reflective polarization layers used as the first reflection layer 123 and the second reflection layer 124 may be configured of materials different from each other. In this case, a reflective polarization layer having a difference in luminance (%) illustrated in FIG. 21 that is greater than 10% in the wavelength range (for example, a wavelength range including 450 nm, 550 nm, and 650 nm) of the polarized light 101' and the image light L102 is preferably used as the first reflection layer 123 and the second reflection layer 124, for example.

The display switching section 120 is configured of a stack in which respective layers are stacked with adhesive layers, as illustrated in FIG. 16, for example. The polarization layer 121 and the polarization control layer 122 are attached to each other with an adhesive layer 125, for example. The polarization control layer 122 and the first reflection layer 123 are attached to each other with an adhesive layer 126, for example. The first reflection layer 123 and the second reflection layer 124 are attached to each other with an adhesive layer 127, for example. Further, the display section 110 and the display switching section 120 are attached to each other with an adhesive layer 140, for example. The adhesive layer 125, the adhesive layer 126, the adhesive layer 127, and the adhesive layer 140 are configured of a light transmissive adhesive agent, and are preferably configured of an adhesive agent that has small haze and small hue. It is to be noted that the display switching section 120 may include the respective layers that are so disposed as to face each other with airspace in between as illustrated in FIG. 17 and FIG. 18, for example.

(Driving Circuit 130)

Next, the driving circuit 130 is described. For example, as illustrated in FIG. 15, the driving circuit 130 includes a signal processing circuit 131, a timing generating circuit 132, a driver 133, and a display switching controlling circuit 134. The display switching controlling circuit 134 corresponds to one specific example of a "controlling section" in the present disclosure.

The signal processing circuit 131, the timing generating circuit 132, and the driver 133 control the display section 110. The signal processing circuit 131 generates an image signal DA for the display section 110 on the basis of an image signal Din, and outputs the generated image signal DA to the driver 133, for example. The timing generating circuit 132 generates a timing pulse TP for controlling horizontal and vertical writing transmission that also serves as a driving timing pulse for the display section 110, on the basis of a horizontal synchronization signal and a vertical synchronization signal

included in a control signal Tin. The timing generating circuit 132 outputs, to the display section 110, the generated timing pulse TP at predetermined timing, for example. For example, in a case where a switching signal Ss is supplied from the display switching controlling circuit 134, the timing generating circuit 132 outputs, to the display section 110, the generated timing pulse TP at timing based on the switching signal Ss, for example. The timing generating circuit 132 further generates a clock CLK for the driver 133, and outputs the generated clock CLK to the driver 133.

The driver 133 has a sample and hold circuit, a D/A conversion circuit, and a driver circuit, for example. The sample and hold circuit performs a parallelization process on the serial digital image signal DA, and performs expansion into a plurality of parallel image signals. The sample and hold circuit outputs, to the D/A conversion circuit, the image signals that have been subjected to phase expansion at timing based on the clock CLK from the timing generating circuit 32. The D/A conversion circuit converts the image signals (the image signals that have been subjected to phase expansion) supplied from the sample and hold circuit into analog signals, and outputs the analog signals to the driver circuit. The driver circuit outputs the analog image signal Vsig to the display section 110 at predetermined timing based on the clock CLK outputted from the timing generating circuit 132.

The display switching controlling circuit 134 controls the display switching section 120. The display switching controlling circuit 134 so controls the polarization control layer 122 that the polarization axis ax1 of the polarized light L101' that has entered the polarization control layer 122 from the polarization layer 121 side to be parallel or orthogonal to the polarization axis AX2 of the first reflection layer 23. The display switching controlling circuit 134 generates the switching voltage Vsw from a switching signal Sin, and outputs the generated switching voltage Vsw to the display switching section 120 at predetermined timing. The switching voltage Vsw is a driving voltage for switching the display switching section 120 from the mirror state to the display state or for switching the display switching section 120 from the display state to the mirror state. For example, the display switching controlling circuit 134 so outputs the switching signal Ss to the timing generating circuit 132 in synchronization with the output timing of the switching voltage Vsw that the output of the image light L102 from the display section 110 is started at timing at which the display switching section 120 is switched from the mirror state to the display state. For example, the display switching controlling circuit 134 so outputs the switching signal Ss to the timing generating circuit 132 in synchronization with the output timing of the switching voltage Vsw that the output of the image light L102 from the display section 110 is stopped at timing at which the display switching section 120 is switched from the display state to the mirror state.

[Operation]

Next, an example of an operation of the display unit 101 is described.

(Display State)

The switching signal Sin for performing the switching from the mirror state to the display state is supplied to the display switching controlling circuit 134. In response thereto, the display switching controlling circuit 134 generates the switching voltage Vsw from the switching signal Sin, and outputs the generated switching voltage Vsw to the display switching section 120 at predetermined timing. The display switching controlling circuit 134 further generates the switching signal Ss from the switching signal Sin, and outputs the generated switching signal Ss to the timing generating circuit 132 in synchronization with the output timing of the switching voltage Vsw. On the basis of the switching signal Ss, the timing generating circuit 132 outputs the timing pulse TP to the display section 110 at the predetermined timing, and outputs the clock CLK to the driver 133 at the predetermined timing. The driver 133 generates the image signal Vsig from the image signal DA supplied from the signal processing circuit 131, and outputs the generated image signal Vsig to the display section 110.

When the switching voltage Vsw is supplied to the display switching section 120, the display switching section 120 is switched from the mirror state to the display state. At this time, when the non-polarized external light L101 enters the polarization layer 121, a polarization component that is parallel to the polarization axis AX1 out of the external light L101 passes through the polarization layer 121, and the light after passing through the polarization layer 121 (the polarized light L101') passes through the polarization control layer 122 and the first reflection layer 123, as illustrated in (B) of FIG. 17 and (A) of FIG. 18, for example. Light that has entered the reflection surface 124B of the second reflection layer 124 out of the light after passing through the first reflection layer 123 (the polarized light L101') is reflected by the reflection surface 124B, and is outputted to the outside via the first reflection layer 123, the polarization control layer 122, and the polarization layer 121. Light that has entered the single or the plurality of openings 124A of the second reflection layer 124 out of the light (the polarized light L101') that has passed through the first reflection layer 123 enters the output surface 110A of the display section 110 via the single or the plurality of openings 124A. In a case where the display section 110 is provided with a light-emission-type panel, the image light L102 having the polarization axis ax2 is outputted from the output surface 110A irrelevant to the light entering the output surface 110A. In a case where the display section 110 is provided with a reflection-type panel, the light (the polarized light L101') that has entered the

output surface 110A is reflected and modulated by the reflection-type panel of the display section 110. As a result, the image light L102 is outputted from the output surface 110A. The image light L102 outputted from the output surface 110A is outputted to the outside via the single or the plurality of openings 124A, the first reflection layer 123, the polarization control layer 122, and the polarization layer 121. At this time, the user feels as if an image emerges in a mirror upon viewing the display switching section 120, for example.

(Mirror State)

The switching signal Sin for performing switching from the display state to the mirror state is supplied to the display switching controlling circuit 134. In response thereto, the display switching controlling circuit 134 generates the switching voltage Vsw from the switching signal Sin, and outputs the generated switching voltage Vsw to the display switching section 120 at predetermined timing. The display switching controlling circuit 134 further outputs a signal that stops calculations in the signal processing circuit 131, the timing generating circuit 132, and the driver 133 to the signal processing circuit 131, the timing generating circuit 132, and the driver 133 in synchronization with the output timing of the switching voltage Vsw. In response thereto, the signal processing circuit 131, the timing generating circuit 132, and the driver 133 stop the calculations.

As a result of the supply of the switching voltage Vsw, the display switching section 120 is switched from the display state to the mirror state. At this time, when the non-polarized external light L101 enters the polarization layer 121, a polarization component that is parallel to the polarization axis AX1 out of the external light L101 passes through the polarization layer 121, and light (the polarized light L101') after passing through the polarization layer 121 passes through the polarization control layer 122, is thereafter reflected by the first reflection layer 123, and is outputted to the outside via the polarization control layer 122 and the polarization layer 121, as illustrated in (A) of FIG. 17 and (B) of FIG. 18, for example. It is to be noted that, even in a case where the image light L102 is outputted from the output surface 110A, the image light L102 is absorbed by the polarization layer 121. At this time, the user feels as if the user is looking at a mirror upon viewing the display switching section 120, for example.

[Effects]

Next, effects of the display unit 101 are described.

In a case where it is desired to perform switching only in a certain region or to perform display in a specific shape upon performing the switching of the image light, for example, it is necessary to provide the electrode of the liquid crystal panel for switching with a shape based on, for example, its use or its purpose. In such a case, however, it is necessary to perform photolithography with changing masks for the uses or the purposes upon forming the electrode of the liquid crystal panel for switching. This greatly increases the manufacturing cost.

In contrast, in the display unit 101, the switching between the mirror state and the display state is performed by a polarization control by the polarization control layer 122. In the mirror state, the polarization control layer 122 is so controlled that the polarization axis ax1 of the polarized light L101' that has entered the polarization control layer 122 from the polarization layer 121 side is orthogonal to the polarization axis AX2 of the first reflection layer 123. Accordingly, in the mirror state, the light that has entered the polarization layer 121 is reflected by the first reflection layer 123 and returns. Therefore, the surface of the display switching section 120 functions as a mirror for the user. In the display state, the polarization control layer 122 is so controlled that the polarization axis (for example, the polarization axis ax2 of the image light L102) of the polarized light that has entered the polarization control layer 122 from the first reflection layer 123 side via the single or the plurality of openings 124A is parallel to the polarization axis AX1 of the polarization layer 121, for example. Accordingly, in the display state, the polarized light (for example, the image light L102) that has entered the polarization control layer 122 from the first reflection layer 123 side via the single or the plurality of openings 124A passes through the polarization layer 121 to reach the user. Therefore, the entire surface or part of the surface of the display switching section 120 functions like a display for the user.

Moreover, in the display unit 101, for example, the size and the shape of the single or the plurality of openings 124A are formable, for example, by processing a sheet-like member or molding a material in a molten state in a process of manufacturing the second reflection layer 124. Accordingly, in a case where it is desired to perform switching only of the display state in a certain region or to perform display in a desired shape in the display unit 101, it is not necessary to perform photolithography with changing masks for the uses or the purposes upon forming the electrodes (the light transmissive electrodes 122B and 122C) that are used for the control of the polarization control layer 122. It is to be noted that, even in a case where the plurality of pairs of light transmissive electrodes 122B and 122C are provided for the polarization control layer 122, it is not necessary to change, for example, the size and the shape of the plurality of pairs of light transmissive electrodes 122B and 122C depending on, for example, the use or the purpose of the display unit 101. One reason for this is that it is sufficient that, for example, the size and the shape of the single or the plurality of openings 124A of the second reflection layer 24 are changed depending on, for example, the use or the purpose of

the display unit 101.

As described above, in the display unit 101, the polarization control by the polarization control layer 122 allows the display switching section 120 to function like a mirror or a display. Further, the necessity of providing the polarization control layer 122 with a plurality of electrodes for the polarization control is eliminated. Accordingly, it is possible to suppress a great increase in manufacturing cost.

Moreover, in the display unit 101, in a case where the reflective polarization layer having a difference in luminance (%) illustrated in FIG. 21 that is equal to or smaller than 10% in the wavelength range of the polarized light L101' and the image light L102 is used as each of the first reflection layer 123 and the second reflection layer 124, the light reflected by the first reflection layer 123 and the light reflected by the second reflection layer 124 are allowed to be almost the same in, for example, luminance and hue when the switching between the mirror state and the display state is performed. It is thus possible to make it difficult for the user to notice the change in, for example, luminance or hue around the image generated by the image light L102 when the switching between the mirror state and the display state is performed. As a result, it is possible to provide the user with an experience as if an image emerges from a mirror when the display switching section 120 is switched from the mirror state to the display state. Further, it is possible to provide the user with an experience as if the image emerged in the mirror disappears into the mirror when the display switching section 120 is switched from the display state to the mirror state.

Moreover, in the display unit 101, in a case where the reflective polarization layer having a difference in luminance (%) illustrated in FIG. 21 that is equal to or smaller than 10% in the wavelength range of the polarized light L101' and the image light L102 is used as each of the first reflection layer 123 and the second reflection layer 124, the light reflected by the first reflection layer 123 and the light reflected by the second reflection layer 124 are allowed to be different enough in, for example, luminance and hue for the user to recognize, when switching between the mirror state and the display state is performed. This allows a region around the image generated by the image light L2 is allowed to be different in, for example, luminance and hue from those in the mirror state, when the display switching section 20 is switched from the mirror state to the display state. As a result, it is possible to perform an act of providing an apparent change, for example, when the switching is performed from the mirror state to the display state or when the switching is performed from the display state to the mirror state. For example, it is possible to perform an act of accentuating the image generated by the image light L102, for example, by decreasing the luminance in the region around the image generated by the image light L102 or by changing the color temperature in the region around the image generated by the image light L102.

Moreover, in the display unit 101, in a case where the edges of the light transmissive electrodes 122B and 122C are provided outside the region facing the first reflection layer 123, it is possible to prevent disturbance in the alignment state of the liquid crystal at the edges of the light transmissive electrodes 122B and 122C from being visually recognized by the user as a display error. Moreover, in the display unit 101, the first reflection layer 123 is disposed closer to the polarization control layer 122 than the second reflection layer 124. Therefore, the reflection surface at a time when the display switching section 120 is in the mirror state is configured only of the surface of the first reflection layer 123. Accordingly, it is possible to avoid occurrence of a display error resulting from the single or the plurality of openings 124A.

<12. Modification Examples>

Modification examples of the display unit 101 according to the embodiment described above are described below. It is to be noted that the numerals same as numerals attached in the foregoing embodiment are attached below to components that are common to the foregoing embodiment. Further, components different from those in the foregoing embodiment are described mainly, and the description of the components common to the foregoing embodiment is omitted where appropriate.

[Modification Example A]

FIG. 22 illustrates a modification example of the cross-sectional configuration of the display section 110 and the display switching section 120. (A) of FIG. 23 and (A) of FIG. 24 each conceptually illustrate an example of workings of the display section 110 and the display switching section 120 in a case where a voltage is applied to the display switching section 120. (B) of FIG. 23 and (B) of FIG. 24 each conceptually illustrate an example of workings of the display section 110 and the display switching section 120 in a case where no voltage is applied to the display switching section 120.

In the foregoing embodiment, the first reflection layer 123 is disposed between the polarization control layer 122 and the second reflection layer 124; however, the second reflection layer 124 may be disposed between the polarization control layer 122 and the first reflection layer 123. In the present modification example, the second reflection layer 124 is configured of a reflective polarization layer. The reflective polarization layer used for the second reflection layer 124 has a polarization axis AX4 (a transmission axis) that is orthogonal to the polarization axis AX2 (the transmission axis) of the first reflection layer 123. A portion corresponding to the reflection surface 124B out of the reflective polarization

layer used for the second reflection layer 124 allows a polarization component that is parallel to the polarization axis AX4 to pass through and reflects a polarization component that is orthogonal to the polarization axis AX4 in the light entering the second reflection layer 124. The polarization axis AX4 is orthogonal to the polarization axis AX2 (the transmission axis) of the first reflection layer 123 as described above. Accordingly, the portion corresponding to the reflection surface 124B out of the reflective polarization layer used for the second reflection layer 124 allows the light (the linearly-polarized light) that has been reflected by the first reflection layer 123 to pass through.

The reflective polarization layers used as the first reflection layer 123 and the second reflection layer 124 are configured of the same material as each other, for example. In this case, a reflective polarization layer having a difference in luminance (%) illustrated in FIG. 21 that is equal to or less than 10% in the wavelength range (for example, a wavelength range including 450 nm, 550 nm, and 650 nm) of the polarized light L101' and the image light L102 is preferably used as each of the first reflection layer 123 and the second reflection layer 124, for example. It is to be noted that the reflective polarization layers used as the first reflection layer 123 and the second reflection layer 124 may be configured of materials different from each other. In this case, a reflective polarization layer having a difference in luminance (%) illustrated in FIG. 21 that is greater than 10% in the wavelength range (for example, a wavelength range including 450 nm, 550 nm, and 650 nm) of the polarized light L101' and the image light L102 is preferably used as each of the first reflection layer 123 and the second reflection layer 124, for example.

(Display State)

In the display unit 101 of the present modification example, when the switching voltage Vsw is supplied to the display switching section 120, the display switching section 120 is switched from the mirror state to the display state. At this time, when the non-polarized external light L101 enters the polarization layer 121, a polarization component that is parallel to the polarization axis AX1 out of the external light L101 passes through the polarization layer 121, and the light after passing through the polarization layer 121 (the polarized light L101') passes through the polarization control layer 122, as illustrated in (B) of FIG. 23 and (A) of FIG. 24, for example. Light that has entered the reflection surface 124B of the second reflection layer 124 out of the light after passing through the polarization control layer 122 (the polarized light L101') is reflected by the reflection surface 124B, and is outputted to the outside via the polarization control layer 122 and the polarization layer 121. Light that has entered the single or the plurality of openings 124A of the second reflection layer 124 out of the light (the polarized light L101') that has passed through the polarization control layer 122 enters the output surface 110A of the display section 110 via the single or the plurality of openings 124A after passing through the first reflection layer 123. In a case where the display section 110 is provided with a light-emission-type panel, the image light L102 having the polarization axis ax2 is outputted from the output surface 110A irrelevant to the light entering the output surface 110A. In a case where the display section 110 is provided with a reflection-type panel, the light (the polarized light L101') that has entered the output surface 110A is reflected and modulated by the reflection-type panel of the display section 110. As a result, the image light L102 is outputted from the output surface 110A. The image light L102 outputted from the output surface 110A is outputted to the outside via the first reflection layer 123, the single or the plurality of openings 124A, the polarization control layer 122, and the polarization layer 121. At this time, the user feels as if an image emerges in a mirror upon viewing the display switching section 120, for example.

(Mirror State)

In the display unit 101 of the present modification example, as a result of the supply of the switching voltage Vsw, the display switching section 120 is switched from the display state to the mirror state. At this time, when the non-polarized external light L101 enters the polarization layer 121, a polarization component that is parallel to the polarization axis AX1 out of the external light L101 passes through the polarization layer 121, and light (the polarized light L101') after passing through the polarization layer 121 passes through the polarization control layer 122 and the second reflection layer 124, is thereafter reflected by the first reflection layer 123, and is outputted to the outside via the second reflection layer 124, the polarization control layer 122, and the polarization layer 121, as illustrated in (A) of FIG. 23 and (B) of FIG. 24, for example. It is to be noted that, even in a case where the image light L102 is outputted from the output surface 110A, the image light L102 is absorbed by the polarization layer 121. At this time, the user feels as if the user is looking at a mirror upon viewing the display switching section 120, for example.

Next, effects of the display unit 101 of the present modification example are described. In the present modification example, for example, the size and the shape of the single or the plurality of openings 124A are formable, for example, by processing a sheet-like member or molding a material in a molten state in a process of manufacturing the second reflection layer 124. Accordingly, in the present modification example, in a case where it is desired to perform switching only of the display state in a certain region or to perform display in a desired shape, it is not necessary to perform photolithography with changing masks for the uses or the purposes upon forming the electrodes (the light transmissive electrodes 122B and 122C) that are used for the control of the polarization control layer 122. It is to be noted that, even

in a case where the plurality of pairs of light transmissive electrodes 122B and 122C are provided for the polarization control layer 122, it is not necessary to change, for example, the size and the shape of the plurality of pairs of light transmissive electrodes 122B and 122C depending on, for example, the use or the purpose of the display unit 101. One reason for this is that it is sufficient that, for example, the size and the shape of the single or the plurality of openings 124A of the second reflection layer 124 are changed depending on, for example, the use or the purpose of the display unit 101. As described above, in the present modification example, the polarization control by the polarization control layer 122 allows the display switching section 120 to function like a mirror or a display. Further, the necessity of providing the polarization control layer 122 with a plurality of electrodes for the polarization control is eliminated. Accordingly, it is possible to suppress a great increase in manufacturing cost.

Moreover, in the present modification example, in a case where the reflective polarization layer having a difference in luminance (%) illustrated in FIG. 21 that is equal to or smaller than 10% in the wavelength range of the polarized light L101' and the image light L102 is used as each of the first reflection layer 123 and the second reflection layer 124, the light reflected by the first reflection layer 123 after passing through a portion, of the second reflection layer 124, other than the openings 124A and the light reflected by the first reflection layer 123 after passing through a portion, of the second reflection layer 124, corresponding to the openings 124A are allowed to be almost the same in, for example, luminance and hue upon switching between the mirror state and the display state. It is thereby possible to make it difficult for the user to notice the difference in, for example, luminance or hue between the region in which image is generated by the image light L102 and the region around the region in which the image is generated by the image light L102 when the display switching section 120 is switched between the mirror state and the display state.

[Modification Example B]

FIG. 25 illustrates a modification example of the cross-sectional configuration of the display section 110 and the display switching section 120. (A) of FIG. 26 and (A) of FIG. 27 each conceptually illustrate an example of workings of the display section 110 and the display switching section 120 in a case where a voltage is applied to the display switching section 120. (B) of FIG. 26 and (B) of FIG. 27 each conceptually illustrate an example of workings of the display section 110 and the display switching section 120 in a case where no voltage is applied to the display switching section 120.

In the foregoing embodiment, two reflection layers (the first reflection layer 123 and the second reflection layer 124) are provided in the display switching section 120; however, one of the reflection layers (the second reflection layer 124) may not be provided, and a circular bezel 111 that surrounds the output surface 110A of the display section 110 may also have the function of the second reflection layer 124. In other words, in the present modification example, the second reflection layer 124 is not provided, and further, the display section 110 has the circular bezel 111 that is provided along an outer edge of the display switching section 120. The bezel 111 corresponds to one specific example of a "bezel" in the present disclosure.

The bezel 111 has a single opening 111A. A shape of the opening 111A is not particularly limited; however, the shape of the opening 111A is a rectangular shape, any polygonal shape, a circular shape, an elliptical shape, or a shape of a combination thereof. The bezel 111 has a circular mirror surface 111B at a position that surrounds the single opening 111A. The mirror surface 111B is formed on a surface on the display switching section 120 side of the bezel 111. The mirror surface 111B is provided on the periphery of the single opening 111A and along an outer edge of the display switching section 120. In this case, the single opening 111A is smaller than the polarization plate 121, the polarization control layer 122, and the first reflection layer 123. In other words, the mirror surface 111B is disposed at least at a position that faces the first reflection layer 123. At least a portion corresponding to the mirror surface 111B out of the bezel 111 is configured of a metallic reflection layer or a multi-layered reflection layer, for example.

Next, an example of the operation of the display unit 101 is described.

(Display State)

In the display unit 101 of the present modification example, when the switching voltage Vsw is supplied to the display switching section 120, the display switching section 120 is switched from the mirror state to the display state. At this time, when the non-polarized external light L101 enters the polarization layer 121, a polarization component that is parallel to the polarization axis AX1 out of the external light L101 passes through the polarization layer 121, and the light after passing through the polarization layer 121 (the polarized light L101') passes through the polarization control layer 122 and the first reflection layer 123, as illustrated in (B) of FIG. 26 and (A) of FIG. 27, for example. Light that has entered the mirror surface 111B of the bezel 111 out of the light after passing through the first reflection layer 123 (the polarized light L101') is reflected by the mirror surface 111B, and is outputted to the outside via the first reflection layer 123, the polarization control layer 122, and the polarization layer 121. Light that has entered the opening 111A of the bezel 111 out of the light (the polarized light L101') that has passed through the first reflection layer 123 enters the output surface 110A of the display section 110 via the opening 111A. In a case where the display section 110 is provided with a light-emission-type panel, the image light L102 having the polarization axis ax2 is outputted from the output surface 110A irrelevant to the light entering the output surface 110A. In a case where the display section 110 is provided with a reflection-type panel, the light (the polarized light L101') that has entered the output surface 110A is reflected and modulated by the reflection-type panel in the display section 110. As a result, the image light L102 is outputted from the output surface 110A. The image light L102 outputted from the output surface 110A is outputted to the outside via the opening 111A, the first reflection layer 123, the polarization control layer 122, and the polarization layer 121. At this time, the user feels as if an image emerges in a mirror upon viewing the display switching section 120, for example.

(Mirror State)

In the display unit 101 of the present modification example, as a result of the supply of the switching voltage Vsw, the display switching section 120 is switched from the display state to the mirror state. At this time, when the non-polarized external light L101 enters the polarization layer 121, a polarization component that is parallel to the polarization axis AX1 out of the external light L101 passes through the polarization layer 121, and light (the polarized light L101') after passing through the polarization layer 121 passes through the polarization control layer 122, is thereafter reflected by the first reflection layer 123, and is outputted to the outside via the polarization control layer 122 and the polarization layer 121, as illustrated in (A) of FIG. 26 and (B) of FIG. 27, for example. It is to be noted that, even in a case where the image light L102 is outputted from the output surface 110A, the image light L102 is absorbed by the polarization layer 121. At this time, the user feels, for example, as if the user is looking at a mirror upon viewing the display switching section 120.

Next, effects of the display unit 101 of the present modification example are described. In the present modification example, the bezel 111 also has the function of the second reflection layer 124. It is therefore not necessary to provide the second reflection layer for the display switching section 120. Accordingly, in the present modification example, in a case where it is desired to perform switching only of the display state in a certain region or to perform display in a desired shape, it is not necessary to perform photolithography with changing masks for the uses or the purposes upon forming the electrodes (the light transmissive electrodes 122B and 122C) that are used for the control of the polarization control layer 122. It is to be noted that, even in a case where the plurality of pairs of light transmissive electrodes 122B and 122C are provided for the polarization control layer 122, it is not necessary to change, for example, the size and the shape of the plurality of pairs of light transmissive electrodes 122B and 122C depending on, for example, the use or the purpose of the display unit 101. One reason for this is that it is sufficient that, for example, the size and the shape of the single or the plurality of openings 124A of the second reflection layer 124 are changed depending on, for example, the use or the purpose of the display unit 101. As described above, in the present modification example, the polarization control by the polarization control layer 122 allows the display switching section 120 to function like a mirror or a display. Further, the necessity of providing the polarization control layer 122 with a plurality of electrodes for the polarization control is eliminated. Accordingly, it is possible to suppress a great increase in manufacturing cost.

[Modification Example C]

FIGs. 28A and 28B each illustrate an example of an arrangement of a mirror layer 125 that is additionally provided to the display switching section 120 illustrated in FIGs. 16, 22, and 25. In the embodiment, the modification example A, and the modification example B described above, the display switching section 120 may further include a mirror layer 128. The mirror layer 128 is provided at a position on the opposite side to the polarization control layer 122 in a relationship with the polarization layer 121, and is provided along an outer edge or the periphery of the polarization layer 121. The mirror layer 128 has a single opening 128A. A shape of the opening 128A is not particularly limited; however, the shape of the opening 128A is a rectangular shape, any polygonal shape, a circular shape, an elliptical shape, or a shape of a combination thereof, for example.

The mirror layer 128 has a mirror surface 128B at a position that surrounds the opening 128A. The mirror surface 128B is formed on a surface on the opposite side to the polarization layer 121 (in other words, on a front most surface of the display switching section 120). The mirror surface 128B is a surface that is formed by depositing, for example, metal on a surface of metal or an organic material, for example. The mirror surface 128B may be a surface of a metal member that is made of, for example, aluminum, iron, or an alloy thereof, for example. The mirror surface 128B may perform specular reflection.

The mirror surface 128B is a circular mirror surface that is provided on the periphery of the opening 128A and along an outer edge or the periphery of the polarization layer 121. In a case where the mirror layer 128 is provided along the outer edge of the polarization layer 121, the opening 128A is smaller than the polarization plate 121. In this case, the mirror surface 128B is provided at least at a position that faces the outer edge of the polarization layer 121. In a case where the mirror layer 128 is provided along the periphery of polarization layer 121, the opening 128A is as large as the polarization plate 121. In this case, the mirror surface 128B is provided at a position that does not face the

polarization layer 121.

In the case where the mirror layer 128 is provided along the outer edge of the polarization layer 121, the mirror layer 128 may be attached to the polarization layer 121 as illustrated in FIG. 28A, or may not be attached to the polarization layer 121 and be so disposed as to be away from the polarization layer 121 as illustrated in FIG. 28B, for example. In the case where the mirror layer 128 is provided along the periphery of the polarization layer 121, the mirror layer 128 may be so disposed as to be away from the polarization layer 121 as illustrated in FIG. 28B, or may be disposed at a position that allows the polarization layer 121 to be disposed inside the opening 128A, for example.

In a case where only the single opening 124A is provided in the second reflection layer 124, the mirror surface 128B is disposed at a position that does not face the opening 124A, and further, is disposed at a position, in the reflection surface 124B, that does not face at least an inner edge of the reflection surface 124B. In a case where only the single opening 111A is provided in the bezel 111, the mirror surface 128B is disposed at a position that does not face the opening 111A, and further, is disposed at a position, in the reflection surface 111B, that does not face at least an inner edge of the reflection surface 111B. The mirror layer 128 is disposed at a position that does not interfere with an image when the display switching section 120 is in the display state. In other words, the mirror layer 128 has a role, in the display switching section 120, that is similar to a role of the bezel 111 in the display section 110.

Next, effects of the display unit 101 of the present modification example are described. In the present modification example, the mirror layer 128 is provided at a position, in the display switching section 120, that does not interfere with an image when the display switching section 120 is in the display state. Accordingly, when the display switching section 120 is in the display state, an image is allowed to be displayed in a state that the image is surrounded by a mirror-like frame. As a result, it is possible to improve design properties at a time when the display switching section 120 is in the display state. Further, when the display switching section 120 is in the mirror state, the entire front most surface of the display switching section 120 is allowed to be in the mirror state. At this time, in the front most surface of the display switching section 120, a reflectance and a hue in a region corresponding to the mirror layer 128 are slightly different from a reflectance and a hue in a region surrounded by the mirror layer 128. Therefore, it is possible to cause the outer edge of the front most surface of the display switching section 120 to serve as a mirror-like frame having a different reflectance and a different hue when the display switching section 120 is in the mirror state. Accordingly, it is possible to improve the design properties at a time when the display switching section 120 is in the mirror state.

[Modification Example D]

In the embodiment, the modification example A, and the modification example B described above, the reflection surface 124B may be a reflection surface that is provided on the periphery of the single of the plurality of openings 124A and along the outer edge and the periphery of the first reflection layer 123. In other words, the second reflection layer 124 may be larger than the polarization layer 121, the polarization control layer 122, and the first reflection layer 123.

Next, effects of the display unit 101 of the present modification example are described. In the present modification example, the outer edge of the reflection surface 124B is disposed at a position that does not face the polarization layer 121, the polarization control layer 122, and the first reflection layer 123. Accordingly, when the display switching section 120 is in the display state, an image is allowed to be displayed in a state that the image is surrounded by a mirror-like frame. As a result, it is possible to improve design properties at a time when the display switching section 120 is in the display state. Further, when the display switching section 120 is in the mirror state, the entire front most surface of the display switching section 120 is allowed to be in the mirror state. At this time, in the front most surface of the display switching section 120, a reflectance and a hue in a region corresponding to the outer edge of the reflection surface 124B are slightly different from a reflectance and a hue in a region surrounded by the outer edge of the reflection surface 124B. Therefore, it is possible to cause the outer edge of the front most surface of the display switching section 120 to serve as a mirror-like frame having a different reflectance and a different hue when the display switching section 120 is in the mirror state. Accordingly, it is possible to improve the design properties at a time when the display switching section 120 is in the mirror state.

[Modification Example E]

In the embodiment, the modification example A, and the modification example B described above, the display section 110 may have the circular bezel 111 that is provided along the periphery of the display switching section 120. The bezel 111 corresponds to one specific example of the "bezel" in the present disclosure.

FIG. 29 illustrates a modification example of the cross-sectional configuration of the display section 110 and the display switching section 120. The bezel 111 has the single bezel 111A. A shape of the opening 111A is not particularly limited; however, the shape of the opening 111A is a rectangular shape, any polygonal shape, a circular shape, an elliptical shape, or a shape of a combination thereof, for example. The bezel 111 has a circular mirror surface 111B at a position that surrounds the single opening 111A. The mirror surface 111B is formed on a surface on the display

switching section 120 side of the bezel 111. The mirror surface 111B is provided along the periphery of the display switching section 120 and is so provided as to surround the output surface 110A. The display switching section 120 is not in contact with the mirror surface 111B, and the entire display switching section 120 or part of the display switching section 120 is contained inside the opening 111A. The display switching section 120 and the output surface 110A are attached to each other with the adhesive layer 140, for example.

Next, effects of the display unit 101 of the present modification example are described. In the present modification example, the mirror surface 111B is disposed at a position that does not face the display switching section 120. Accordingly, when the display switching section 120 is in the display state, an image is allowed to be displayed in a state that the image is surrounded by a mirror-like frame. As a result, it is possible to improve design properties at a time when the display switching section 120 is in the display state. Further, when the display switching section 120 is in the mirror state, the entire front most surface of the display switching section 120 is allowed to be in the mirror state. At this time, a reflectance and a hue in a region corresponding to the mirror surface 111B are slightly different from a reflectance and a hue in a region surrounded by the mirror surface 111B. Therefore, it is possible to cause the periphery of the front most surface of the display switching section 120 to serve as a mirror-like frame having a different reflectance and a different hue when the display switching section 120 is in the mirror state. Accordingly, it is possible to improve the design properties at a time when the display switching section 120 is in the mirror state.

[Modification Example F]

In the embodiment and the modification examples A to E described above, the liquid crystal layer 122A allows the light that has entered the liquid crystal layer 122A to pass through as it is without rotating its polarization axis when a voltage is applied (when a voltage is ON), and varies the polarization axis of the light that has entered the liquid crystal layer 122A by an angle of an odd multiple of 90 degrees when no voltage is applied (when the voltage is OFF). In the embodiment and the modification examples A to E described above, however, the liquid crystal layer 122A may vary the polarization axis of the light that has entered the liquid crystal layer 122A by an angle of an odd multiple of 90 degrees when the voltage is applied (when the voltage is ON), and may allow the light that has entered the liquid crystal layer 122A to pass through as it is without rotating its polarization axis when no voltage is applied (when the voltage is OFF).

The present technology has been described above referring to the embodiments and the modification examples thereof; however, the present technology is not limited to the foregoing embodiments, etc., and may be variously modified. It is to be noted that the effects described in the present description are mere examples. The effects of the present technology are not limited to the effects described in the present description. The present technology may have effects other than the effects described in the present description. Further, the technology may have any of the following configurations.

(1) A display unit including:

a display section that outputs a first linearly-polarized light as image light, the first linearly-polarized light having a first polarization axis; and
a display switching section that is disposed to face the display section, and performs switching between an image display mode in which the first linearly-polarized light is allowed to pass through and an external light reflection mode in which external light is reflected, in which
the display section includes a first absorption-type polarization member that allows the first linearly-polarized light to pass through and absorbs second linearly-polarized light having a second polarization axis that intersects the first polarization axis,
the display switching section includes a reflection-type polarization member, a switchable transmission polarization axis member, and a second absorption-type polarization member that are disposed in order in a direction being away from the display section,
the reflection-type polarization member allows the first linearly-polarized light to pass through and reflects the second linearly-polarized light,
the switchable transmission polarization axis member performs switching between a first mode in which the first linearly-polarized light is converted into the second linearly-polarized light to pass through and a second mode in which the first linearly-polarized light is allowed to pass through without being converted into the second linearly-polarized light,
the second absorption-type polarization member allows the first linearly-polarized light to pass through and absorbs the second linearly-polarized light, and
the second absorption-type polarization member has a hue b* value that is equal to or smaller than a hue b* value of the first absorption-type polarization member.

(2) The display unit according to (1), in which the polarization conversion member is a liquid crystal device that is one of a TN (Twisted Nematic) liquid crystal device, an STN (Super Twisted Nematic) liquid crystal device, a VA (Vertical Alignment) liquid crystal device, an antiferroelectric liquid crystal device, and a ferroelectric liquid crystal device.
(3) The display unit according to (1) or (2), in which the polarization conversion member is a bistable liquid crystal display device or a tristable liquid crystal display device.
(4) The display unit according to any one of (1) to (3), in which the second absorption-type polarization member is provided inside the liquid crystal device.
(5) The display unit according to any one of (1) to (4), further including
a glass substrate disposed between the first absorption-type polarization member and the reflection-type polarization member, in which
the display section further includes a display panel on opposite side of the first absorption-type polarization member to the display switching section.
(6) The display unit according to any one of (1) to (5), further including
a first resin layer that attaches the reflection-type polarization member and the switchable transmission polarization axis member to each other, in which
the first resin layer has a thickness that is equal to or smaller than 25 μm.
(7) The display unit according to any one of (1) to (6), further including
a second resin layer that attaches the second absorption-type polarization member and the switchable transmission polarization axis member to each other, in which
the second resin layer has a thickness that is equal to or smaller than 25 μm.
(8) The display unit according to any one of (1) to (7), further including
a third resin layer that attaches the reflection-type polarization member and the display section to each other, in which
the third resin layer has a thickness that is equal to or smaller than 25 μm.
(9) The display unit according to any one of (1) to (8), in which the switchable transmission polarization axis member also performs switching to a third mode in which only part of the first linearly-polarized light is converted into the second linearly-polarized light to pass through and rest of the first linearly-polarized light is allowed to pass through without being converted into the second linearly-polarized light.
(10) An electronic apparatus including:

a display unit; and
a controlling section that controls the display unit, in which
the display unit includes
a display section that outputs a first linearly-polarized light as image light, the first linearly-polarized light having a first polarization axis; and
a display switching section that is disposed to face the display section, and performs switching between an image display mode in which the first linearly-polarized light is allowed to pass through and an external light reflection mode in which external light is reflected,
the display section includes a first absorption-type polarization member that allows the first linearly-polarized light to pass through and absorbs second linearly-polarized light having a second polarization axis that intersects the first polarization axis,
the display switching section includes a reflection-type polarization member, a switchable transmission polarization axis member, and a second absorption-type polarization member that are disposed in order in a direction being away from the display section,
the reflection-type polarization member allows the first linearly-polarized light to pass through and reflects the second linearly-polarized light,
the switchable transmission polarization axis member performs switching between a first mode in which the first linearly-polarized light is converted into the second linearly-polarized light to pass through and a second mode in which the first linearly-polarized light is allowed to pass through without being converted into the second linearly-polarized light,
the second absorption-type polarization member allows the first linearly-polarized light to pass through and absorbs the second linearly-polarized light, and
the second absorption-type polarization member has a hue b* value that is equal to or smaller than a hue b* value of the first absorption-type polarization member.

(11) An optical device including:

a polarization control layer that controls polarization on the basis of a control from outside;

a polarization layer that is disposed on one surface side of the polarization control layer; and
a first reflection layer and a second reflection layer that are disposed on other surface side of the polarization control layer, in which
the first reflection layer is a reflective polarization layer, and
the second reflection layer has one or a plurality of openings.

(12) The optical device according to (11), in which the first reflection layer has a polarization axis that is parallel or orthogonal to a polarization axis of the polarization layer.
(13) The optical device according to (12), in which
the polarization control layer includes a liquid crystal layer and a pair of or a plurality of pairs of light transmissive electrodes that sandwich the liquid crystal layer, and
the pair or the plurality of pairs of light transmissive electrodes are sheet-shaped electrodes with which an electric field is applied to the entire liquid crystal layer.
(14) The optical device according to (13), in which the second reflection layer has a reflection surface at a position that surrounds the one or the plurality of openings.
(15) The optical device according to (14), in which
the second reflection layer has the one opening, and
the reflection surface is a circular reflection surface that is provided on a periphery of the one opening and along an outer edge of the first reflection layer.
(16) The optical device according to (15), in which the one opening is smaller than the first reflection layer.
(17) The optical device according to (16), in which the first reflection layer is disposed between the polarization control layer and the second reflection layer.
(18) The optical device according to (17), in which the second reflection layer is a metallic reflection layer, a multi-layered reflection layer, or a reflective polarization layer having a polarization axis that is orthogonal to the polarization axis of the first reflection layer.
(19) A display unit including:

a display switching section;
a display section that has an output surface that outputs linearly-polarized light as image light; and
a controlling section that performs a control on the display switching section, in which
the display switching section includes

a polarization control layer that controls polarization on the basis of the control performed by the controlling section,
a polarization layer that is disposed at a position on opposite side to the display section in a relationship with the polarization control layer, and
a first reflection layer and a second reflection layer that are disposed at respective positions on the side of the display section in a relationship with the polarization control layer,

the first reflection layer is a reflective polarization layer, and
the second reflection layer has one or a plurality of openings.

(20) A display unit including:

a display switching section;
a display section that has an output surface that outputs linearly-polarized light as image light; and
a controlling section that performs a control on the display switching section, in which
the display switching section includes

a polarization control layer that controls polarization on the basis of the control performed by the controlling section,
a polarization layer that is disposed at a position on opposite side to the display section in a relationship with the polarization control layer, and
a reflection layer that is disposed at a position on side of the display section in a relationship with the polarization control layer,
the display section has a bezel having an opening at a position that faces the output surface,

the reflection layer is a reflective polarization layer, and

the bezel includes a circular mirror surface on a periphery of the opening.

This application is based upon and claims the benefit of priority of the Japanese Patent Application No. 2015-37733 filed in the Japan Patent Office on February 27, 2015 and the Japanese Patent Application No. 2015-57106 filed in the Japan Patent Office on March 20, 2015, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A display unit comprising:

   a display section that outputs a first linearly-polarized light as image light, the first linearly-polarized light having a first polarization axis; and
   a display switching section that is disposed to face the display section, and performs switching between an image display mode in which the first linearly-polarized light is allowed to pass through and an external light reflection mode in which external light is reflected, wherein
   the display section includes a first absorption-type polarization member that allows the first linearly-polarized light to pass through and absorbs second linearly-polarized light having a second polarization axis that intersects the first polarization axis,
   the display switching section includes a reflection-type polarization member, a switchable transmission polarization axis member, and a second absorption-type polarization member that are disposed in order in a direction being away from the display section,
   the reflection-type polarization member allows the first linearly-polarized light to pass through and reflects the second linearly-polarized light,
   the switchable transmission polarization axis member performs switching between a first mode in which the first linearly-polarized light is converted into the second linearly-polarized light to pass through and a second mode in which the first linearly-polarized light is allowed to pass through without being converted into the second linearly-polarized light,
   the second absorption-type polarization member allows the first linearly-polarized light to pass through and absorbs the second linearly-polarized light, and
   the second absorption-type polarization member has a hue b* value that is equal to or smaller than a hue b* value of the first absorption-type polarization member.

2. The display unit according to claim 1, wherein the polarization conversion member is a liquid crystal device that is one of a TN (Twisted Nematic) liquid crystal device, an STN (Super Twisted Nematic) liquid crystal device, a VA (Vertical Alignment) liquid crystal device, an antiferroelectric liquid crystal device, and a ferroelectric liquid crystal device.

3. The display unit according to claim 1, wherein the polarization conversion member is a bistable liquid crystal display device or a tristable liquid crystal display device.

4. The display unit according to claim 1, wherein the second absorption-type polarization member is provided inside the liquid crystal device.

5. The display unit according to claim 1, further comprising
   a glass substrate disposed between the first absorption-type polarization member and the reflection-type polarization member, wherein
   the display section further includes a display panel on opposite side of the first absorption-type polarization member to the display switching section.

6. The display unit according to claim 1, further comprising
   a first resin layer that attaches the reflection-type polarization member and the switchable transmission polarization axis member to each other, wherein
   the first resin layer has a thickness that is equal to or smaller than 25 μm.

**7.** The display unit according to claim 1, further comprising a second resin layer that attaches the second absorption-type polarization member and the switchable transmission polarization axis member to each other, wherein the second resin layer has a thickness that is equal to or smaller than 25 μm.

**8.** The display unit according to claim 1, further comprising a third resin layer that attaches the reflection-type polarization member and the display section to each other, wherein the third resin layer has a thickness that is equal to or smaller than 25 μm.

**9.** The display unit according to claim 1, wherein the switchable transmission polarization axis member also performs switching to a third mode in which only part of the first linearly-polarized light is converted into the second linearly-polarized light to pass through and rest of the first linearly-polarized light is allowed to pass through without being converted into the second linearly-polarized light.

**10.** An electronic apparatus comprising:

a display unit; and
a controlling section that controls the display unit, wherein
the display unit includes
a display section that outputs a first linearly-polarized light as image light, the first linearly-polarized light having a first polarization axis; and
a display switching section that is disposed to face the display section, and performs switching between an image display mode in which the first linearly-polarized light is allowed to pass through and an external light reflection mode in which external light is reflected,
the display section includes a first absorption-type polarization member that allows the first linearly-polarized light to pass through and absorbs second linearly-polarized light having a second polarization axis that intersects the first polarization axis,
the display switching section includes a reflection-type polarization member, a switchable transmission polarization axis member, and a second absorption-type polarization member that are disposed in order in a direction being away from the display section,
the reflection-type polarization member allows the first linearly-polarized light to pass through and reflects the second linearly-polarized light,
the switchable transmission polarization axis member performs switching between a first mode in which the first linearly-polarized light is converted into the second linearly-polarized light to pass through and a second mode in which the first linearly-polarized light is allowed to pass through without being converted into the second linearly-polarized light,
the second absorption-type polarization member allows the first linearly-polarized light to pass through and absorbs the second linearly-polarized light, and
the second absorption-type polarization member has a hue b* value that is equal to or smaller than a hue b* value of the first absorption-type polarization member.

**11.** An optical device comprising:

a polarization control layer that controls polarization on a basis of a control from outside;
a polarization layer that is disposed on one surface side of the polarization control layer; and
a first reflection layer and a second reflection layer that are disposed on other surface side of the polarization control layer, wherein
the first reflection layer is a reflective polarization layer, and
the second reflection layer has one or a plurality of openings.

**12.** The optical device according to claim 11, wherein the first reflection layer has a polarization axis that is parallel or orthogonal to a polarization axis of the polarization layer.

**13.** The optical device according to claim 12, wherein the polarization control layer includes a liquid crystal layer and a pair of or a plurality of pairs of light transmissive electrodes that sandwich the liquid crystal layer, and the pair or the plurality of pairs of light transmissive electrodes are sheet-shaped electrodes with which an electric field is applied to the entire liquid crystal layer.

**14.** The optical device according to claim 13, wherein the second reflection layer has a reflection surface at a position that surrounds the one or the plurality of openings.

**15.** The optical device according to claim 14, wherein
the second reflection layer has the one opening, and
the reflection surface is a circular reflection surface that is provided on a periphery of the one opening and along an outer edge of the first reflection layer.

**16.** The optical device according to claim 15, wherein the one opening is smaller than the first reflection layer.

**17.** The optical device according to claim 12, wherein the first reflection layer is disposed between the polarization control layer and the second reflection layer.

**18.** The optical device according to claim 17, wherein the second reflection layer is a metallic reflection layer, a multi-layered reflection layer, or a reflective polarization layer having a polarization axis that is orthogonal to the polarization axis of the first reflection layer.

**19.** A display unit comprising:

a display switching section;
a display section that has an output surface that outputs linearly-polarized light as image light; and
a controlling section that performs a control on the display switching section, wherein
the display switching section includes

a polarization control layer that controls polarization on a basis of the control performed by the controlling section,
a polarization layer that is disposed at a position on opposite side to the display section in a relationship with the polarization control layer, and
a first reflection layer and a second reflection layer that are disposed at respective positions on the side of the display section in a relationship with the polarization control layer,

the first reflection layer is a reflective polarization layer, and
the second reflection layer has one or a plurality of openings.

**20.** A display unit comprising:

a display switching section;
a display section that has an output surface that outputs linearly-polarized light as image light; and
a controlling section that performs a control on the display switching section, wherein
the display switching section includes

a polarization control layer that controls polarization on a basis of the control performed by the controlling section,
a polarization layer that is disposed at a position on opposite side to the display section in a relationship with the polarization control layer, and
a reflection layer that is disposed at a position on side of the display section in a relationship with the polarization control layer,

the display section has a bezel having an opening at a position that faces the output surface,
the reflection layer is a reflective polarization layer, and
the bezel includes a circular mirror surface on a periphery of the opening.

[ FIG. 1A ]

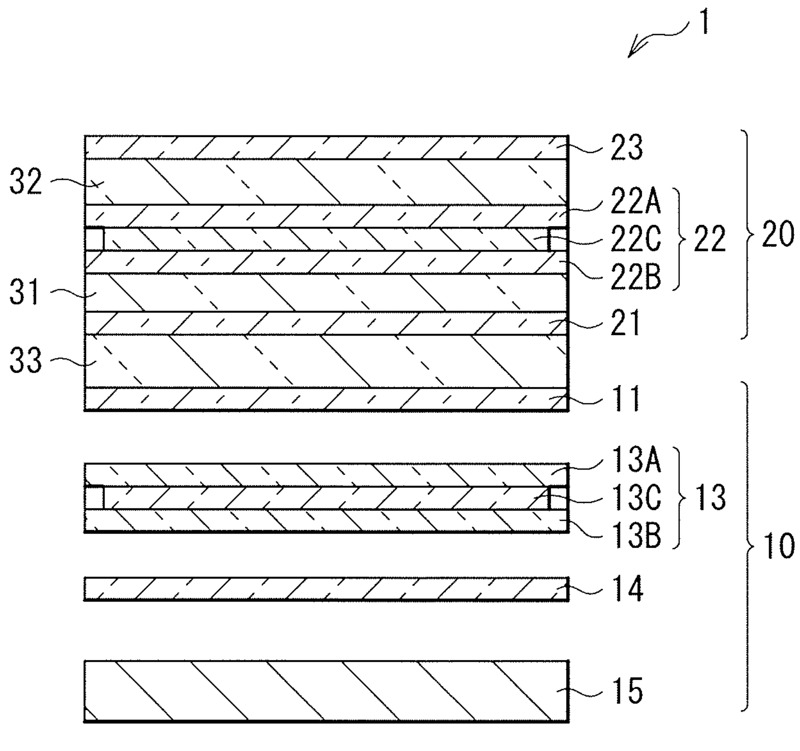

[ FIG. 1B ]

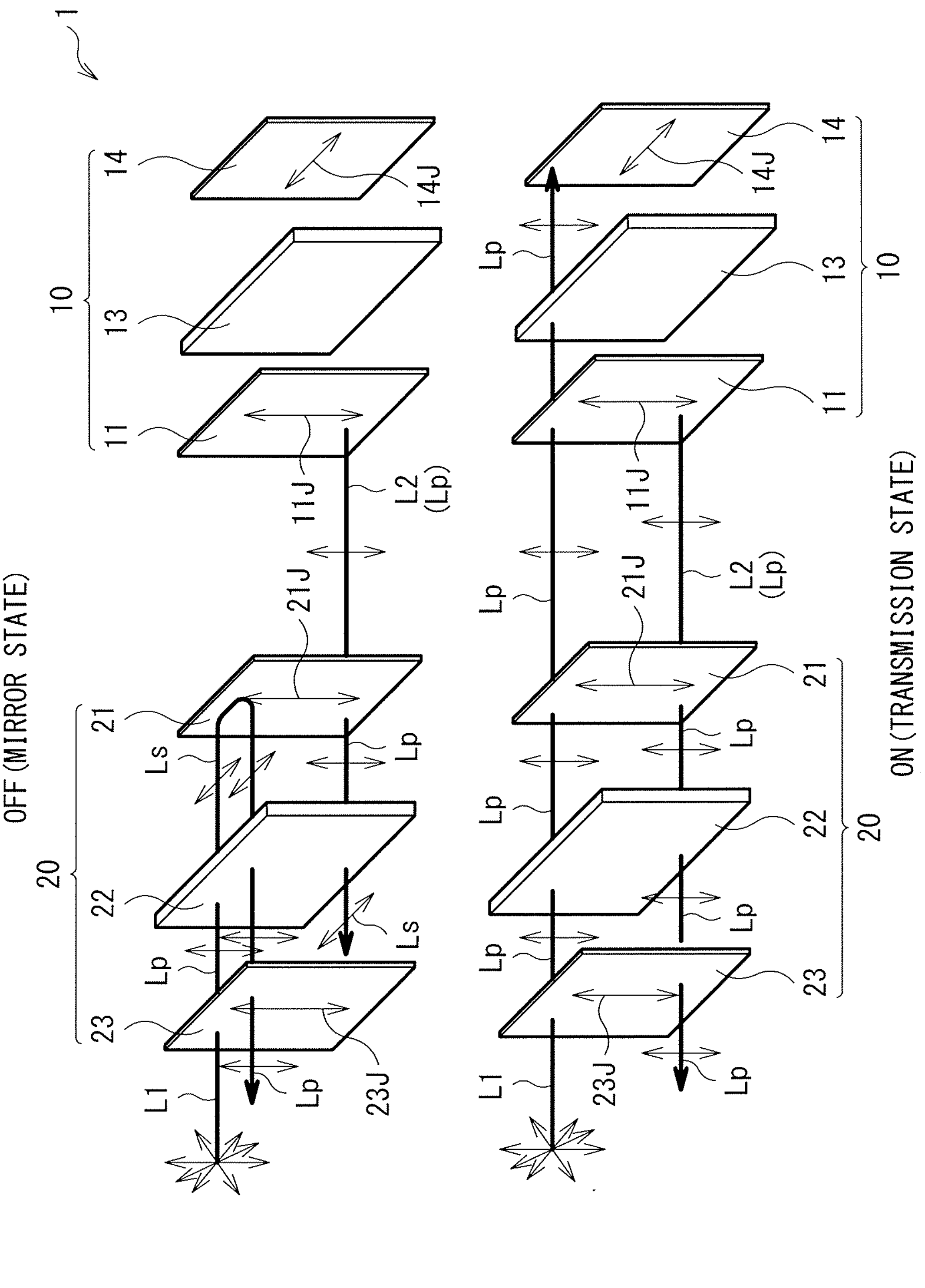
1
OFF (MIRROR STATE)
ON (TRANSMISSION STATE)
10
11
13
14
14J
11J
L2
(Lp)
21J
20
21
22
23
23J
Ls
Lp
L1

[ FIG. 2 ]

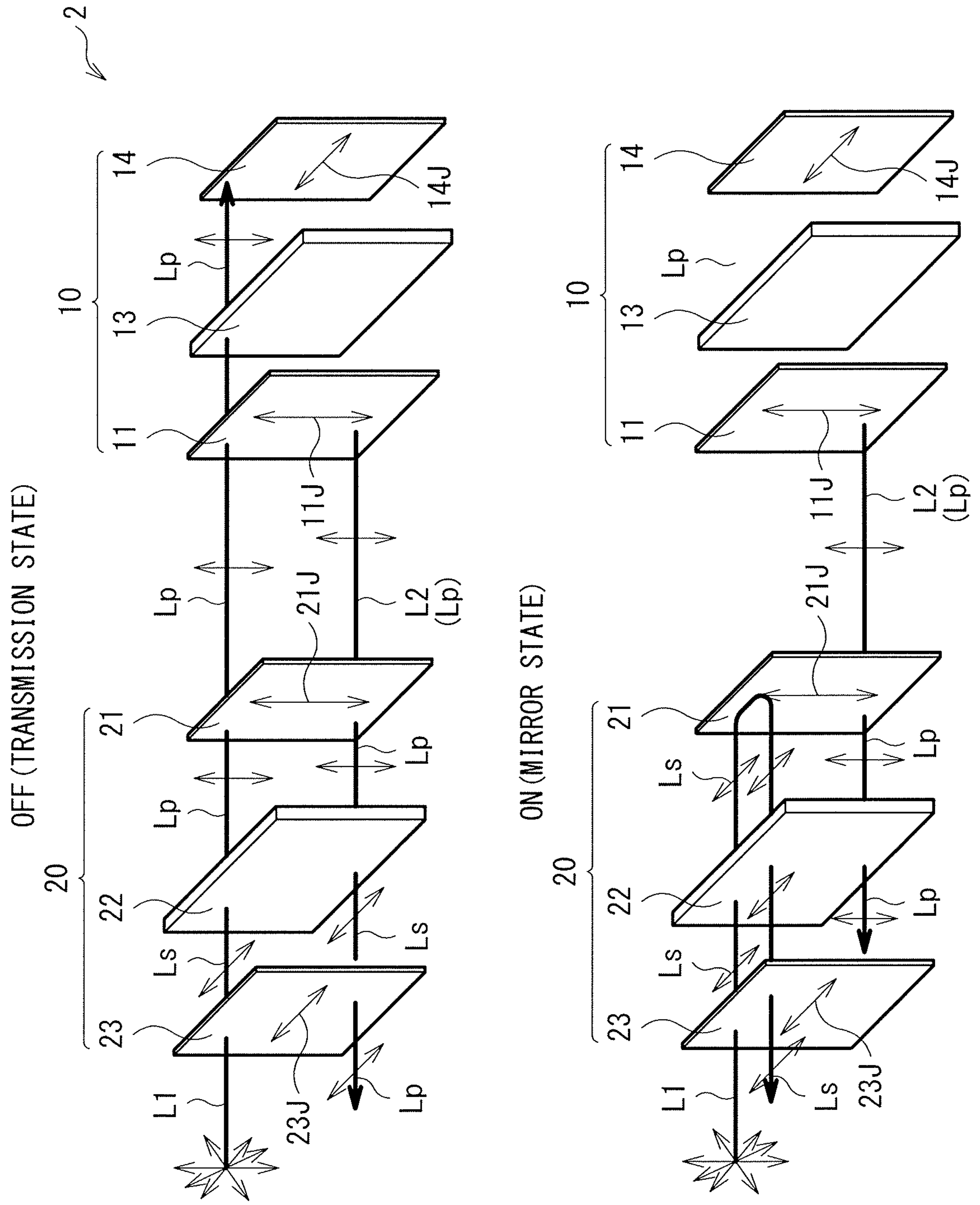
2
OFF (TRANSMISSION STATE)
ON (MIRROR STATE)
10
20
11
13
14
14J
11J
21
21J
22
23
23J
L1
L2
(Lp)
Lp
Ls

[ FIG. 3 ]

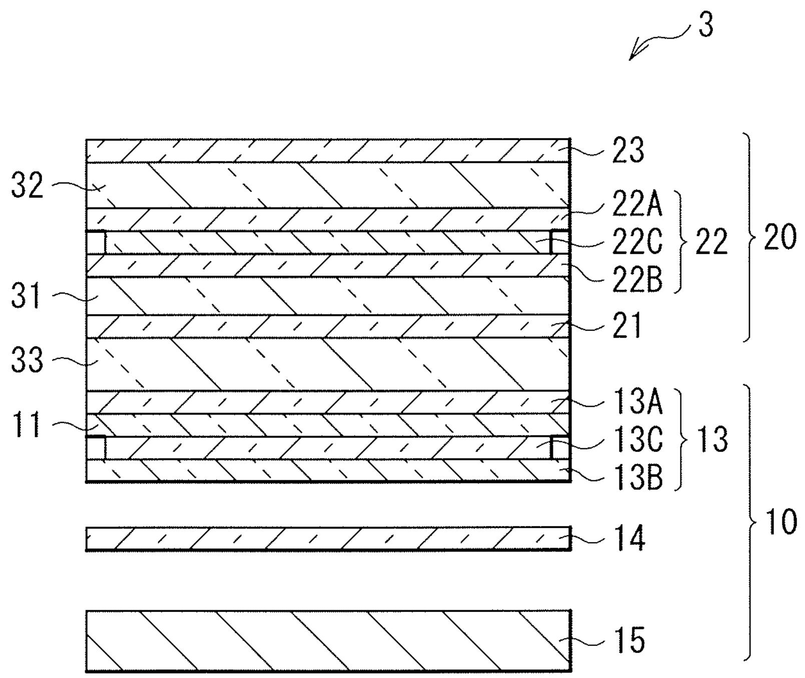
3
23
32
22A
22C
22
20
22B
31
21
33
13A
11
13C
13
13B
14
10
15

[ FIG. 4 ]

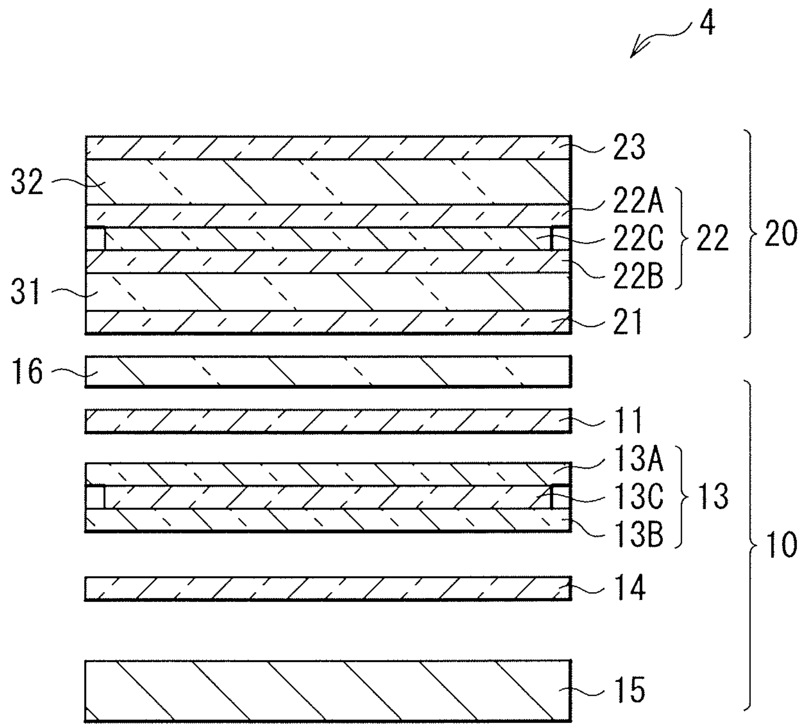
4
23
32
22A
22C
22
20
22B
31
21
16
11
13A
13C
13
13B
14
10
15

[ FIG. 5 ]

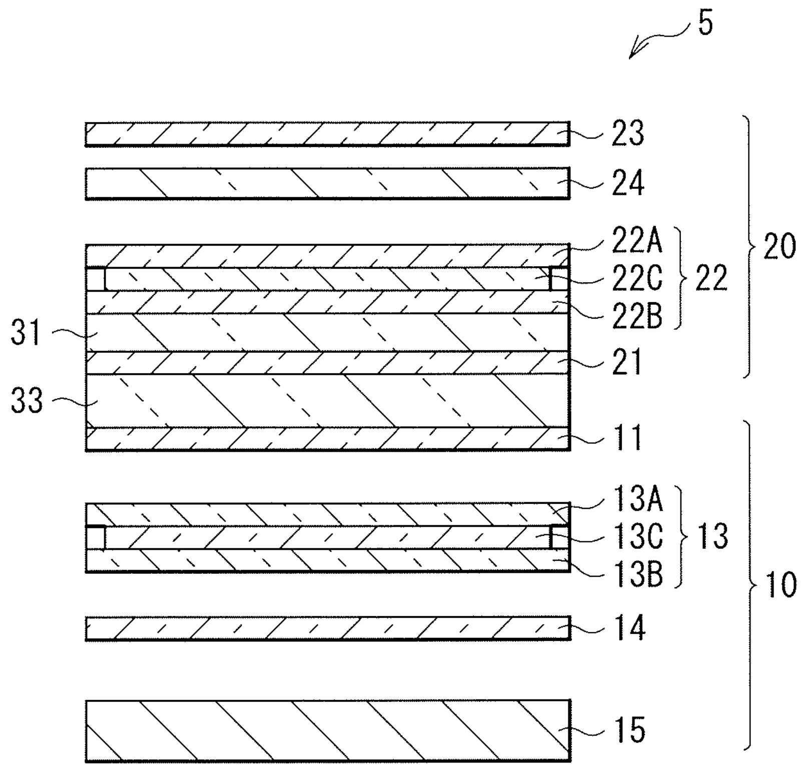
5
23
24
22A
22C
22B
22
20
31
21
33
11
13A
13C
13B
13
10
14
15

[ FIG. 6 ]

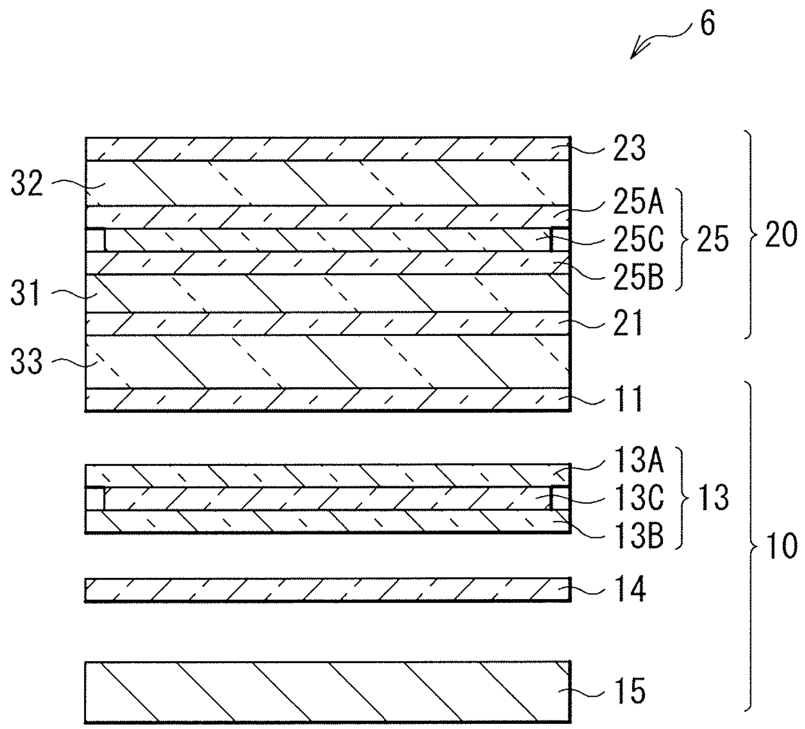
6
23
32
25A
25C
25B
25
20
31
21
33
11
13A
13C
13B
13
10
14
15

[ FIG. 7 ]

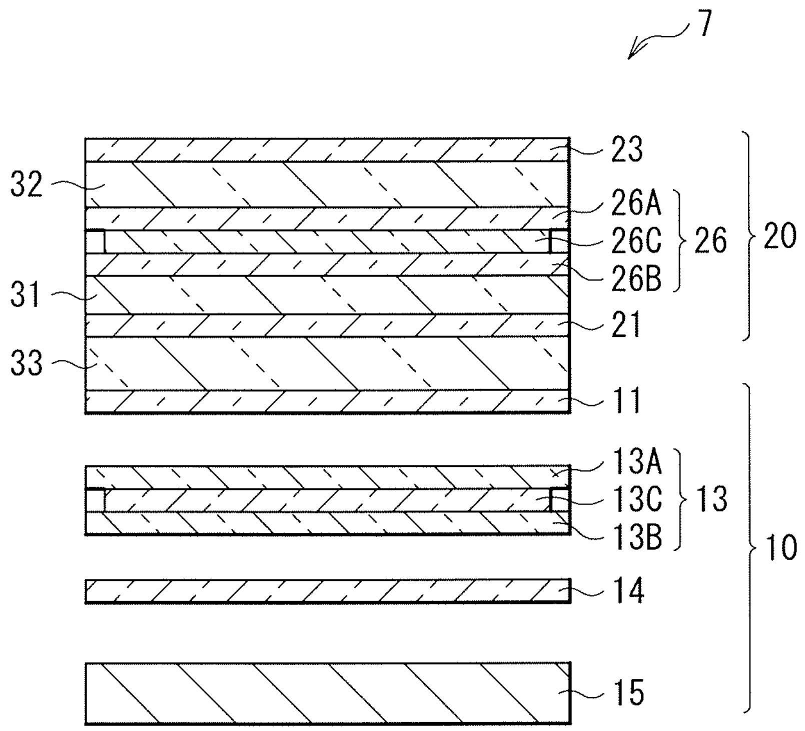
7
23
32
26A
26C
26
20
26B
31
21
33
11
13A
13C
13
13B
10
14
15

[ FIG. 8 ]

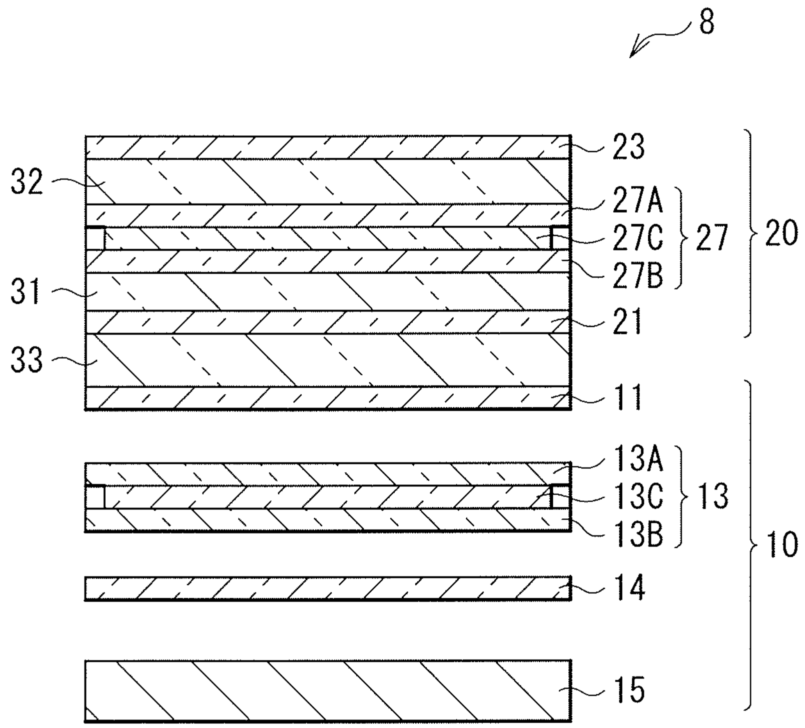
8
23
32
27A
27C
27
20
27B
31
21
33
11
13A
13C
13
13B
10
14
15

[ FIG. 9A ]

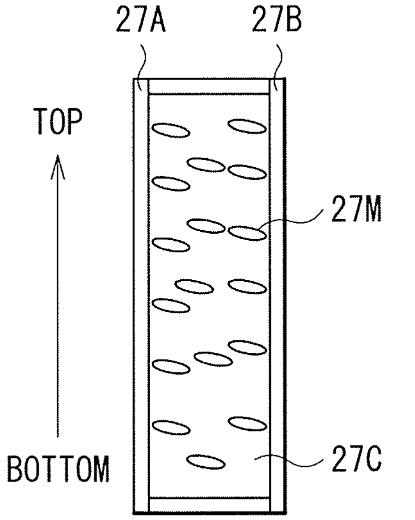


[ FIG. 9B ]

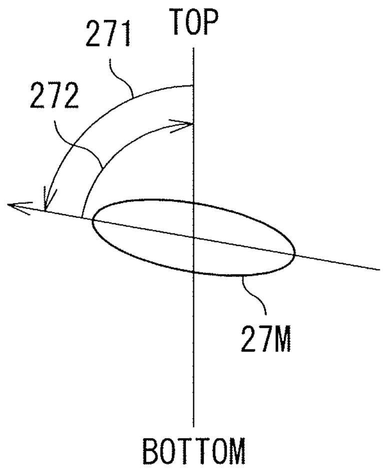


[ FIG. 9C ]

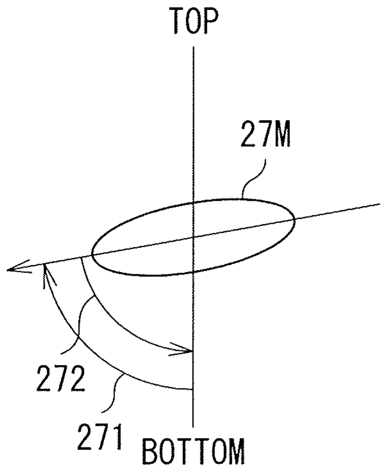

[ FIG. 10 ]

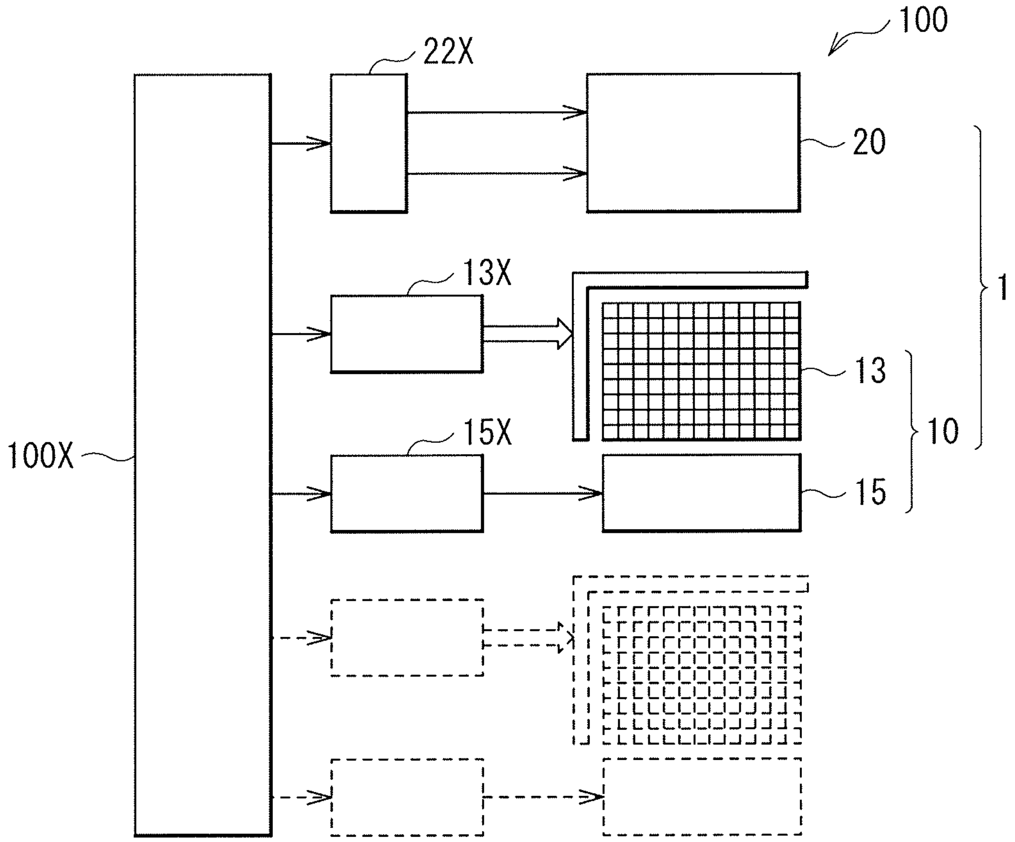

[ FIG. 11 ]

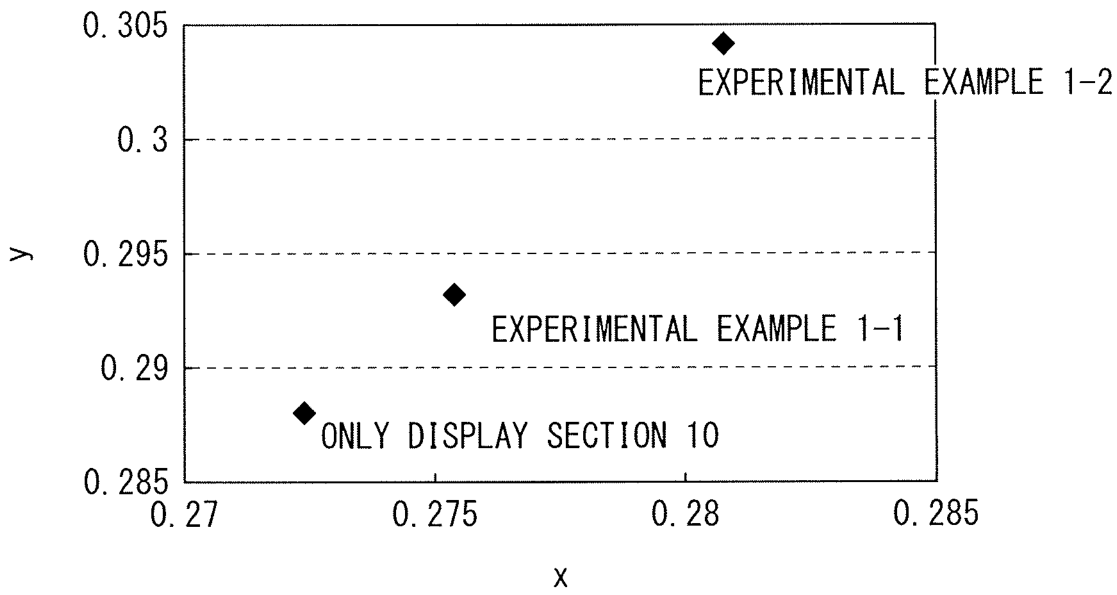
0. 305
0. 3
0. 295
0. 29
0. 285
y
0. 27
0. 275
0. 28
0. 285
x
EXPERIMENTAL EXAMPLE 1-2
EXPERIMENTAL EXAMPLE 1-1
ONLY DISPLAY SECTION 10

[ FIG. 12 ]

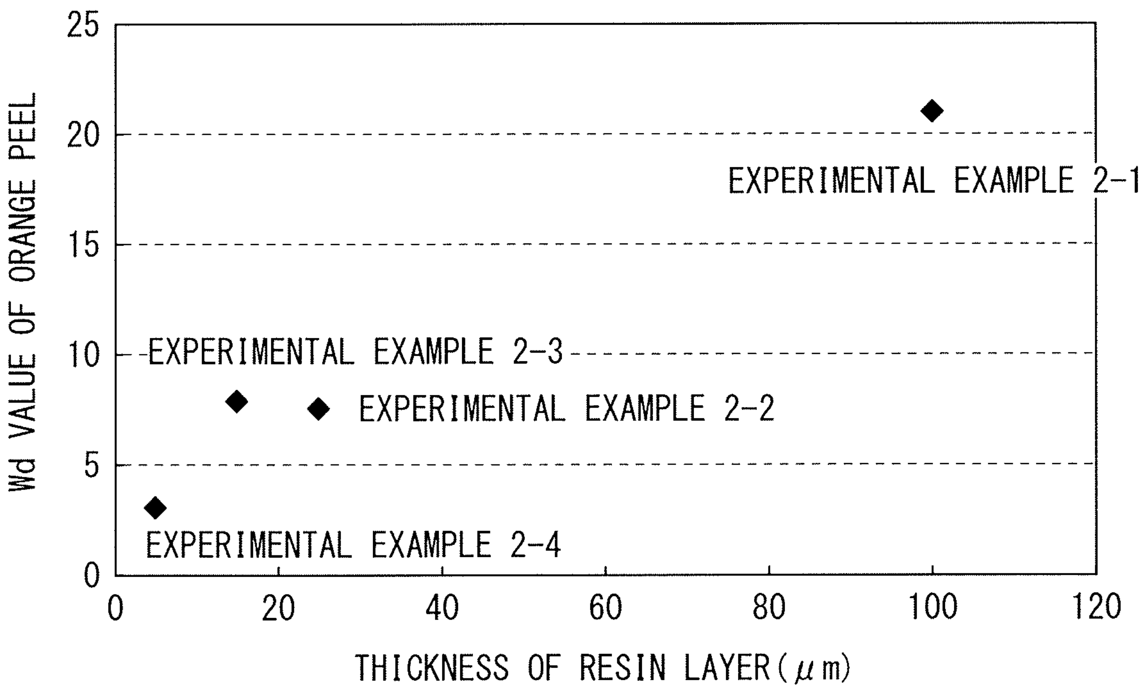
25
20
15
10
5
0
Wd VALUE OF ORANGE PEEL
0
20
40
60
80
100
120
THICKNESS OF RESIN LAYER (μm)
EXPERIMENTAL EXAMPLE 2-1
EXPERIMENTAL EXAMPLE 2-3
EXPERIMENTAL EXAMPLE 2-2
EXPERIMENTAL EXAMPLE 2-4

[ FIG. 13 ]

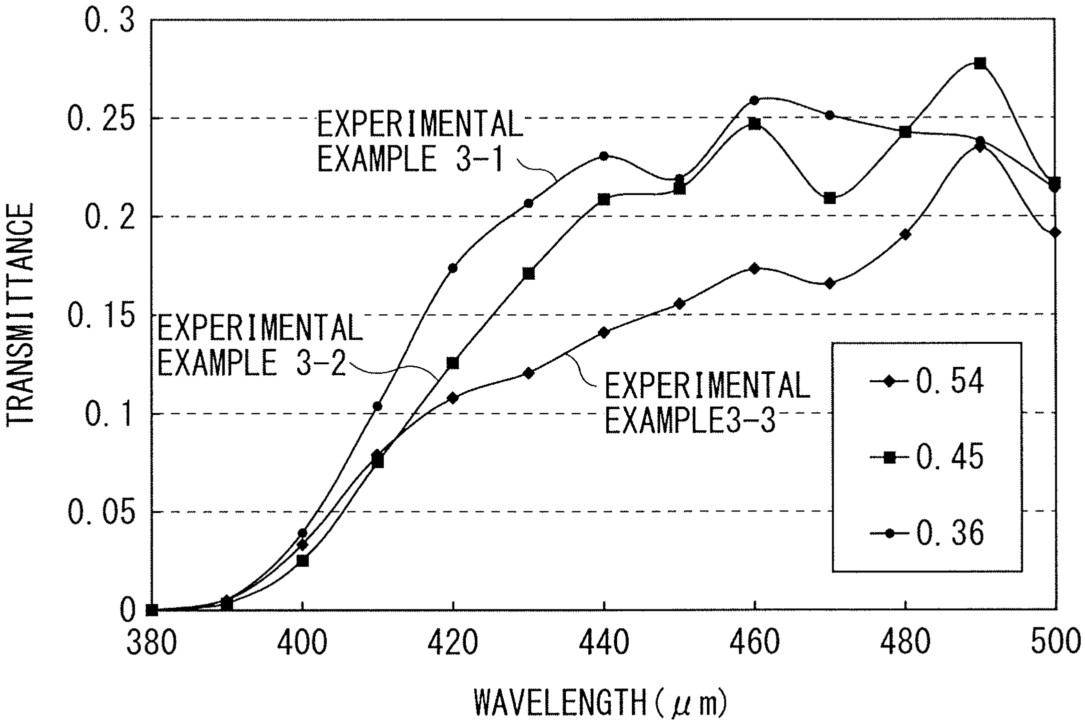

0.3
0.25
0.2
0.15
0.1
0.05
0
380
400
420
440
460
480
500
TRANSMITTANCE
WAVELENGTH (μm)
EXPERIMENTAL EXAMPLE 3-1
EXPERIMENTAL EXAMPLE 3-2
EXPERIMENTAL EXAMPLE3-3
0.54
0.45
0.36


[ FIG. 14 ]

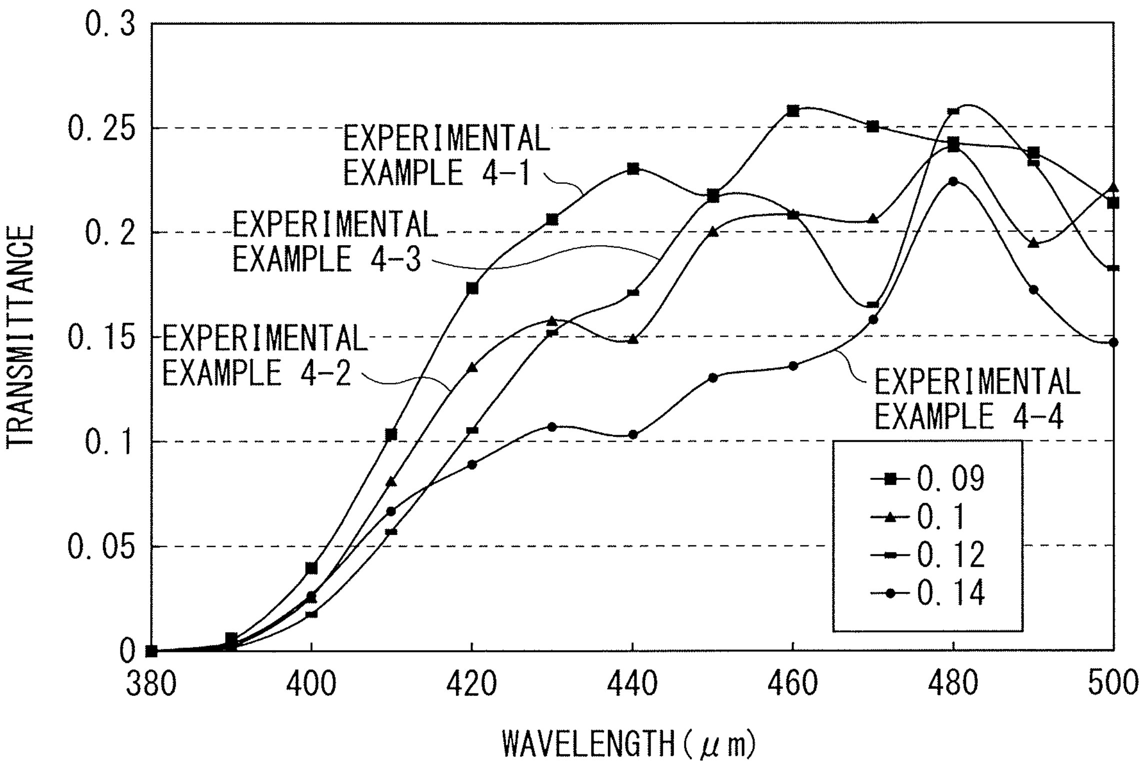

0.3
0.25
0.2
0.15
0.1
0.05
0
380
400
420
440
460
480
500
TRANSMITTANCE
WAVELENGTH (μm)
EXPERIMENTAL EXAMPLE 4-1
EXPERIMENTAL EXAMPLE 4-3
EXPERIMENTAL EXAMPLE 4-2
EXPERIMENTAL EXAMPLE 4-4
0.09
0.1
0.12
0.14

[ FIG. 15 ]

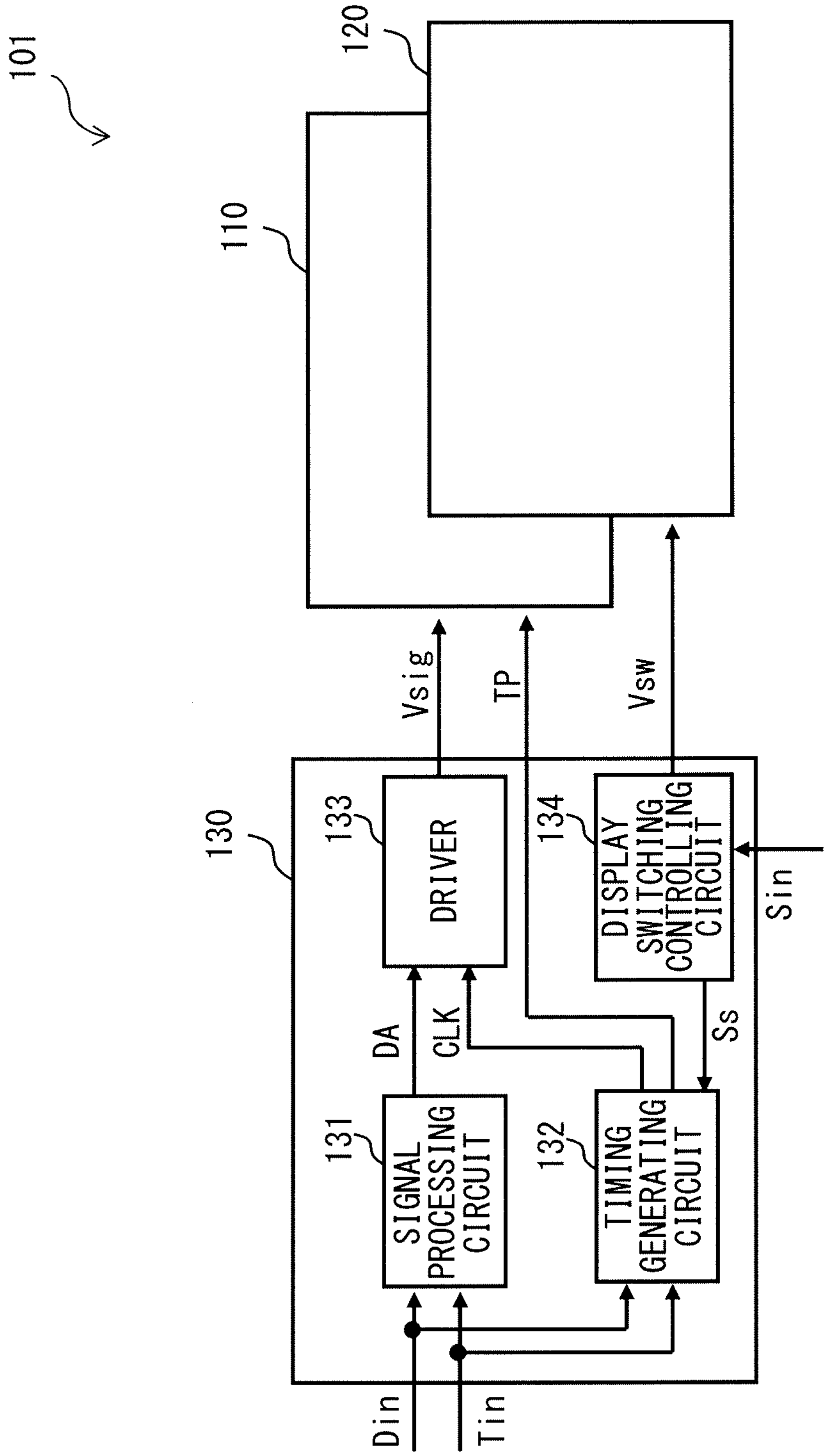
101
110
120
130
131
SIGNAL PROCESSING CIRCUIT
132
TIMING GENERATING CIRCUIT
133
DRIVER
134
DISPLAY SWITCHING CONTROLLING CIRCUIT
Vsig
TP
Vsw
DA
CLK
Ss
Din
Tin
Sin

[ FIG. 16 ]

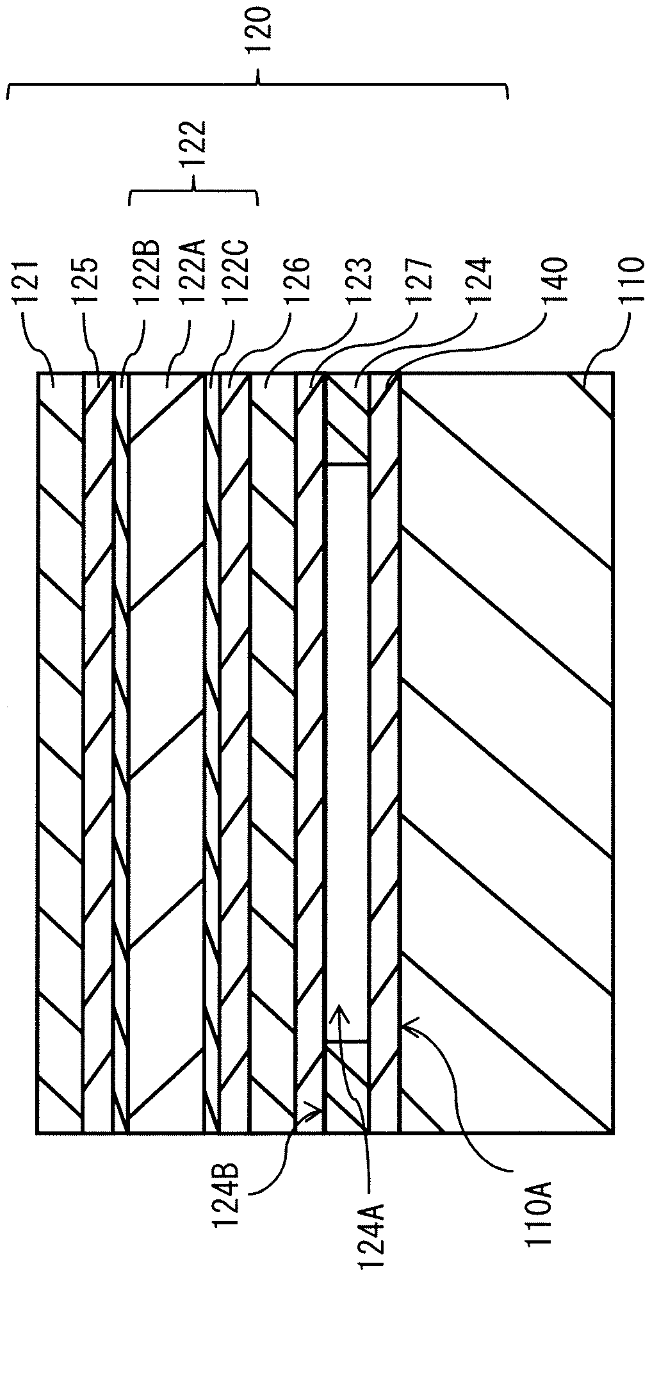
120
122
121
125
122B
122A
122C
126
123
127
124
140
110
124B
124A
110A

[ FIG. 17 ]

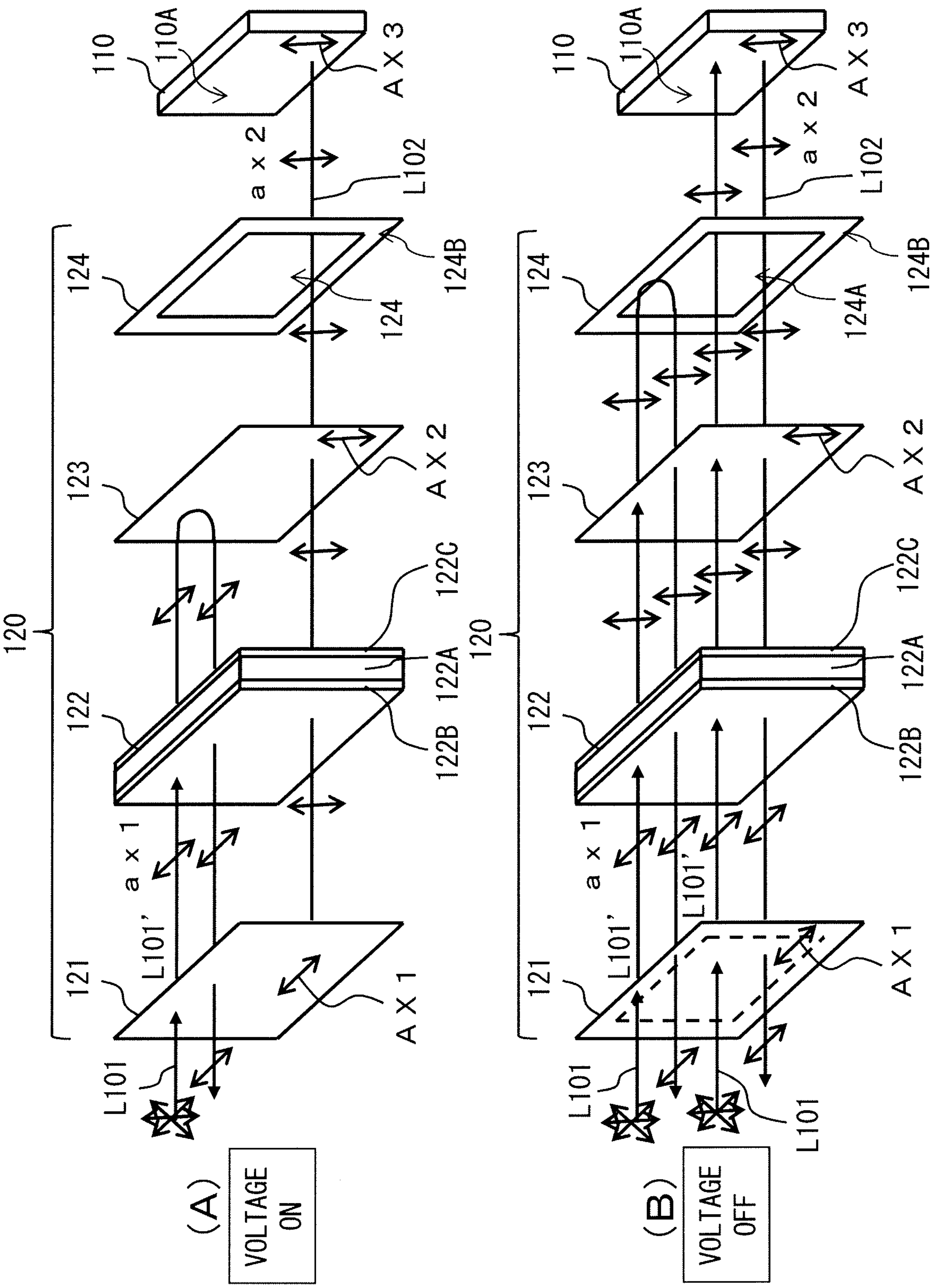
(A)
VOLTAGE ON
(B)
VOLTAGE OFF
L101
L101'
a x 1
121
122
122A
122B
122C
123
124
124A
124B
120
L102
a x 2
110
110A
A X 1
A X 2
A X 3

[ FIG. 18 ]

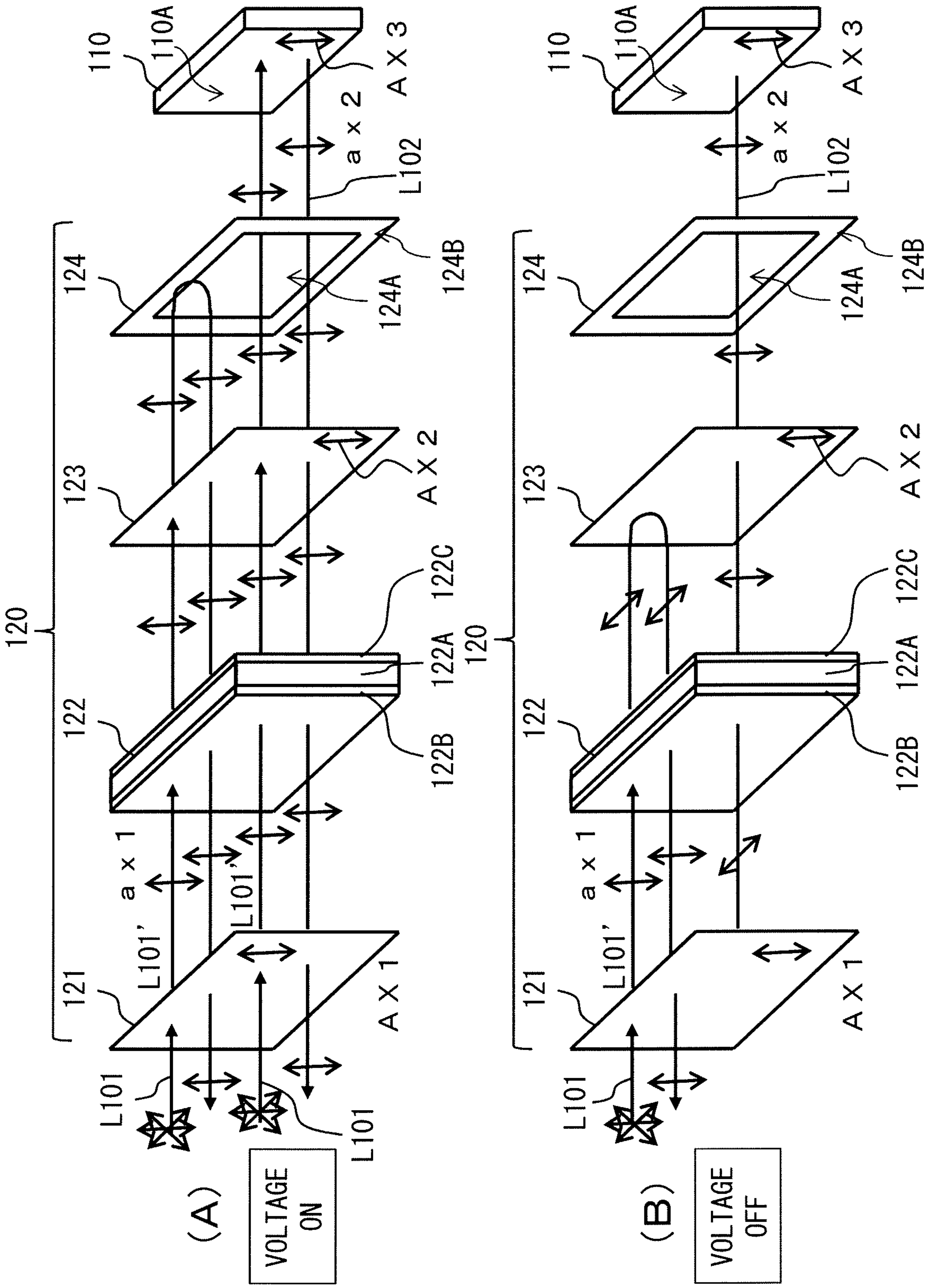
(A)
VOLTAGE ON
L101
L101'
a x 1
121
AX1
120
122
122A
122B
122C
123
AX2
124
124A
124B
L102
a x 2
110
110A
AX3
(B)
VOLTAGE OFF

[ FIG. 19 ]

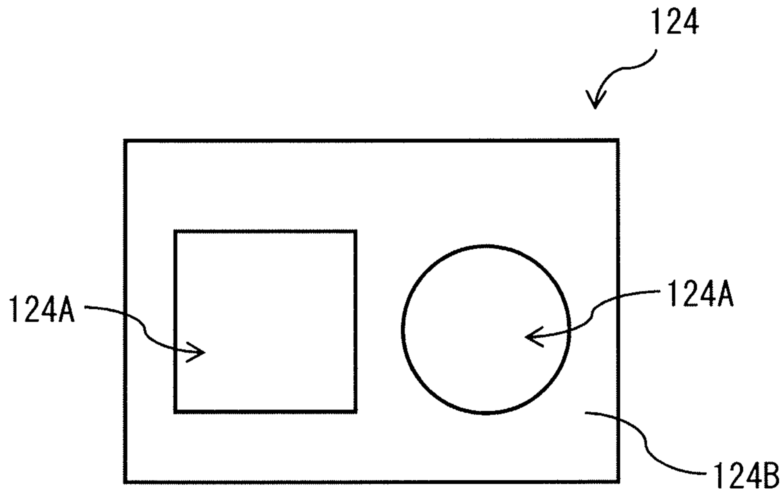


[ FIG. 20 ]

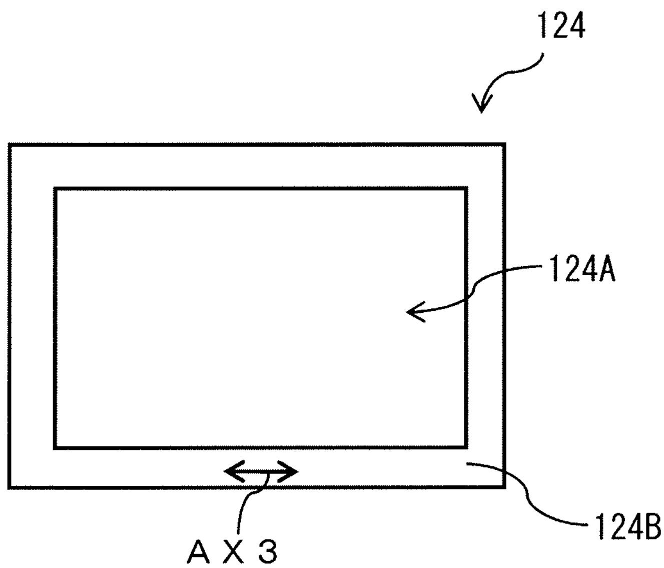

[ FIG. 21 ]

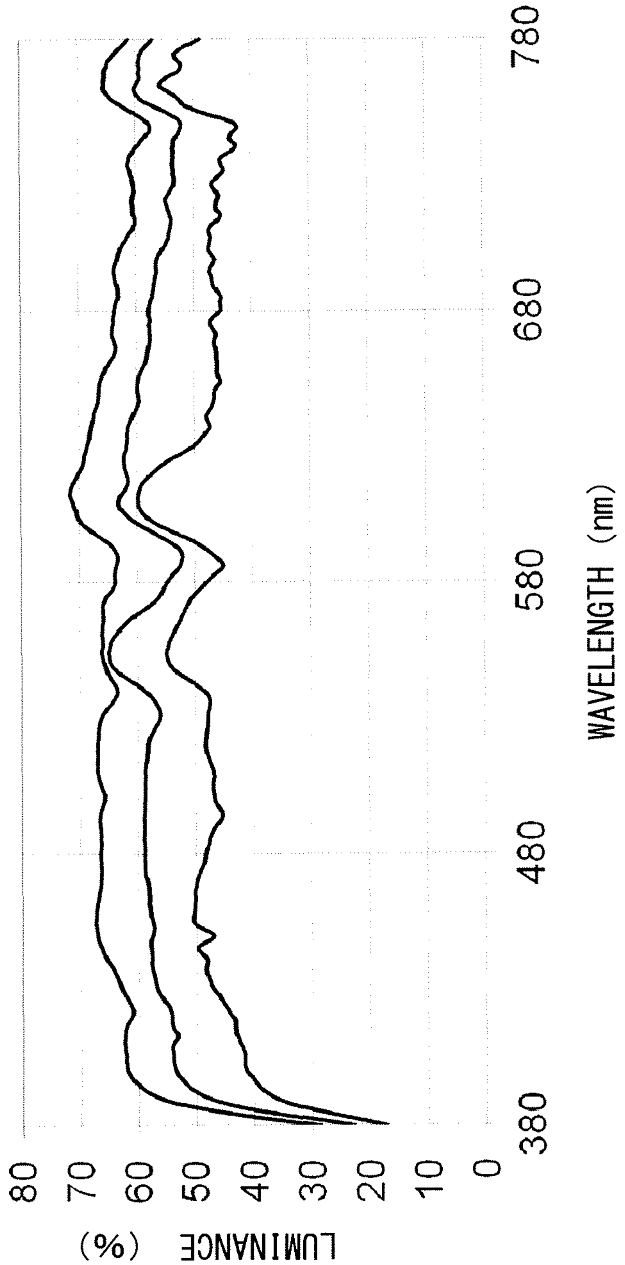
LUMINANCE (%)
80
70
60
50
40
30
20
10
0
380
480
580
680
780
WAVELENGTH (nm)

[ FIG. 22 ]

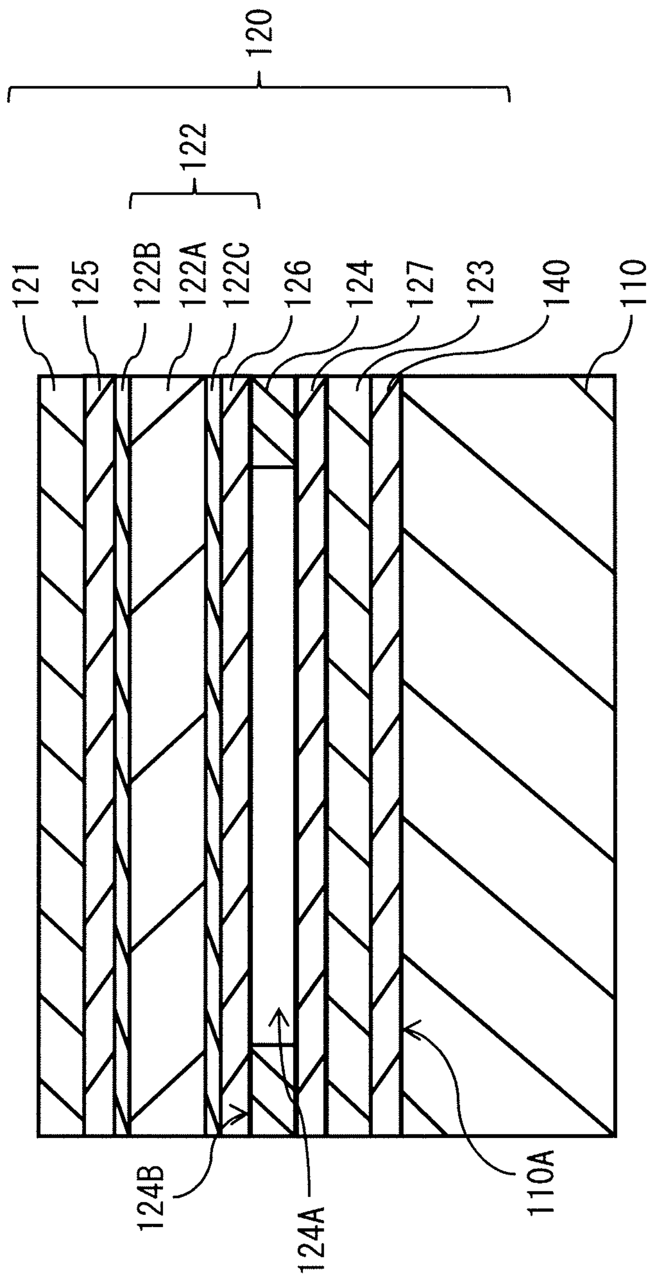
120
122
121
125
122B
122A
122C
126
124
127
123
140
110
124B
124A
110A

[ FIG.23 ]

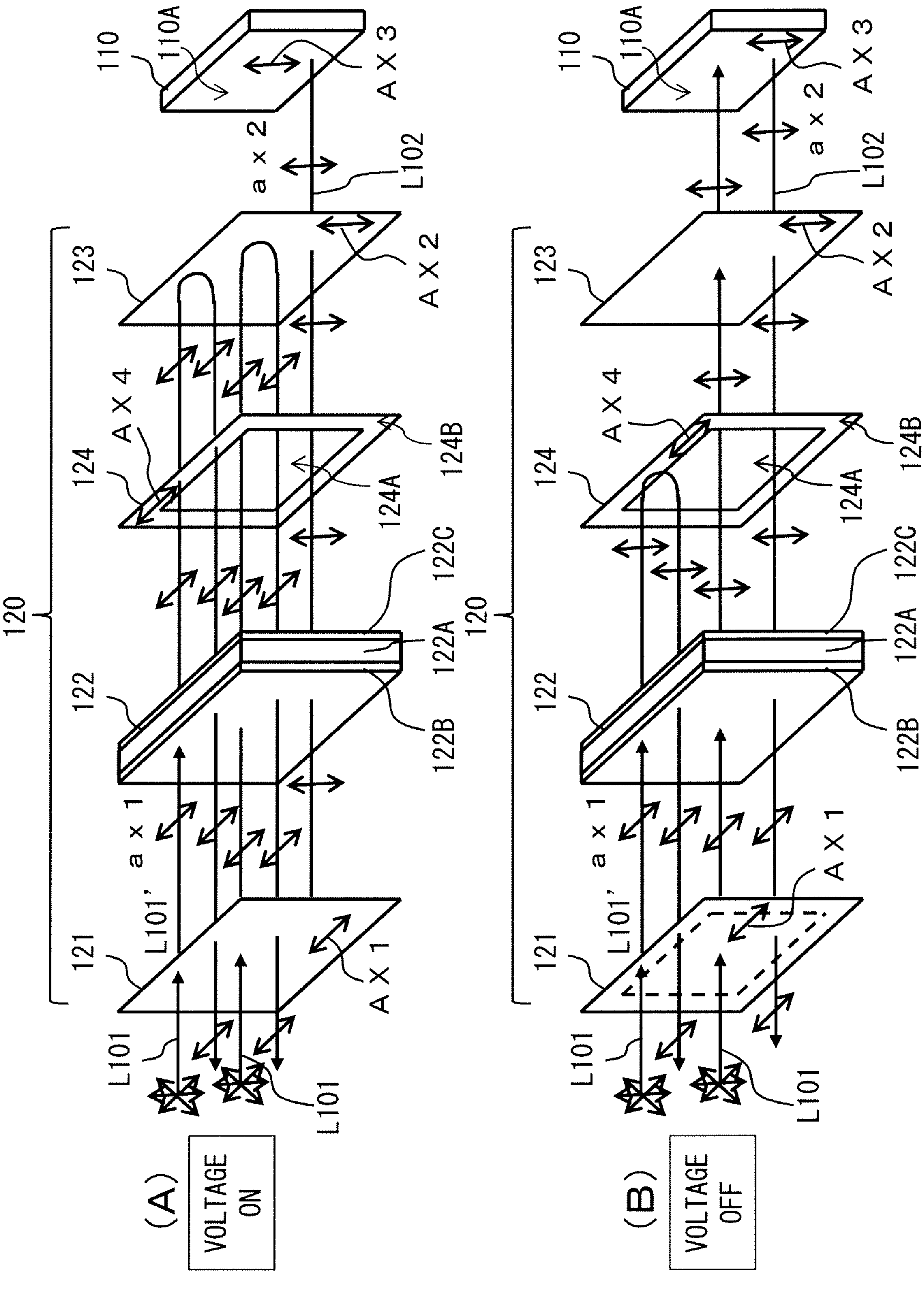

(A)
VOLTAGE ON
(B)
VOLTAGE OFF
110
110A
AX3
a×2
L102
120
121
122
122A
122B
122C
123
124
124A
124B
AX1
AX2
AX4
a×1
L101
L101'

[ FIG. 24 ]

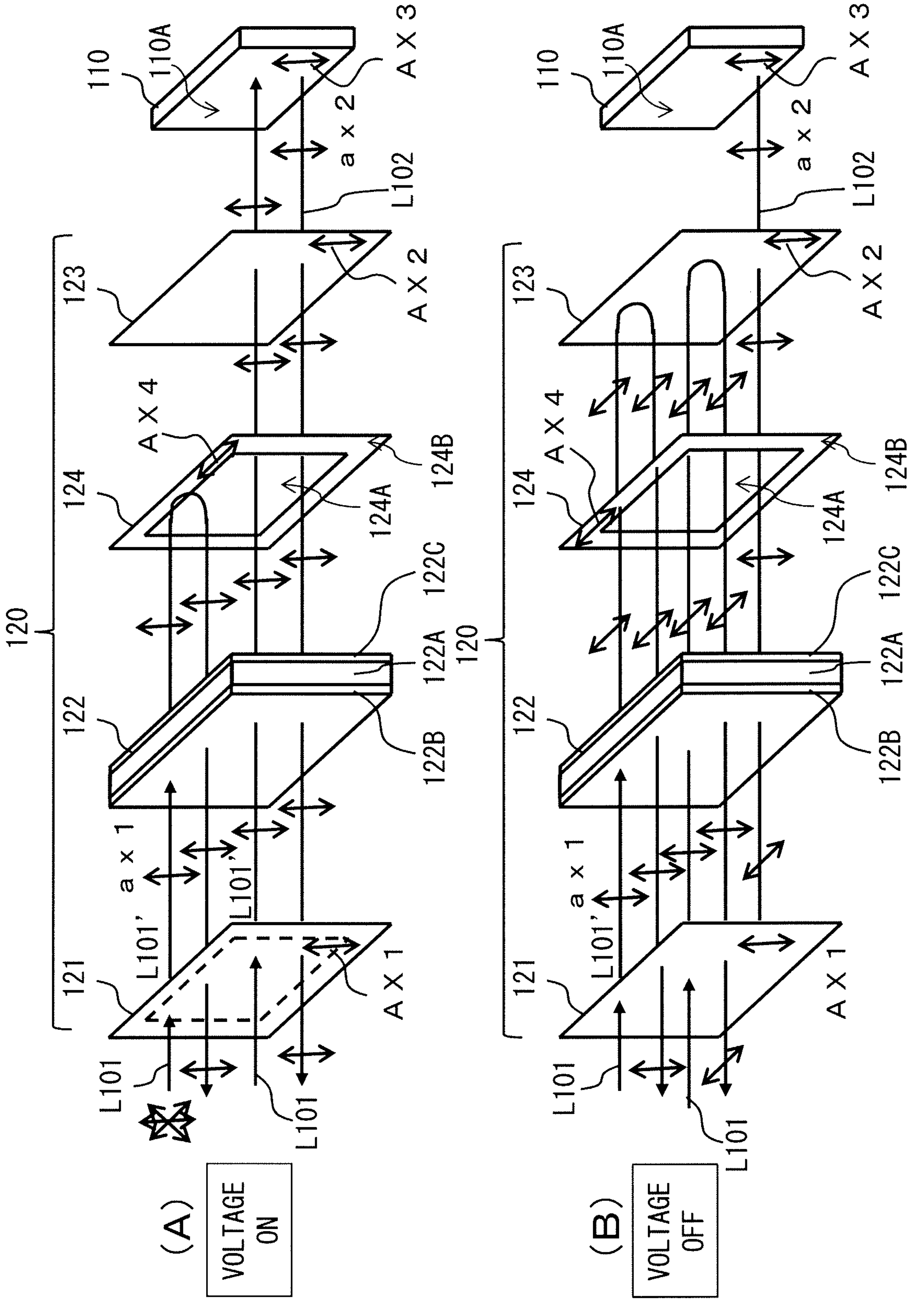
(A)
VOLTAGE ON
(B)
VOLTAGE OFF
110
110A
A X 3
a x 2
L102
123
A X 2
124
A X 4
124A
124B
120
122
122A
122B
122C
121
A X 1
a x 1
L101
L101'

[ FIG. 25 ]

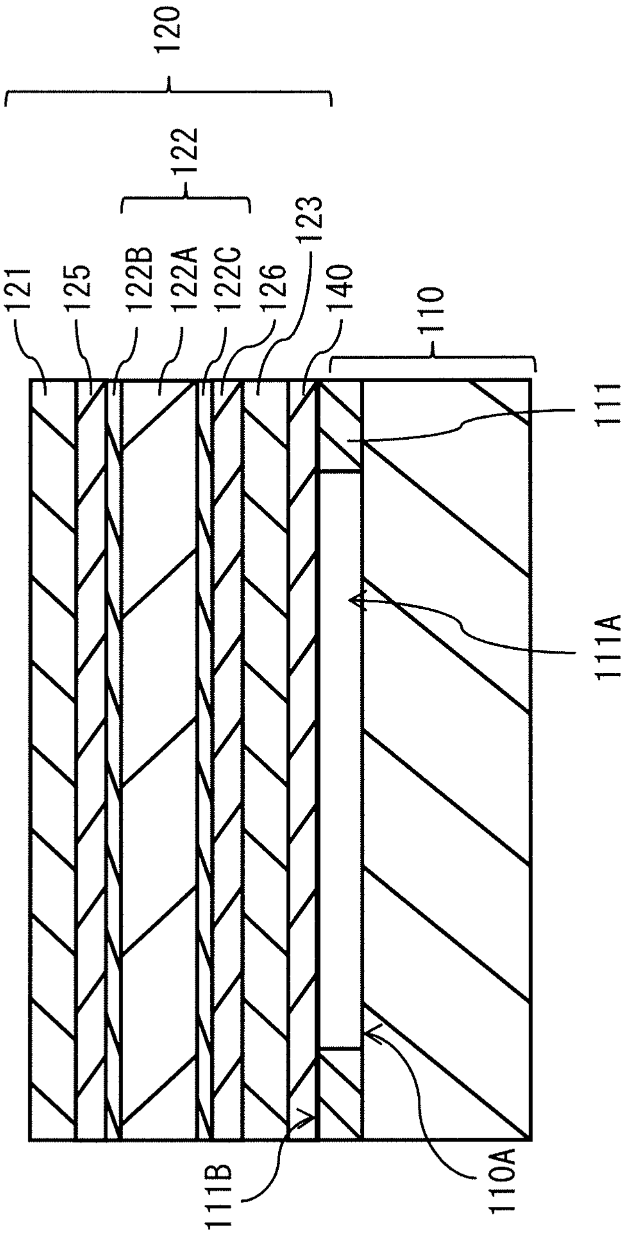
120
122
121
125
122B
122A
122C
126
123
140
110
111
111A
111B
110A

[ FIG. 26 ]

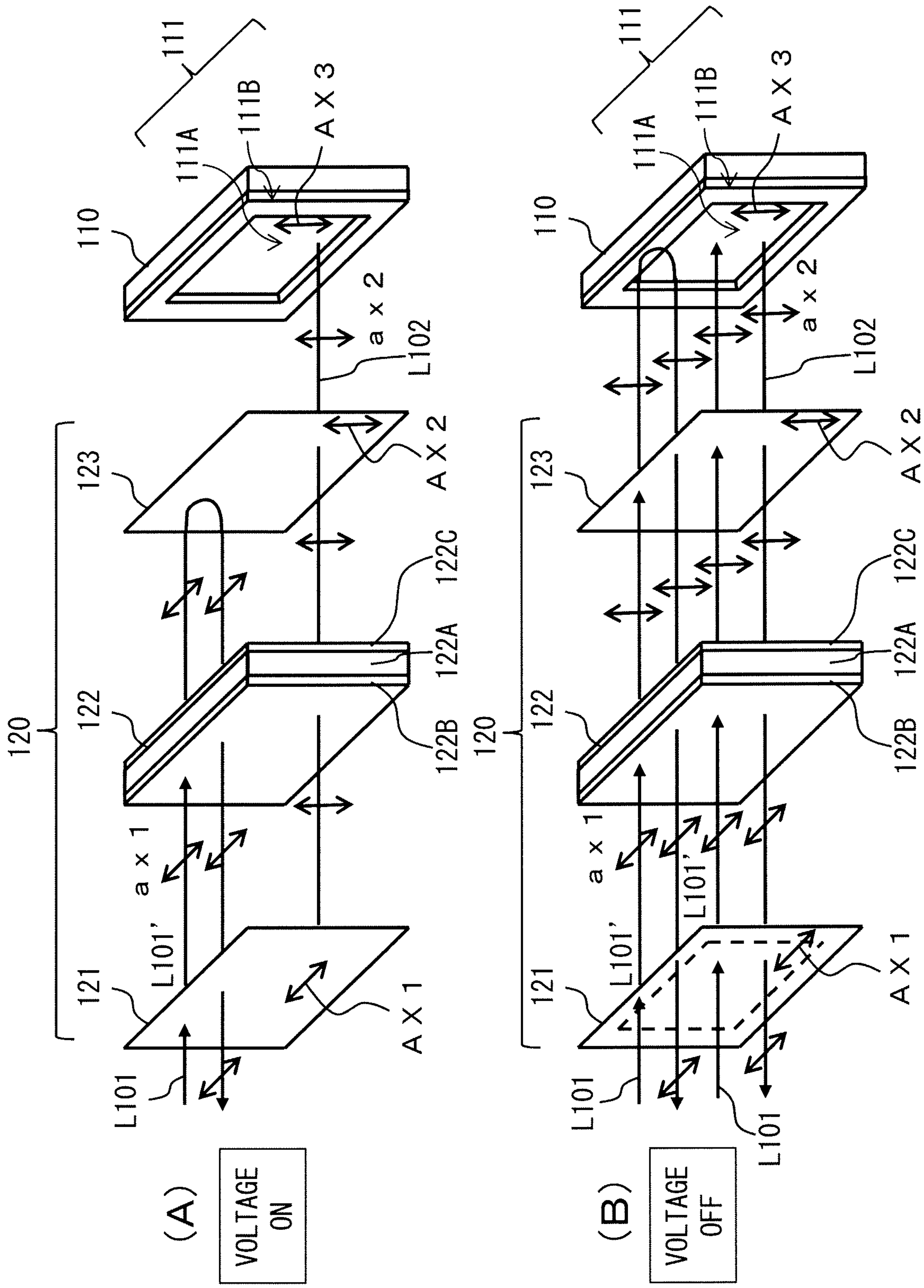
(A)
VOLTAGE ON
(B)
VOLTAGE OFF
120
121
122
123
110
111
111A
111B
122A
122B
122C
L101
L101'
L102
AX1
AX2
AX3
a x 1
a x 2

[ FIG. 27 ]

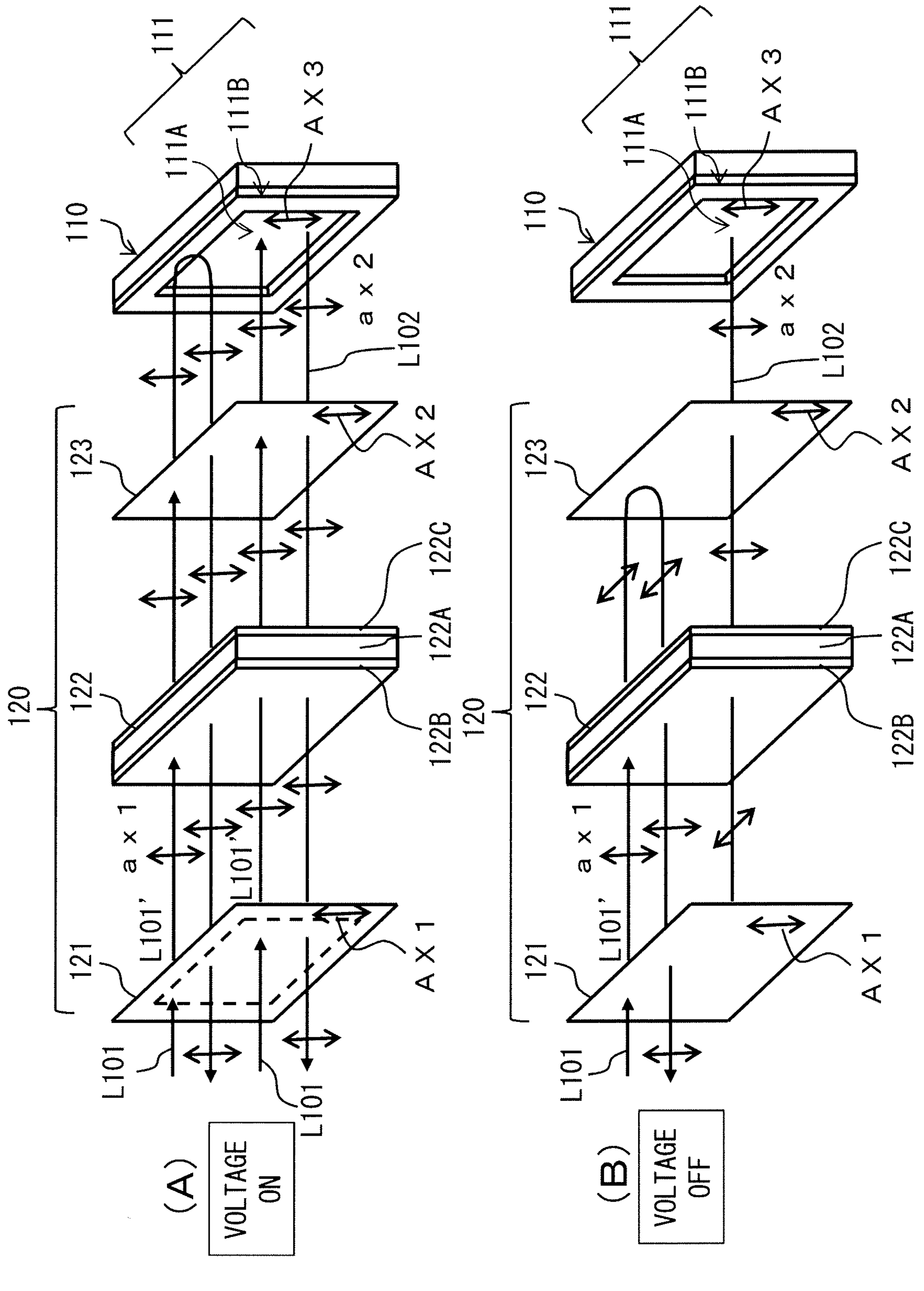
(A)
VOLTAGE ON
(B)
VOLTAGE OFF
110
111
111A
111B
AX3
a×2
L102
120
121
122
122A
122B
122C
123
AX2
a×1
L101
L101'
AX1

[ FIG. 28A ]

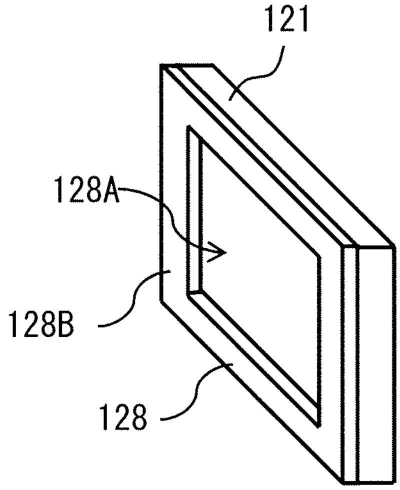


[ FIG. 28B ]

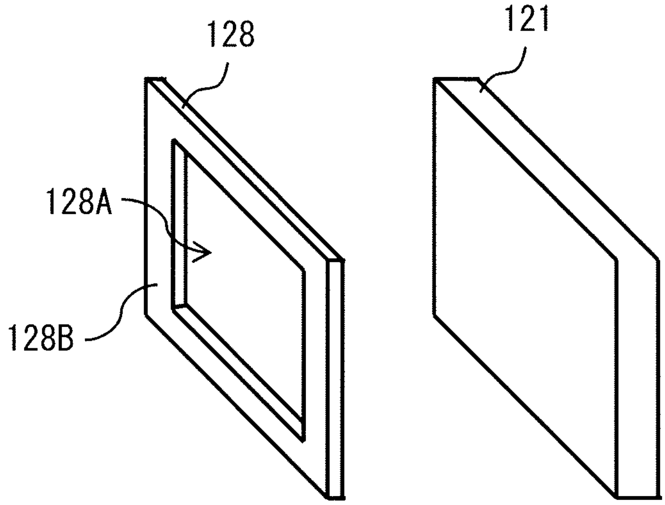

[ FIG. 29 ]

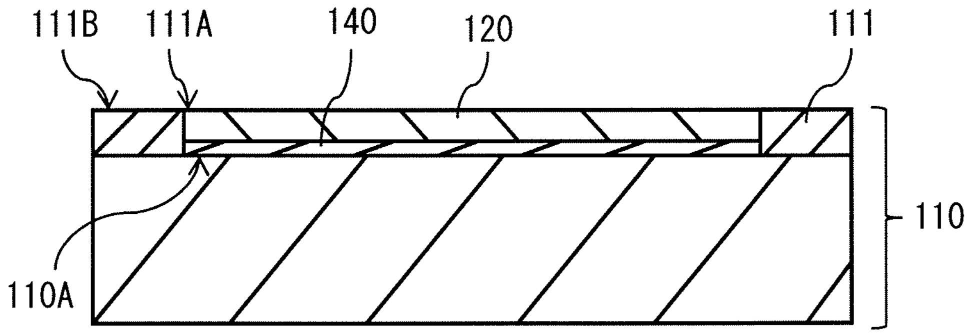

## INTERNATIONAL SEARCH REPORT

International application No. PCT/JP2015/085031

**A. CLASSIFICATION OF SUBJECT MATTER**

*G02F1/1347*(2006.01)i, *G02F1/1335*(2006.01)i, *G09F9/00*(2006.01)i

According to International Patent Classification (IPC) or to both national classification and IPC

**B. FIELDS SEARCHED**

Minimum documentation searched (classification system followed by classification symbols)

G02F1/1347, G02F1/1335, G09F9/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2002-365626 A (Seiko Epson Corp.), 18 December 2002 (18.12.2002), paragraphs [0007] to [0015], [0038] to [0049]; fig. 1, 12 (Family: none) | 11-12<br>13-20 |
| A | JP 2004-37943 A (Seiko Epson Corp.), 05 February 2004 (05.02.2004), entire text; fig. 1 to 9 (Family: none) | 1-20 |

[X] Further documents are listed in the continuation of Box C. [ ] See patent family annex.

* Special categories of cited documents:

- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 01 March 2016 (01.03.16) | 08 March 2016 (08.03.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2015/085031

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-281970 A (Toshiba Corp.), 15 October 1999 (15.10.1999), paragraphs [0024] to [0027], [0057] to [0067]; fig. 1 to 6 & US 6384884 B1 column 4, lines 31 to 58; column 8, line 32 to column 10, line 14; fig. 1 to 6 | 1-20 |

Form PCT/ISA/210 (continuation of second sheet) (January 2015)

**INTERNATIONAL SEARCH REPORT**

International application No.
PCT/JP2015/085031

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

INTERNATIONAL SEARCH REPORT

International application No. PCT/JP2015/085031

Continuation of Box No.III of continuation of first sheet(2)

The number of inventions included in claims 1-20 are two as indicated below.

(Invention 1) claims 1-10

Claims 1-10 have a special technical feature that the hue b* value of a second absorption type polarization member equipped in a display switching unit is less than or equal to the hue b* value of a first absorption type polarization member equipped in a display unit, and therefore are defined as Invention 1.

(Invention 2) claims 11-20

Claims 11-20 have a technical feature common to claim 1 defined as Invention 1 in that the device is provided with a reflection type polarization member, a polarization control member, and a polarization member disposed on the surface side opposite to the surface of the polarization control member on which the reflection type polarization member is disposed.

However, the above-said technical feature cannot be considered to be a special technical feature, since the technical feature does not make a contribution over the prior art in the light of the contents disclosed in the document: JP 2004-37943 A (Seiko Epson Corp.), 05 February 2004 (05.02.2004), entire text; fig. 1 to 9 (Family: none).

Further, there is no other same or corresponding special technical feature between these inventions.

In addition, claims 11-20 are not dependent on claim 1.

Further, claims 11-20 have no relationship such that these claims are substantially same as or equivalent to any claim classified into Invention 1.

Consequently, claims 11-20 cannot be classified into Invention 1.

Claims 11-20 have a special technical feature that a first reflection layer comprising a reflection polarization layer and a second reflection layer or a mirror surface having an opening are disposed on the surface side opposite to the surface of a polarization control layer on which a polarization layer is disposed, and therefore are defined as Invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001318374 A
- JP 2004037943 A
- WO 9527919 A
- JP 2011048310 A
- JP 2015037733 A
- JP 2015057106 A